(19) Europäisches Patentamt
European Patent Office
Office européen des brevets

(11) EP 1 975 687 A1

(12) EUROPEAN PATENT APPLICATION

(43) Date of publication:
**01.10.2008 Bulletin 2008/40**

(51) Int Cl.:
***G02F 1/1337*** *(2006.01)*

(21) Application number: **07105243.5**

(22) Date of filing: **29.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Rolic AG**
**6301 Zug (CH)**

(72) Inventors:
- **Ibn-Elhaj, Mohammed**
  **4123 Allschwil (CH)**
- **Muller, Olivier**
  **68610 Lautenbach (FR)**
- **Marck, Guy**
  **68440 Schlierbach (FR)**
- **Studer, Peggy**
  **68330 Huningue (FR)**
- **Delbaere, Fabien**
  **68200 Mulhouse (FR)**
- **Martz, Julien**
  **68100 Mulhouse (FR)**

(74) Representative: **Veenstra, Eva et al**
**Rolic Technologies Ltd.**
**Patent Department**
**Gewerbestrasse 18**
**4123 Allschwil (CH)**

# (54) Method of uniform and defect free liquid crystal aligning layers

(57) The invention relates to a method for the manufacturing of uniform and defect free liquid crystal aligning layers which comprises applying onto a substrate a composition having a viscosity in the range of 1 to 14 mPas, which comprises at least one liquid crystal photoalignment material and at least one solvent; or applying onto a substrate a composition comprising at least one liquid crystal photoalignment material and at least one surfactant, wherein the latter does not have any negative impact on the aligning properties. In addition, the present invention relates to the above-cited compositions and aligning layers, and to the use of these aligning layers for liquid crystal devices and optical or electro-optical components.

EP 1 975 687 A1

## Description

The invention relates to a method for the manufacturing of uniform and defect free liquid crystal aligning layers which comprises applying onto a substrate a composition having a viscosity in the range of 1 to 14 mPas, which comprises at least one liquid crystal photoalignment material and at least one solvent; or applying onto a substrate a composition comprising at least one liquid crystal photoalignment material and at least one surfactant, wherein the latter does not have any negative impact on the aligning properties. In addition, the present invention relates to the above-cited compositions and aligning layers, and to the use of these aligning layers for liquid crystal devices and optical or electro-optical components.

For all applications of alignment or photo-alignment materials, the fabrication of a liquid crystal aligning layer is required, which gives an uniform and defect free coating or printing film by using various printing or coating techniques.

Alignment layers generally have the function to provide for a well-defined orientation of liquid crystal (LC) molecules in contact with the aligning surface. Such a means to adjust the alignment is required for most applications of LCs to control and design the anisotropic properties which are to be exploited.

Rubbed polyimide films still are mainstream alignment layers for common LC displays. Polyimide is coated as a thin alignment film (with a thickness of 100 nanometres or less) and dried. Then, the surface of the thin film is mechanically rubbed with a specifically manufactured cloth.

Rubbing is, however, not appropriate for alignment over large areas. Furthermore, the many variables associated with the process are difficult to control. Also, an alignment film can be contaminated by fine particles or fibres produced by the rubbing process, and thin film transistors used in the display can be damaged by static electricity produced by rubbing. These problems can result in low production yield and/or quality.

The LPP (linear photo-polymerization) photo-alignment method, e.g. described in US 5,389,698, being a process free of mechanical contact remedies the above problems and brings along additional versatility.

In the photo-alignment method, an alignment layer is given an alignment direction by irradiating a substrate coated with a photo-alignment material with aligning light, especially linearly polarized UV light (LPUV). The photo-alignment layer e.g. comprises a polyvinyl cinnamate-based (PVCN) polymer, and as linearly polarized UV light is irradiated, an anisotropic photo-reaction is initiated. The modified surface properties of the thin film induce the capability of the alignment layer to transfer a preferred alignment to adjacent liquid crystal molecules.

On the one hand, LPP photo-alignment can be applied for the orientation of LC monomers, e.g. in switchable LC cells used in LC displays (LCDs), like e.g. twisted nematic LCDs, vertically aligned LCDs or in-plane switching LCDs. On the other hand it can be used to align polymeric or polymerizable LCs. The latter method allows manufacturing of optical films useful e.g. as retardation films, compensation films, reflectively or absorptively polarizing films.

As a basic advantage the LPP photo-alignment process is contact free and therefore not restricted to rigid and flat substrates, but can also be applied to flexible and/or curved surfaces. Furthermore, the alignment direction can be set to any angle just by rotation of the LPUV polarization plane. Consequently, photo-alignment is a preferable solution for large volume roll-to-roll processing of flexible film substrates. Contrary to mechanical brushing, photo-alignment does not scratch the surface of the substrate. Therefore, multiple anisotropic layers with individual optical axis orientation can easily be stacked on top of each other without damaging the subjacent layers.

Both LPP and LC materials can be designed such that the optical axis within the LCP layer is tilted at the interface between LPP and LC according to the requirements of the respective application.

Furthermore, it is easily possible by means of mask exposure to generate orientation patterns with a resolution on the micron scale. This possibility further broadens the range of applicability thus including e.g. multi-domain LCDs, 3-D LCDs, patterned interference colour filters and micro-optics.

In general photoalignment materials are applied by two main techniques the coating and printing.
Coating methods are for example spin coating, air doctor coating, blade coating, knife coating, reverse-roll coating, transfer roll coating, gravure roll coating, kiss roll coating, cast coating, spray coating, slot-orifice coating, calendar coating, electrodepositing coating, dip coating or die coating.
Printing methods are for example relief printing such as flexographic printing, intaglio printing such as direct gravure printing or offset gravure printing, lithographic printing such as offset printing, or stencil printing such as screen printing.

In general, there are five major printing processes which are distinguished by the method of image transfer and by the general type of image carrier employed. Depending upon the process, the printed image is transferred to the substrate either directly or indirectly. In direct printing the image is transferred directly from the image carrier to the substrate, examples of direct printing are gravure, flexography, screen printing and letterpress printing processes. In indirect, or offset, printing, the image is first transferred from the image carrier to the blanket cylinder and then to the substrate. Lithography, currently the dominant printing technology, is an indirect (offset) process.
Image carriers (or plates) can generally be classified as one of four types: relief, planographic, intaglio, or screen. In relief printing, the image or printing area is raised above the no image areas. Of the five major printing processes, those relying on relief printing are letterpress and flexography. In planographic printing, the image and no image areas are on

the same plane. The image and no image areas are defined by differing physiochemical properties. Lithography is a planographic process. In the intaglio process, the nonprinting area is at a common surface level with the substrate while the printing area, consisting of minute etched or engraved wells of differing depth and/or size, is recessed. Gravure is an intaglio process. In the screen process (also known as porous printing), the image is transferred to the substrate by pushing ink through a porous mesh which carries the pictorial or typographic image.

Ink-jet printing represents a further established and strongly growing industrial image deposition process which is also called printing despite its quite different character (e.g. its lack of an image carrier) in comparison to the above described conventional printing processes. Inkjet printers may operate either in continuous or drop-on-demand (DOD) mode. In continuous-mode, the fluid is pumped through a nozzle to form a liquid jet. Uniformly spaced and sized droplets are obtained by imposing a periodic perturbation, leading to surface-tension driven jet break-up. This requires the fluid to have certain conductivity. Drop-on-demand is the method of choice for many industrial applications such as electronics and displays. This is mainly because of its smaller drop size, higher accuracy and no need to use dopants to make the fluid more conductive. An acoustic pulse ejects fluid droplets from a reservoir through a nozzle. The pulse can be generated either thermally (Bubble-jet) or piezo-electrically (piezojet). Piezo-electric DOD is generally more suited to a variety of solvents. The most critical part of inkjet printing technology is probably the fluid and its physical properties. The fluid parameters should be on one hand optimised to get reliable droplet formation during printing with specific printer (such as viscosity and surface tension). The fluid should be also optimised in order to get good wetting properties, with specific substrates, and homogeneous films.

Flexographic technology is successfully used to apply alignment layers in the LCD industry. According to the flexographic technology, the orientation layer can be directly printed in a predetermined pattern without requiring any etching process. Generally described, the flexographic process can be a substantially continuous process which uses a series of rollers to transfer a quantity of alignment material as a predetermined pattern onto the desired surface of substrate (typically glass). Stated differently, the flexographic apparatus can be configured to automatically convey a plurality of glass panels sequentially through the process. The apparatus employs a special resin plate with a series of holding cells configured in a predetermined pattern to hold a quantity of alignment material processing solution. The resin plate is rotated and subsequently brought into direct contact with the glass panel surface to release the solution and transfer the predetermined pattern to form the orientation layer onto the surface. The glass panel is then heated to pre-cure the orientation layer.

In more detail the fabrication of an orientation layer by means of flexographic printing is described in the following. The dispersed alignment material solution is dropped and maintained on a so-called anilox roll. The anilox roll is preferably plated with chrome, or chrome and nickel (the alignment material solution contacting surface). Cells having a pyramid shape are formed in the anilox roll to a depth of approximately 20 μm so that the dispersed alignment material solution can be retained in the cells.

A doctor roll is rotated together with the anilox roll to help assure that the alignment material solution is evenly dispersed on the surface of the anilox roll. A resin plate is attached to an underlying plate typically comprising copper. In a preferred embodiment, the resin plate is formed from a polybutadiene resin, e.g., an Asahi Kasei photosensitive resin ("APR"). For ease of description, the resin plate will be described subsequently herein as an "APR plate".

The APR plate includes an exterior surface of predetermined patterns. The patterns include a plurality of cells as intaglios so that the alignment material solution can be accommodated in the cells. The depth of the cells is preferably in the range of approximately 15 to 20 μm. Thus, in contrast to the above general description the flexographic printers for alignment layer application use an intaglio instead of a relief process.

The alignment material solution is dispensed onto the anilox roll. The anilox roll and the doctor roll rotate and contact on an outer circumference portion. The contact pressure provided by the doctor roll helps the alignment material solution in the anilox roll (i.e., in the cells) to be uniformly distributed and to bring a certain quantity of the solution to the surface of the anilox roll. The APR plate then contacts the anilox roll and the alignment material solution is supplied or delivered to the APR plate. Typically, the amount of the alignment material solution transferred to the APR plate is determined by the contact force that the doctor roll exerts against the anilox roll (or the reverse). The alignment material solution is then held in the APR plate cells.

The LCD panel or glass is fixed to the print table. The table advances and the glass is moved forward at the same time that the copper plate holding the APR plate rotates.

The APR plate thus directly contacts the glass substrate and the alignment material solution is applied to the glass from the cells of the patterns in the APR plate. As a result, an orientation layer is formed on the glass substrate.

There is a constant need for photo-alignment materials allowing good coatability or printability for the fabrication of thin liquid crystal aligning layers which fulfil the requirement of uniformed defect free films.

In the present invention it was found that uniform and defect free films are accessible by using compositions with low viscosity comprising a liquid crystal photoalignment material and a solvent; or by compositions comprising a liquid crystal photoalignment material and a surfactant.

Contrary to all expectations these surfactant containing compositions provide very good film homogeneity of

photo-alignment materials without destroying alignment quality of the pure photo-alignment materials.

This effect of surfactants was not forseeable, since it was known from the prior art, such as for example described in Proceedings of the IEEE, vol. 61, no. 7, July 1973, *surface-produced alignment of liquid crystals,* pages 823 to 828: "A liquid crystal in contact with a surfactant-coated substrate will see essentially the surfactant-created surface and thus may expected to align differently than it saw the bare substrate."

Further, it is described in WO 97/38349 A1 on page 3, that a homeotropic alignment can be obtained by depositing a surfactant, for example a quaternary ammonium salt onto the surface from a solution in a suitable solvent. A disadvantage of this treatment is that the resistivity of the liquid crystal device may be lowered by the surfactant, and the resulting alignment may also show poor stability.

In addition, it was found in the present invention that further physical properties such as blocking and scratch-resistance can be improved with the novel photoalignment compositions without destroying the alignment quality.

Accordingly, the present invention relates to a method for the manufacturing of uniform and defect free liquid crystal aligning layers which comprises applying onto a substrate a composition having a viscosity in the range of 1 to 14 mPas, preferably in the range of 2 to 9 mPas and more preferably in the range from 2 to 5 mPas, which comprises at least one liquid crystal photoalignment material and at least one solvent, on a substrate; or applying onto a substrate a composition comprising at least one liquid crystal photoalignment material and at least one surfactant, wherein the latter does not have any negative impact on the aligning properties.

Liquid crystal photoalignment materials are organic polymers comprising photoreactive groups.

In the context of the invention photoreactive groups are those, which are able to undergo photoreaction after radiation with aligning light.

In the context of the present invention aligning light is light of wavelengths, which can initiate photoalignment. Preferably, the wavelengths are in the UV-A, UVB and/or UV/C-range, or in the visible range. It depends on the photoalignment compound, which wavelengths are appropriate. Preferably, the photo-reactive groups are sensitive to visible and/or UV light.

More preferably, aligning light is at least partially linearly polarized, elliptically polarized, such as for example circularly polarized, or non-polarized, most preferably circiulary polarized, or non-polarized light exposed obliquely, or at least partially linearly polarized light. Especially, most preferred aligning light denotes substantially polarised light, especially linearly polarised light; or aligning light denotes non-polarised light, which is applied by an oblique irradiation.

Preferably the present invention relates to a method, wherein the photoalignment material of the composition comprises a photoreactive group, which is preferably a dimerizable, isomerizable, polymerizable and/or cross-linkable group;

more preferably the photoreactive group is

a cinnamate-, coumarine-, quinoline-, azo-, stilbene-, cyanostilbene-, chalcone-, diphenylacetylene, benzylidenephtalimidine, benzylideneacetophenone, phenylenediacryloyl, stilbazole and/or azo-group;

most preferred are cinnamate-, coumarine-, quinoline-, cyanostilbene-, and/or chalcone-groups;

especially most preferred are cinnamate- and cyanostilbene groups.

More preferably the present invention relates to a method, wherein the photoalignment material of the composition comprises at least one at least one surfactant and at least one photoalignment material known in the art having a photoreactive group, which is a cinnamate-, coumarine-, quinoline-, azo-, stilbene- and/or cyanostilbene-group, and which is herewith incorporated by reference:

photoalignment materials as described in US Re 36,625, EP 0 763 552 B1(GB), US 5,965,761, US 6,277,502 B1, US 6,632,909 B2, WO 00/59966, WO 01/07495, WO 01/53384 A1, WO 2006/039824 A1, PCT/CH Application 2006/000713, filed on December 19, 2006.

Preferred are those of

- US Re 36,625, claims 1-8, more preferred are those enumerated in examples 1-6 in col. 7, line 58 - col. 33, line 8;
- EP 0 763 552 B1, claims 1-21, more preferred are those enumerated in examples 1-9 in page 23, line 30 - page 55, line 6;
- US 5,965,761, claims 1-7, more preferred are those enumerated in examples 1-6 in col. 9, line 9-col. 17, line 9;
- US 6,277,502 B1, claims 1-4, more preferred are those enumerated in examples 1-5 in col. 8, line 55- col. 16, line 37;
- US 6,632,909 B2, claims 1-6, more preferred are those enumerated in examples 1-7 in col. 9, line 50 - col. 89, line 24;
- WO 00/59966, claims 1-28, more preferred are those enumerated in examples 1-4 in page 36, line 15 - page 51, line 22;
- WO 01/07495, claims 1-13, more preferred are those enumerated in examples 1-9 in page 29, line 1 - page 6, line 3;
- WO 01/53384, claims 1-24, more preferred are those enumerated in examples 1-6 in page 29, line 10 - page 35, line 13;
- WO 2006/039824, claims 1-24, more preferred are those enumerated in examples 1-18 in page 35, line 2 - page 61, line 15;

- further preferred are those of PCT/CH Application 2006/000713, filed on December 19, 2006, wherein the photoalignment material is a polymer comprising diamine (I) and tetracarboxylic acid anhydride

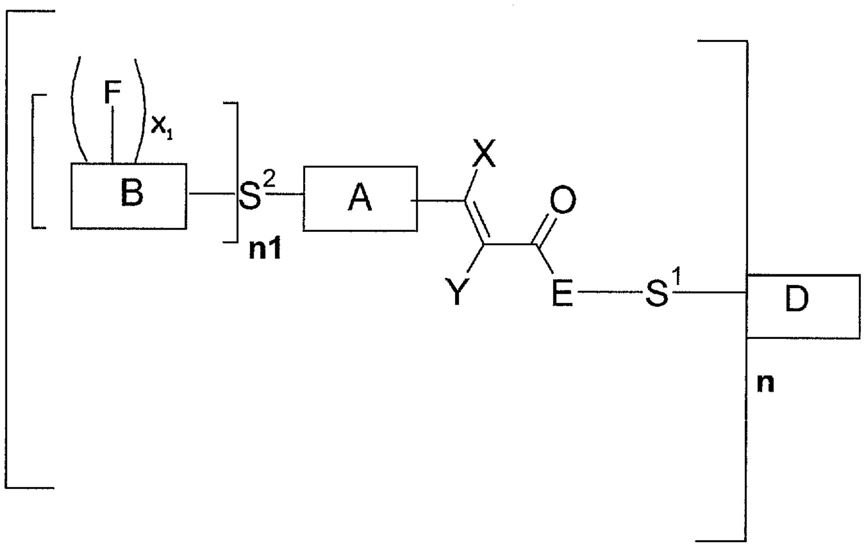

(I)

wherein,

A represents an unsubstituted or substituted carbocyclic or heterocyclic aromatic group selected from a monocyclic ring of five or six atoms, two adjacent monocyclic rings of five or six atoms, a bicyclic ring system of eight, nine or ten atoms, or a tricyclic ring system of thirteen or fourteen atoms;

and
wherein the following compound residue of formula (I), the compound residue (Ia)

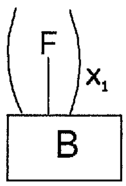
(Ia)

represents a straight-chain or branched $C_1$-$C_{16}$fluoralkyl group, wherein

F is fluorine, and
$x_1$ is an integer from 1 to 15, preferably an integer from 1 to 10; more preferably 1, 2, 3, 4, 5, 6, 7, 8 or 9 and most preferred 3, 4, 5 or 7;
B represents a straight-chain or branched $C_1$-$C_{16}$alkyl group, which is in addition to its fluorine substituent (s) unsubstituted or substituted by di-($C_1$-$C_{16}$alkyl)amino, $C_1$-$C_6$alkyloxy, nitro, cyano and/or chlorine; and wherein one or more $-CH_2-$ group may independently from each other be replaced by a linking group;
D represents an unsubstituted or substituted, aliphatic, aromatic and/or alicyclic diamine group having from 1 to 40 carbon atoms;
preferably D represents an unsubstituted or substituted, aliphatic, aromatic and/or alicyclic diamine group having from 1 to 40 carbon atoms, wherein the diamine group comprises an aliphatic group, which may comprise one or more heteroatom and/or bridging group;
and/or an aromatic group;
and/or an alicyclic group;

E represents an aromatic group, an oxygen atom, a sulphur atom, -NH-, -N($C_1$-$C_6$alkyl)-, -$CR^2R^3$, wherein $R^2$ and $R^3$ are independently from each other hydrogen or a cyclic, straight-chain or branched, substituted or unsubstituted $C_1$-$C_{24}$alkyl, wherein one or more -$CH_2$- group (s) may be independently from each other replaced by a linking group, and with the proviso that at least one of $R^2$ and $R^3$ is not hydrogen;

$S^1$, $S^2$ each independently from each other represents a spacer unit;

X, Y each independently from each other represents hydrogen, fluorine, chlorine, cyano, unsubstituted or with fluorine substituted $C_1$-$C_{12}$alkyl, in which one or more -$CH_2$- groups may be replaced by a linking group;

n, n1 each independently from each other represents 1, 2, 3 or 4, preferably n1 is 1 and n is 1 or 2;
with the proviso that if n is 2, 3, or 4, each A, B, $x_1$, E, $S^1$, $S^2$, X, Y are identical or different; and if n1 is 2, 3 or 4 each B, $x_1$ is identical or different;
preferably,
wherein, if n > 1, compound (I) has several side-chains [wherein side-chain has the meaning of structures (I) without the group D], which are linked to residue D at one atomic position within group D, e.g. two or three side chains linked to one single carbon atom within group D, or they can be linked to group D at different atomic positions within group D, e.g. at adjacent atomic positions within group D, or/and they can linked spaced further apart;

In addition preferred is a method, wherein the photoalignment material of the composition comprises at least a surfactant and a photoalignment material, which is a polymer comprising a diamine (I) and a tetracarboxylic acid anhydride as basic building blocks, and more preferably wherein the polymer is selected from a polyamic acid, polyamic ester, polyimide or a mixture thereof, preferably a mixture of of polyamic acid and polyamic ester and/or polyimide. More preferred is a mixture of polyamic acid and polyimide.

In the context of the present invention the term "polymere" has the meaning of copolymer, homopolymer or oligomer.

In the context of the present invention the term "polyimide" has the meaning of partially or complete imidisated polyamic acid or polyamic ester. In analogy, the term "imidisation" has in the context of the present invention the meaning of partially or complete imidisation.

Further more preferred is diamine (I), wherein the linking group is selected from -O-, -CO, -CO-O-, -O-CO-,

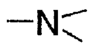

, -$NR^1$-, -$NR^1$-CO-, -CO-$NR^1$-, -$NR^1$-CO-O-, -O-CO-$NR^1$-, -$NR^1$-CO-$NR^1$-, -CH=CH-, -C≡C-, -O-CO-O-, and -$Si(CH_3)_2$-O-$Si(CH_3)_2$-, and wherein:

$R^1$ represents a hydrogen atom or $C_1$-$C_6$alkyl; with the proviso that oxygen atoms of linking groups are not directly linked to each other;

Further more preferred is diamine (I), wherein the spacer unit is a single bond, a cyclic, straight-chain or branched, substituted or unsubstituted $C_1$-$C_{24}$alkylen, wherein one or more -$CH_2$- group may independently from each other be replaced by a linking group as described above and/or an non-aromatic, aromatic, unsubstituted or substituted carbocyclic or heterocyclic group connected via bridging groups.

Further more preferred is the diamine (I), wherein the bridging group is selected from -CH(OH)-, -CO-, -$CH_2$(CO)-, -SO-, -$CH_2$(SO)-, -$SO_2$-,-$CH_2$($SO_2$)-, -COO-, -OCO-, -$COCF_2$-, -$CF_2$CO , -S-CO-, -CO-S-, -SOO-, -OSO-, -SOS-, -O-CO-O, -$CH_2$-$CH_2$- , -$OCH_2$-, -$CH_2$O-, -CH=CH-, -C≡C-, -CH=CH-COO-, -OCO-CH=CH-, -CH=N-, -C($CH_3$)=N-, -N=N- or a single bond; or a cyclic, straight-chain or branched, substituted or unsubstituted $C_1$-$C_{24}$alkylen, wherein one or more -$CH_2$- group may independently from each other be replaced independently from each other by a linking group as described above;

Further more preferred is the diamine (I), wherein

D is preferably selected from formula (III):

$$H(R^5)N\text{-}(Sp^1)_{k1}\text{-}(X^1)_{t1}\text{-}(Z^3\text{-}C^3)_{a3}\text{-}(Z^4\text{-}C^4)_{a4}\text{-}(X^2)_{t2}\text{-}(Sp^2)_{k2}\text{-}N(R^6)H \qquad (III)$$

wherein:

| | |
|---|---|
| $R^5$, $R^6$ | each independently from each other represents a hydrogen atom or $C_1$-$C_6$alkyl; |
| $Sp^1$, $Sp^2$ | each independently from each other represent an unsubstituted or substituted straight-chain or branched $C_1$-$C_{20}$alkylene, in which one or more -$CH_2$-group may independently from each other be replaced by a linking group, and |
| $k^1$, $k^2$ | each independently is an integer having a value of 0 or 1; and |
| $X^1$, $X^2$ | each independently represents a linking spacer, and |
| $t^1$, $t^2$ | each independently is an integer having a value of 0 or 1; and |
| $C^3$, $C^4$ | each independently represents a non-aromatic, aromatic, substituted or unsubstituted carbocyclic or heterocyclic group, which may have a side chain T, and |
| $Z^3$ | represents a bridging group; and |
| $Z^4$ | represents a substituted or unsubstituted straight-chain or branched $C_1$-$C_{20}$alkylene group, in which one or more -$CH_2$- group may independently from each other be replaced by a non-aromatic, aromatic, unsubstituted or substituted carbocyclic or heterocyclic group; and/or a heteroatom and/or by a bridging group; and |
| $a_3$, $a_4$ | are independently integers from 0 to 3, such that $a_3 + a_4 \leq 4$; and wherein |
| D | is at least once linked to at least one group $S^1$ in formula (I) via group $Sp^1$ and/or group $Sp^2$; and/or linked via at least one non-aromatic, aromatic, substituted or unsubstituted carbocyclic or heterocyclic group of $C^3$ and/or group of $C^4$, and/or linked via at least one side chain T of group $C^4$ and/or group of $C^3$; and/or linked via group $Z^4$; and at least one of $k^1$, $k^2$, $a^3$ and $a^4$ is not equal to zero; and wherein |

linking group is as defined in claim 2, and bridging group is as defined above.

Further more preferred is the diamine (I), wherein the side chain, T, represents a substituted or unsubstituted straight-chain or branched $C_1$-$C_{20}$alkylene group, in which one or more -$CH_2$- group(s) may independently from each other be replaced by a non-aromatic, aromatic, unsubstituted or substituted carbocyclic or heterocyclic group, or a heteroatom and/or by a bridging group, which is at least once linked to at least once group $S^1$ in formula (I) as described above;

Further more preferred is the photoalignment material of PCT/CH Application 20061000713, filed on December 19, 2006, composed of diamine compound (I),

wherein

$C^3$, $C^4$ independently from each other are selected from a compound of group $G^2$,

wherein $G^2$ is:

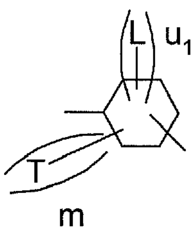 , 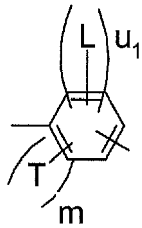 , 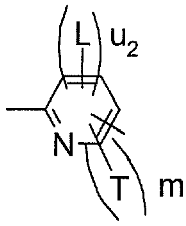 , 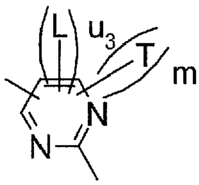

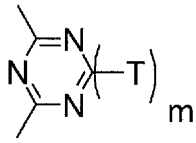 , 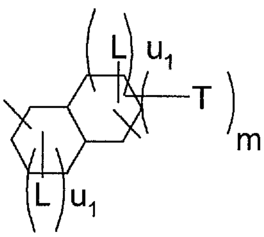 , 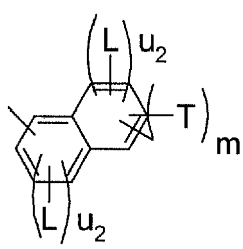 ,

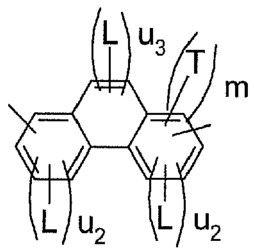 , 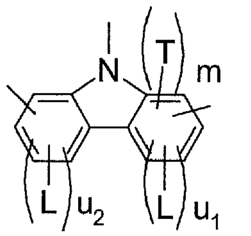 ,

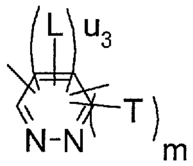 , 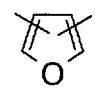 , 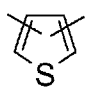 , 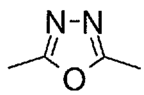 and 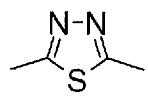

wherein:

"-" denotes the connecting bonds of $C^3$ and $C^4$ to the adjacent groups of compound of formula (III) as described above; and

L is $-CH_3$, $-COCH_3$, $-OCH_3$, nitro, cyano, halogen, $CH_2=CH-$, $CH_2=C(CH_3)-$, $CH_2=CH-(CO)O-$, $CH_2=CH-O-$, $-NR^5R^6$ , $CH_2=C(CH_3)-(CO)O-$, $CH_2=C(CH_3)-O-$,wherein:
$R^5$, $R^6$ each independently from each other represents a hydrogen atom or $C_1$-$C_6$alkyl;

T represents a substituted or unsubstituted straight-chain or branched $C_1$-$C_{20}$alkylene group, in which one or more $-CH_2-$ group may independently from each other be replaced by a non-aromatic, aromatic, unsubstituted or substituted carbocyclic or heterocyclic group, or a heteroatom and/or by a bridging group;

m is an integer from 0 to 2;

$u_1$ is an integer from 0 to 4, with the proviso that m + $u_1$ is ≤4; and

$u_2$ is an integer from 0 to 3; with the proviso that m + $u_2$ is ≤3; and

$u_3$ is an integer from 0 to 2; with the proviso that m + $u_3$ is ≤2;

Further more preferred is diamine (I), wherein
D is a selected the group of the following compounds:

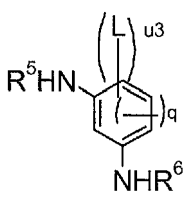 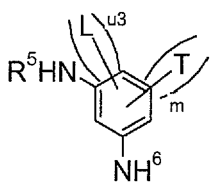 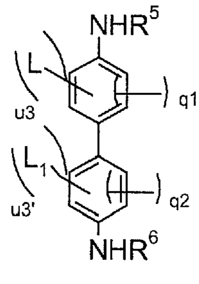

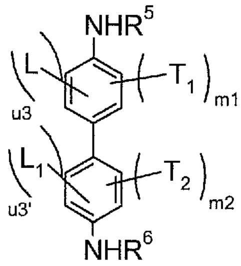
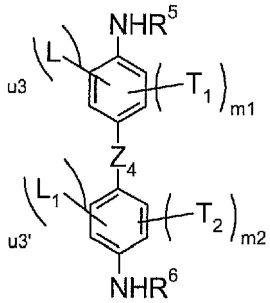
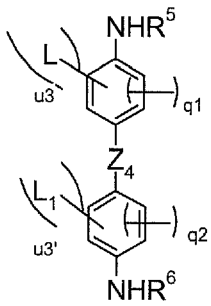

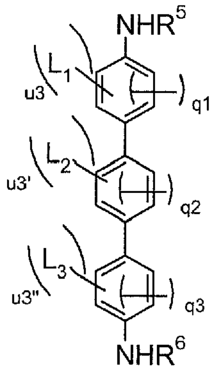
and
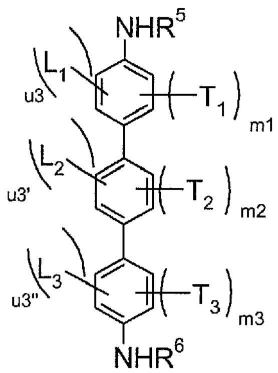

wherein

L, $L_1$, $L_2$ and $L_3$ are independently from each other $-CH_3$, $-COCH_3$, $-OCH_3$, nitro, cyano, halogen, $CH_2$=CH-, $CH_2$=C($CH_3$)-, $CH_2$=CH-(CO)O-, $CH_2$=CH-O-, $-NR^5R^6$, $CH_2=C(CH_3)$-(CO)O- or $CH_2=C(CH_3)$-O-,
T, $T_1$, $T_2$ and $T_3$ are independently from each other a substituted or unsubstituted straight-chain or branched $C_1$-$C_{20}$alkylene group, in which one or more $-CH_2-$ group(s) may independently from each other be replaced by a non-aromatic, aromatic, unsubstituted or substituted carbocyclic or heterocyclic group, and/or a heteroatom and/or by a bridging group;
"-" is a single bond,
q is an integer of 1 or 2; and
q1, q2 and q3 are independently from each other an integer from 0 to 2;
m is an integer of 1 or 2;
m1, m2 and m3 are independently from each other an integer from 0 to 2;
$u_3$, $u_{3'}$ and $u_{3''}$, are independently from each other an integer from 0 to 2;
$R^5$, $R^6$ and $Z^4$ are as described above; and wherein
D is at least once linked to at least one group $S^1$ in formula (I), as described in claim 1, via a single bond "-"; or via a side chain T, $T_1$, $T_2$ or $T_3$; or via group $Z^4$;
with the proviso that
$u3 + q$, or $u3 + m$ is $\leq 4$;
$u3 + q1$ and/or $u3' + q2$ or/and $u3 + m1$, or/and $u3' + m2$, or/and $u3'' + q3$, or/and $u3'' + m3$ is $\leq 4$;
$q1 + q2$, and $m1 + m2$; and $q1 + q2 + q3$, and $m1 + m2 + m3$ is $\geq 1$;

Further more preferred is the diamine compound (I), wherein the following compound residue of formula (Ia)

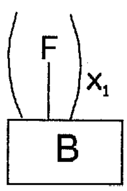
(Ia)

represents a straight-chain or branched $C_1$-$C_{16}$fluoralkyl group with terminal units selected from $-CF_2H$ and $-CF_3$;
Further more preferred is the diamine compound (I), wherein

$S^1$, $S^2$ each independently from each other represents a single bond or a cyclic, straight-chain or branched, substituted or unsubstituted $C_1$-$C_{24}$alkylen, in which one or more $-CH_2-$ group may independently from each other be replaced by a linking group, and/or a non-aromatic, aromatic, unsubstituted or substituted carbocyclic or heterocyclic group of formula (IV):

$$-(Z^1-C^1)_{a1}-(Z^2-C^2)_{a2}-(Z^{1a})_{a3}- \qquad (IV)$$

wherein:

$C^1$, $C^2$ each independently represents a non-aromatic, aromatic, unsubstituted or substituted carbocyclic or heterocyclic group, and

$Z^1$, $Z^2$, $Z^{1a}$ each independently represents a bridging group, and

each independently represents an integer from 0 to 3, $a_1 + a_2 + a_3 \leq 6$, wherein the bridging groups $Z^1$, $Z^{1a}$ and $Z^2$ are as above;
most preferred is the photoalignment material of PCT/CH Application 2006/000713, filed on December 19, 2006, according to examples 1 to 20;
especially most preferred are photoalignment material of polymers composed from tetracarboxylic acid anhydride and a diamine compound of formulae (VI), (VII), (VIII), (IX), (X), (XI), (XIa) or (XIb)

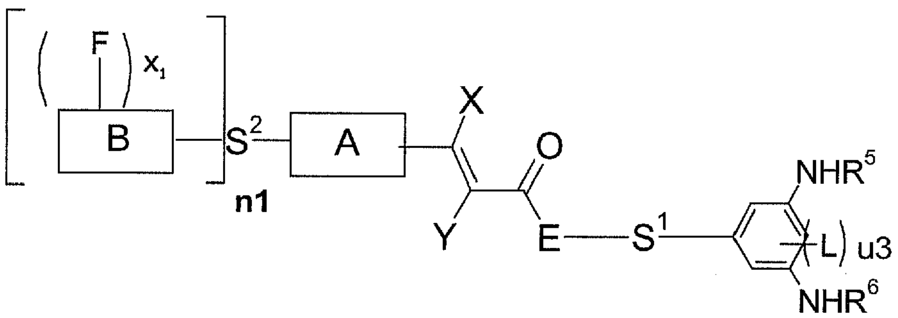

(VI)

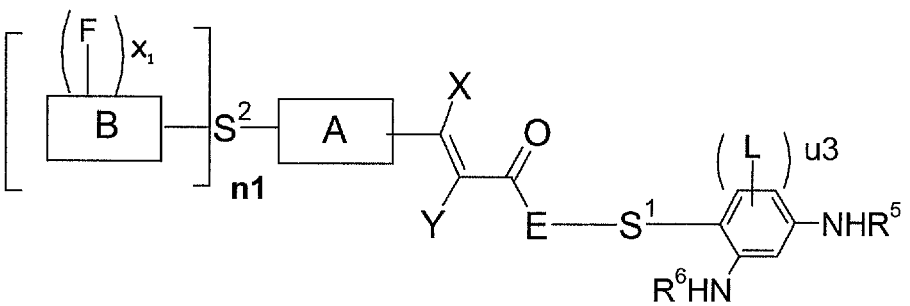

(VII)

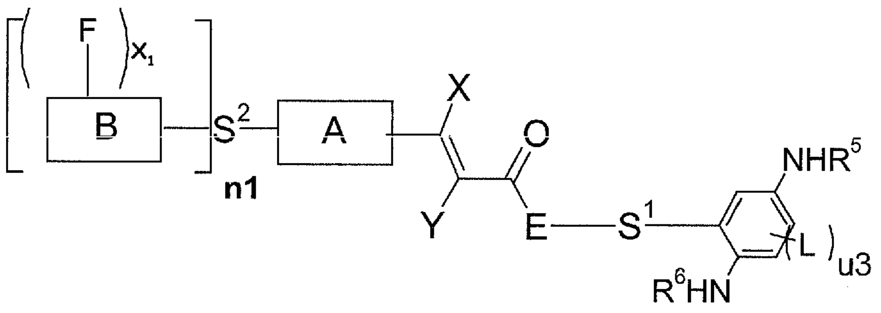

(VIII)

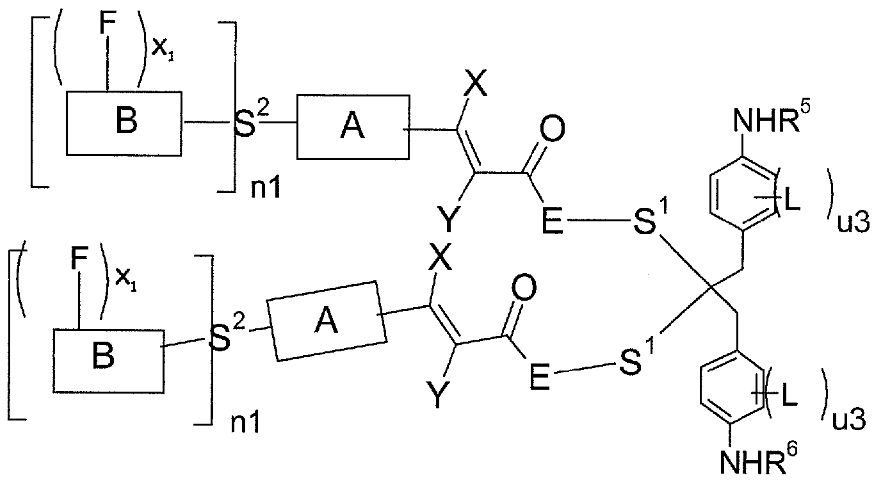

(IX)

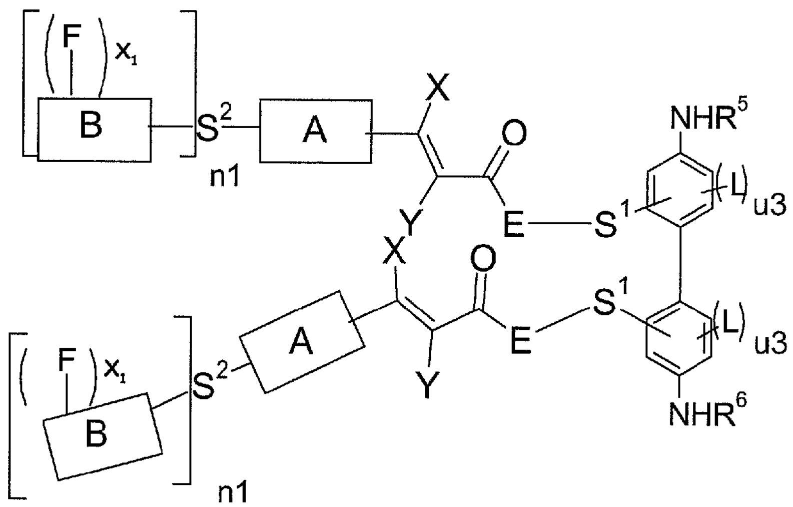

(X)

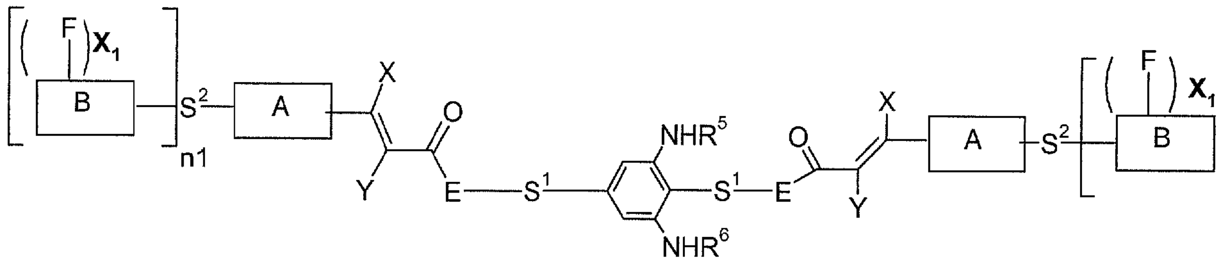

(XI)

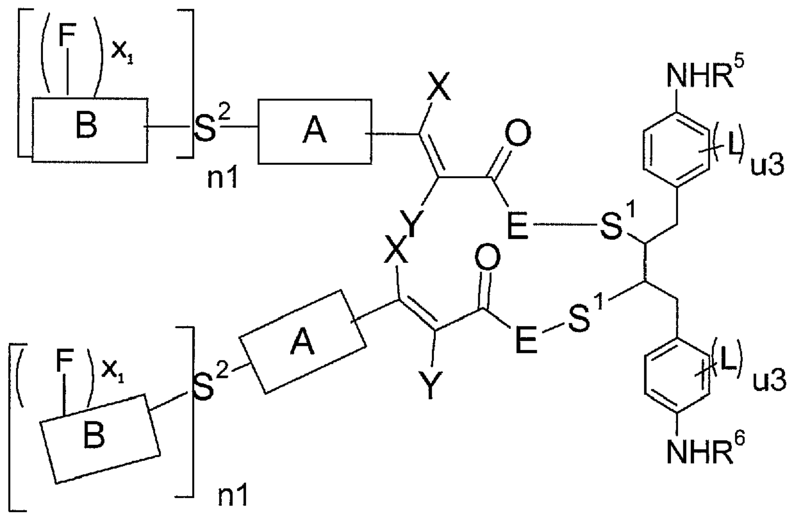

(XIa)

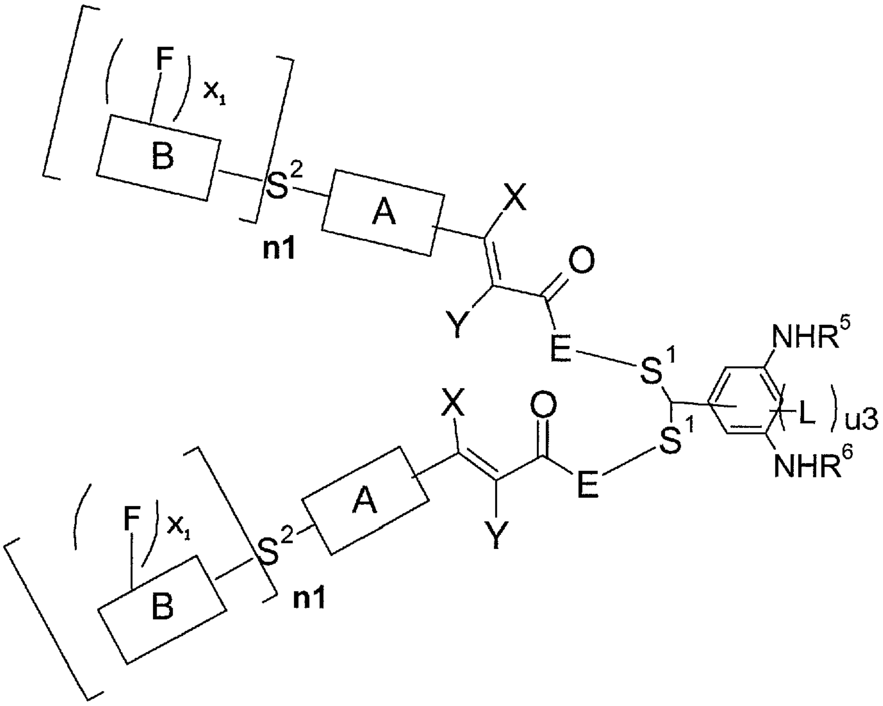

(XIb)

wherein

A, B, $x_1$, n, n1, D, E, $S^2$,$S^1$, X and Y have the above given meanings as in claim 1 and $R^5$, $R^6$ and $Z^4$ have the same meanings as given above;
L is $-CH_3$, $-OCH_3$, $-COCH_3$, nitro, cyano, halogen, $CH_2=CH-$, $CH_2=C(CH_3)-$, $CH_2=CH-(CO)O-$, $CH_2=CH-O-$, $CH_2=C(CH_3)-(CO)O-$, or $CH_2=C(CH_3)-O-$,
$u_3$ is an integer from 0 to 2;

and preferably from
diamine of formula (XII)

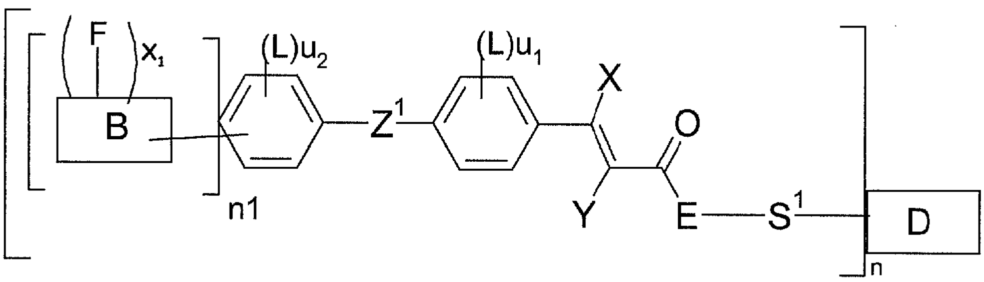

(XII)

wherein $x_1$, B, n, n1, D, E, $S^1$, X ,Y, $Z^1$, L, $u_1$ and $u_2$ have the same meanings as given above;
and more preferably from
diamine compound selected from

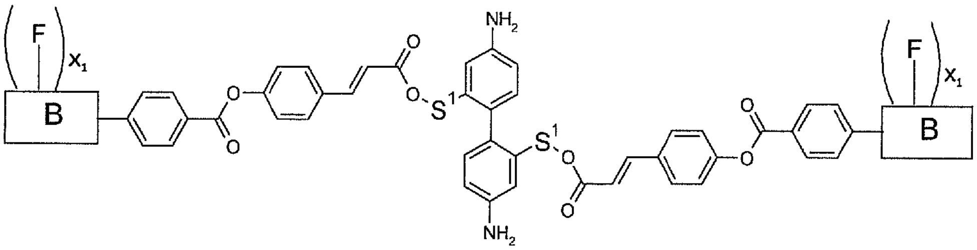

and

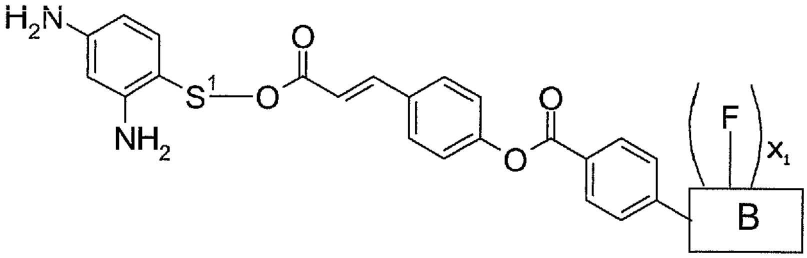

or

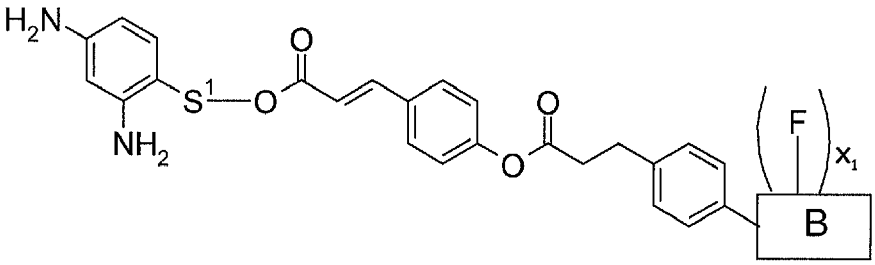

or

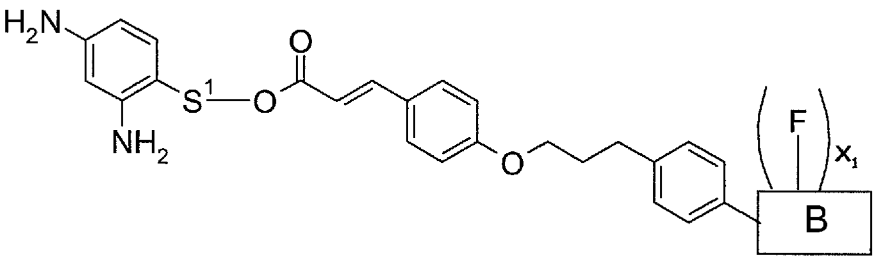

wherein $S^1$ has the above given meaning as in claim and wherein the following compound residue

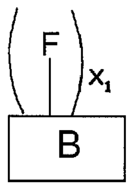

represents a straight-chain or branched $C_1$-$C_8$fluoralkyl group, wherein

F is fluorine, and
$x_1$ is an integer from 1 to 9,
B represents a straight-chain or branched $C_1$-$C_8$alkyl group, which is unsubstituted or in addition to its fluorine substituent(s) substituted by di-($C_1$-$C_{16}$alkyl)amino, $C_1$-$C_6$alkyloxy, nitro, cyano and/or chlorine; and wherein one or more -$CH_2$- group may independently be replaced by a linking group selected from -O-, -CO-, -CO-O-, -O-CO-, -$NR^1$-, -$NR^1$-CO-, -CO-$NR^1$- and -CH=CH-, wherein:

$R^1$ represents a hydrogen atom or $C_1$-$C_6$alkyl; with the proviso that oxygen atoms are not directly linked to each other; and wherein the $C_1$-$C_8$fluoralkyl group has terminal units selected from -$CF_2H$, -$CF_3$.

Most especially preferred photoalignment materials are polymers composed of a diamine of:

6-{[((2E)-3-{4-[(4-(4,4,4-trifluorobutoxy)benzoyl)oxy]phenyl}prop-2-enoyl)oxy]}hexyl 3,5-diaminobenzoate
6-{[((2E)-3-{4-[(4-(4,4,4-trifluorobutoxy)benzoyl)oxy]phenyl}prop-2-enoyl)oxy]}hexyl 3,5-diaminobenzoate
2-{[((2E)-3-{4-[(4-(trifluoroethoxy)benzoyl)oxy]phenyl}prop-2-enoyl)oxy]}ethyl 3,5-diaminobenzoate
3-{[((2E)-3-{4-[(4-(trifluoroethoxy)benzoyl)oxy]phenyl}prop-2-enoyl)oxy]}propyl 3,5-d iam inobenzoate
4-{[((2E)-3-{4-[(4-(trifluoroethoxy)benzoyl)oxy]phenyl}prop-2-enoyl)oxy]}butyl 3,5-diaminobenzoate
5-{[((2E)-3-{4-[(4-(trifluoroethoxy)benzoyl)oxy]phenyl}prop-2-enoyl)oxy]}pentyl 3,5-diaminobenzoate
7-{[((2E)-3-{4-[(4-(trifluoroethoxy)benzoyl)oxy]phenyl}prop-2-enoyl)oxy]}heptyl 3,5-diaminobenzoate
8-{[((2E)-3-{4-[(4-(trifluoroethoxy)benzoyl)oxy]phenyl}prop-2-enoyl)oxy]}octyl 3,5-diaminobenzoate
11-{[((2E)-3-{4-[(4-(trifluoroethoxy)benzoyl)oxy]phenyl}prop-2-enoyl)oxy]} undecyl 3,5-diaminobenzoate
2-{[((2E)-3-{4-[(4-(trifluoromethoxy)benzoyl)oxy]phenyl}prop-2-enoyl)oxy]}ethyl 3,5-diaminobenzoate
3-{[((2E)-3-{4-[(4-(trifluoromethoxy)benzoyl)oxy]phenyl}prop-2-enoyl)oxy]}propyl 3,5-diaminobenzoate
4-{[((2E)-3-{4-[(4-(trifluoromethoxy)benzoyl)oxy]phenyl}prop-2-enoyl)oxy]}butyl 3,5-diaminobenzoate
5-{[((2E)-3-{4-[(4-(trifluoromethoxy)benzoyl)oxy]phenyl}prop-2-enoyl)oxy]}pentyl 3,5-diaminobenzoate
6-{[((2E)-3-{4-[(4-(trifluoromethoxy)benzoyl)oxy]phenyl}prop-2-enoyl)oxy]}hexyll 3,5-diaminobenzoate
7-{[((2E)-3-{4-[(4-(trifluoromethoxy)benzoyl)oxy]phenyl}prop-2-enoyl)oxy]}heptyl 3,5-diaminobenzoate
8-{[((2E)-3-{4-[(4-(trifluoromethoxy)benzoyl)oxy]phenyl}prop-2-enoyl)oxy]}octyl 3,5-diaminobenzoate
2-{[((2E)-3-{4-[(4-(trifluoromethyl)benzoyl)oxy]phenyl}prop-2-enoyl)oxy]}ethyl 3,5-diaminobenzoate
3-{[((2E)-3-{4-[(4-(trifluoromethyl)benzoyl)oxy]phenyl}prop-2-enoyl)oxy]}propyl 3,5-diaminobenzoate
4-{[((2E)-3-{4-[(4-(trifluoromethyl)benzoyl)oxy]phenyl}prop-2-enoyl)oxy]}butyl 3,5-diaminobenzoate
5-{[((2E)-3-{4-[(4-(trifluoromethyl)benzoyl)oxy]phenyl}prop-2-enoyl)oxy]}pentyl 3,5-diaminobenzoate
6-{[((2E)-3-{4-[(4-(trifluoromethyl)benzoyl)oxy]phenyl}prop-2-enoyl)oxy]}hexyll 3,5-diaminobenzoate
8-{[((2E)-3-{4-[(4-(trifluoromethyl)benzoyl)oxy]phenyl}prop-2-enoyl)oxy]}octyl 3,5-diaminobenzoate
11-{[((2E)-3-(4-[(4-(trifluoromethyl)benzoyl)oxy]phenyl)prop-2-enoyl)oxy]}undecyll 3,5-diaminobenzoate
2-[2-{[((2E)-3-{4-[(4-(trifluoroethoxy)benzoyl)oxy]phenyl}prop-2-enoyl)oxy]}ethoxy]ethyl 3,5-diaminobenzoate
2{2-[2-{[((2E)-3-{4-[(4-(trifluoroethoxy)benzoyl)oxy]phenyl}prop-2-enoyl)oxy]}ethoxy]ethoxy}ethyl 3,5-diaminobenzoate
2,2-dimethyl-3-{[((2E)-3-{4-[(4-(trifluoroethoxy)benzoyl)oxy]phenyl}prop-2-enoyl)oxy]}propyl 3,5-diaminobenzoate
2-{[((2E)-3-{4-[(4-(3,3,3-trifluoropropoxy)benzoyl)oxy]phenyl}prop-2-enoyl)oxy]}ethyl 3,5-diaminobenzoate
3-{[((2E)-3-{4-[(4-(3,3,3-trifluoropropoxy)benzoyl)oxy]phenyl}prop-2-enoyl)oxy]}propyl 3,5-diaminobenzoate
4-{[((2E)-3-{4-[(4-(3,3,3-trifluoropropoxy)benzoyl)oxy]phenyl}prop-2-enoyl)oxy]}butyl 3,5-diaminobenzoate.
6-{[((2E)-3-{4-[(4-(3,3,3-trifluoropropoxy)benzoyl)oxy]phenyl}prop-2-enoyl)oxyl}hexyl 3,5-diaminobenzoate
7-{[((2E)-3-{4-[(4-(3,3,3-trifluoropropoxy)benzoyl)oxy]phenyl}prop-2-enoyl)oxy]}heptyl 3,5-diaminobenzoate
8-{[((2E)-3-{4-[(4-(3,3,3-trifluoropropoxy)benzoyl)oxy]phenyl}prop-2-enoyl)oxy]}octyl 3,5-diaminobenzoate
11-{[((2E)-3-{4-[(4-(3,3,3-trifluoropropoxy)benzoyl)oxy]phenyl}prop-2-enoyl)oxy]} undecyl 3,5-diaminobenzoate
2-[2-{[((2E)-3-{4-[(4-(3,3,3-trifluoropropoxy)benzoyl)oxy]phenyl}prop-2-enoyl)oxy]}ethoxy]ethyl 3,5-diaminobenzoate

2{2-[2-{[((2E)-3-{4-[(4-(3,3,3-trifluoropropoxy)benzoyl)oxy]phenyl}prop-2-enoyl)oxy]}ethoxy]ethoxy}ethyl 3,5-diaminobenzoate

2,2-dimethyl-3-{[((2E)-3-{4-[(4-(3,3,3-trifluoropropoxy)benzoyl)oxy]phenyl}prop-2-enoyl)oxy]}propyl 3,5-diaminobenzoate

2-{[((2E)-3-{4-[(4-(4,4,4-trifluorobutoxy)benzoyl)oxy]phenyl}prop-2-enoyl)oxy]}ethyl 3,5-diaminobenzoate

3-{[((2E)-3-{4-[(4-(4,4,4-trifluorobutoxy)benzoyl)oxy]phenyl}prop-2-enoyl)oxy]}propyl 3,5-diaminobenzoate

4-{[((2E)-3-{4-[(4-(4,4,4-trifluorobutoxy)benzoyl)oxy]phenyl}prop-2-enoyl)oxy]}butyl 3,5-diaminobenzoate

5-{[((2E)-3-{4-[(4-(4,4,4-trifluorobutoxy)benzoyl)oxy]phenyl}prop-2-enoyl)oxy]}pentyl 3,5-diaminobenzoate

7-{[((2E)-3-{4-[(4-(4,4,4-trifluorobutoxy)benzoyl)oxy]phenyl}prop-2-enoyl)oxy]}heptyl 3,5-diaminobenzoate

8-{[((2E)-3-{4-[(4-(4,4,4-trifluorobutoxy)benzoyl)oxy]phenyl}prop-2-enoyl)oxy]}octyl 3,5-diaminobenzoate

11-{[((2E)-3-{4-[(4-(4,4,4-trifluorobutoxy)benzoyl)oxy]phenyl}prop-2-enoyl)oxy]} undecyl 3,5-diaminobenzoate

2-[2-{[((2E)-3-{4-[(4-(4,4,4-trifluorobutoxy)benzoyl)oxy]phenyl}prop-2-enoyl)oxy]}ethoxy]ethyl 3,5-diaminobenzoate

2{2-[2-{[((2E)-3-{4-[(4-(4,4,4-trifluorobutoxy)benzoyl)oxy]phenyl}prop-2-enoyl)oxy]}ethoxy]ethoxy}ethyl 3,5-diaminobenzoate

2,2-dimethyl-3-{[((2E)-3-{4-[(4-(4,4,4-trifluorobutoxy)benzoyl)oxy]phenyl}prop-2-enoyl)oxy]}propyl 3,5-diaminobenzoate

2-{[((2E)-3-{4-[(4-(5,5,5-trifluoropentoxy)benzoyl)oxy]phenyl}prop-2-enoyl)oxyl}ethyl 3,5-diaminobenzoate

3-{[((2E)-3-{4-[(4-(5,5,5-trifluoropentoxy)benzoyl)oxy]phenyl}prop-2-enoyl)oxy]}propyl 3,5-diaminobenzoate

4-{[((2E)-3-{4-[(4-(5,5,5-trifluoropentoxy)benzoyl)oxy]phenyl}prop-2-enoyl)oxy]}butyl 3,5-diaminobenzoate

5-{[((2E)-3-{4-[(4-(5,5,5-trifluoropentoxy)benzoyl)oxy]phenyl}prop-2-enoyl)oxy]}pentyl 3,5-diaminobenzoate

6-{[((2E)-3-{4-[(4-(5,5,5-trifluoropentoxy)benzoyl)oxy]phenyl}prop-2-enoyl)oxy]}hexyl 3,5-diaminobenzoate

8-{[((2E)-3-{4-[(4-(5,5,5-trifluoropentoxy)benzoyl)oxy]phenyl}prop-2-enoyl)oxy]}octyl 3,5-diaminobenzoate

11-{[((2E)-3-{4-[(4-(5,5,5-trifluoropentoxy)benzoyl)oxy]phenyl}prop-2-enoyl)oxy]} undecyl 3,5-diaminobenzoate

2-[2-{[((2E)-3-{4-[(4-(5,5,5-trifluoropentoxy)benzoyl)oxy]phenyl}prop-2-enoyl)oxy]}ethoxy]ethyl 3,5-diaminobenzoate

2{2-[2-{[((2E)-3-{4-[(4-(5,5,5-trifluoropentoxy)benzoyl)oxy]phenyl}prop-2-enoyl)oxy]}ethoxy]ethoxy}ethyl 3,5-diaminobenzoate

2,2-dimethyl-3-{[((2E)-3-{4-[(4-(5,5,5-trifluoropentoxy)benzoyl)oxy]phenyl}prop-2-enoyl)oxy]}propyl 3,5-diaminobenzoate

2-{[((2E)-3-{4-[(4-(6,6,6-trifluorohexyloxy)benzoyl)oxy]phenyl}prop-2-enoyl)oxy]}ethyl 3,5-diaminobenzoate

3-{[((2E)-3-{4-[(4-(6,6,6-trifluorohexyloxy)benzoyl)oxy]phenyl}prop-2-enoyl)oxy]}propyl 3,5-diaminobenzoate

4-{[((2E)-3-{4-[(4-(6,6,6-trifluorohexyloxy)benzoyl)oxy]phenyl}prop-2-enoyl)oxy]}butyl 3,5-diaminobenzoate

5-{[((2E)-3-{4-[(4-(6,6,6-trifluorohexyloxy)benzoyl)oxy]phenyl}prop-2-enoyl)oxy]}pentyl 3,5-diaminobenzoate

7-{[((2E)-3-{4-[(4-(6,6,6-trifluorohexyloxy)benzoyl)oxy]phenyl}prop-2-enoyl)oxy]}heptyl 3,5-diaminobenzoate

8-{[((2E)-3-{4-[(4-(6,6,6-trifluorohexyloxy)benzoyl)oxy]phenyl}prop-2-enoyl)oxy]}octyl 3,5-diaminobenzoate

11-{[((2E)-3-{4-[(4-(6,6,6-trifluorohexyloxy)benzoyl)oxy]phenyl}prop-2-enoyl)oxy]} undecyl 3,5-diaminobenzoate

2-[2-{[((2E)-3-{4-[(4-(6,6,6-trifluorohexyloxy)benzoyl)oxy]phenyl}prop-2-enoyl)oxy]}ethoxy]ethyl 3,5-diaminobenzoate

2{2-[2-{[((2E)-3-{4-[(4-(6,6,6-trifluorohexyloxy)benzoyl)oxy]phenyl}prop-2-enoyl)oxy]}ethoxy]ethoxy}ethyl 3,5-diaminobenzoate

2,2-dimethyl-3-{[((2E)-3-{4-[(4-(6,6,6-trifluorohexyloxy)benzoyl)oxy]phenyl}prop-2-enoyl)oxy]}propyl 3,5-diaminobenzoate

3-{[((2E)-3-{4-[(3-methoxy 4-(3,3,3-trifluoropropoxy)benzoyl)oxy]phenyl}prop-2-enoyl)oxy]lpropyl 3,5-diaminobenzoate

8-{[((2E)-3-{4-[(3-methoxy 4-(3,3,3-trifluoropropoxy)benzoyl)oxy]phenyl}prop-2-enoyl)oxy]}octyl 3,5-diaminobenzoate

11-{[((2E)-3-{4-[(3-methoxy 4-(3,3,3-trifluoropropoxy)benzoyl)oxy]phenyl}prop-2-enoyl)oxy]}undecyl 3,5-diaminobenzoate

6-{[((2E)-3-{4-[(3-methoxy 4-(4,4,4-trifluorobutoxy)benzoyl)oxy]phenyl}prop-2-enoyl)oxy]}hexyll 3,5-diaminobenzoate

8-{[((2E)-3-{4-[(3-methoxy 4-(4,4,4-trifluorobutoxy)benzoyl)oxy]phenyl}prop-2-enoyl)oxy]}octyl 3,5-diaminobenzoate

11-{[((2E)-3-{4-[(3-methoxy 4-(4,4,4-trifluorobutoxy)benzoyl)oxy]phenyl}prop-2-enoyl)oxy]}undecyl 3,5-diaminobenzoate

4-{[((2E)-3-{4-[(3-methoxy 4-(5,5,5-trifluoropentoxy)benzoyl)oxy]phenyl}prop-2-enoyl)oxy]}butyl 3,5-diaminobenzoate

6-{[((2E)-3-{4-[(3-methoxy 4-(5,5,5-trifluoropentoxy)benzoyl)oxy]phenyl}prop-2-enoyl)oxy]}hexyl3,5-diaminobenzoate
4-{[((2E)-3-{4-[(3-methoxy 4-(6,6,6-trifluorohexyloxy)benzoyl)oxy]phenyl}prop-2-enoyl)oxy]}butyl 3,5-diaminobenzoate
6-{[((2E)-3-{4-[(3-methoxy 4-(6,6,6-trifluorohexyloxy)benzoyl)oxy]phenyl}prop-2-enoyl)oxy]}hexyl 3,5-diaminobenzoate
2-{[((2E)-3-{4-[(4-(4,4,5,5,5-pentafluoropentoxy)benzoyl)oxy]phenyl}prop-2-enoyl)oxy]}ethyl 3,5-diaminobenzoate
3-{[((2E)-3-{4-[(4-(4,4,5,5,5-pentafluoropentoxy)benzoyl)oxy]phenyl}prop-2-enoyl)oxy]}propyl 3,5-diaminobenzoate
4-{[((2E)-3-{4-[(4-(4,4,5,5,5-pentafluoropentoxy)benzoyl)oxy]phenyl}prop-2-enoyl)oxy]}butyl 3,5-diaminobenzoate
6-{[((2E)-3-{4-[(4-(4,4,5,5,5-pentafluoropentoxy)benzoyl)oxy]phenyl}prop-2-enoyl)oxy]}hexyl 3,5-diaminobenzoate
7-{[((2E)-3-{4-[(4-(4,4,5,5,5-pentafluoropentoxy)benzoyl)oxy]phenyl}prop-2-enoyl)oxy]}heptyl 3,5-diaminobenzoate
8-{[((2E)-3-{4-[(4-(4,4,5,5,5-pentafluoropentoxy)benzoyl)oxy]phenyl}prop-2-enoyl)oxy]}octyl 3,5-diaminobenzoate
11-{[((2E)-3-{4-[(4-(4,4,5,5,5-pentafluoropentoxy)benzoyl)oxy]phenyl}prop-2-enoyl)oxy]} undecyl 3,5-diaminobenzoate
2-[2-{[((2E)-3-{4-[(4-(4,4,5,5,5-pentafluoropentoxy)benzoyl)oxy]phenyl}prop-2-enoyl)oxy]}ethoxy]ethyl 3,5-diaminobenzoate
2{2-[2-{[((2E)-3-{4-[(4-(4,4,5,5,5-pentafluoropentoxy)benzoyl)oxy]phenyl}prop-2-enoyl)oxy]}ethoxy]ethoxy}ethyl 3,5-diaminobenzoate
2,2-Dimethyl-3-{[((2E)-3-{4-[(4-(4,4,5,5,5-pentafluoropentoxy)benzoyl)oxy]phenyl}prop-2-enoyl)oxy]}propyl 3,5-diaminobenzoate
2-{[((2E)-3-{4-[(4-(1,1,2,2-tetrafluoroethoxy)benzoyl)oxy]phenyl}prop-2-enoyl)oxy]}ethyl 3,5-diaminobenzoate
3-{[((2E)-3-{4-[(4-(1,1,2,2-tetrafluoroethoxy)benzoyl)oxy]phenyl}prop-2-enoyl)oxy]}propyl 3,5-diaminobenzoate
4-{[((2E)-3-{4-[(4-(1,1,2,2-tetrafluoroethoxy)benzoyl)oxy]phenyl}prop-2-enoyl)oxy]}butyl 3,5-diaminobenzoate
5-{[((2E)-3-{4-[(4-(1,1,2,2-tetrafluoroethoxy)benzoyl)oxy]phenyl}prop-2-enoyl)oxy]}pentyl 3,5-diaminobenzoate
6-{[((2E)-3-{4-[(4-(1,1,2,2-tetrafluoroethoxy)benzoyl)oxy]phenyl}prop-2-enoyl)oxy]}hexyll 3,5-diaminobenzoate
7-{[((2E)-3-{4-[(4-(1,1,2,2-tetrafluoroethoxy)benzoyl)oxy]phenyl}prop-2-enoyl)oxy]}heptyl 3,5-diaminobenzoate
8-{[((2E)-3-{4-[(4-(1,1,2,2-tetrafluoroethoxy)benzoyl)oxy]phenyl}prop-2-enoyl)oxy]}octyl 3,5-diaminobenzoate
11-{[((2E)-3-{4-[(4-(1,1,2,2-tetrafluoroethoxy)benzoyl)oxy]phenyl}prop-2-enoyl)oxy]}undecyl 3,5-diaminobenzoate
6-{[((2E)-3-{4-[(4-{[(4,4,4-trifluorobutoxy)carbonyl]amino}benzoyl)oxy]phenyl}prop-2-enoyl)oxy]}hexyll 3,5-diaminobenzoate
6-{[((2E)-3-{4-[(4-{[(4,4,5,5,5-pentafluoropentoxy)carbonyl]amino}benzoyl)oxy] phenyl}prop-2-enoyl)oxy]}hexyl 3,5-diaminobenzoate
6-{[((2E)-3-{4-[(4-({[(4,4,5,5,6,6,6-heptafluorohexyloxy)carbonyl]amino})benzoyl)oxy]phenyl}prop-2-enoyl)oxy]} hexyll 3,5-diaminobenzoate
3,5-Diaminobenzyl (2E) 3-{4-[(4-(4,4,4-trifluorobutoxy)benzoyl)oxy] phenyl}acrylate
3,5-Diaminobenzyl (2E) 3-{4-[(4-trifluoromethoxybenzoyl)oxy]phenyl}acrylate
3,5-Diaminobenzyl (2E) 3-{4-[(4-(2,2,2-trifluoroethoxy)benzoyl)oxy]phenyl}acrylate
3,5-Diaminobenzyl (2E) 3-{4-[(4-(5,5,5-trifluoropentyloxy)benzoyl)oxy]phenyl}acrylate
3,5-Diaminobenzyl (2E) 3-{4-[(4-(4,4,5,5,5-pentafluoropentyloxy)benzoyl)oxy] phenyl}acrylate
3,5-Diaminobenzyl (2E) 3-{4-[(4-(3,3,4,4,5,5,6,6,6-nonafluorohexyloxy)benzoyl)oxy] phenyl}acrylate
3,5-Diaminobenzyl (2E) 3-{4-[(4-(2,2,3,3,3-pentafluoropropyloxy)benzoyl)oxy] phenyl}acrylate
3,5-Diaminobenzyl (2E) 3-{4-[(4-(2,2,3,4,4,4-hexafluorobutoxy)benzoyl)oxy] phenyl}acrylate
3,5-Diaminobenzyl (2E) 3-{4-[(4-(1,1,2,2-tetrafluoroethoxy)benzoyl)oxy] phenyl}acrylate
3,5-Diaminobenzyl (2E) 3-{4-[(4-(1,1,2,2-tetrafluoropropoxy)benzoyl)oxy] phenyl}acrylate
3,5-Diaminobenzyl (2E) 3-{4-[(4-(4,4,5,5,6,6,6-heptafluorohexyloxy)benzoyl)oxy] phenyl}acrylate
3,5-Diaminobenzyl (2E) 3-{4-[(4-(4,5,5,5-tetrafluoro-4-(trifluoromethyl)pentyloxy)benzoyl)oxy] phenyl}acrylate
3,5-Diaminobenzyl (2E) 3-{4-{ [(4-(4,4,5,5,6,6,6-heptafluorohexyloyl)oxy)benzoyl oxy]phenyl}acrylate
3,5-Diaminobenzyl (2E) 3-{4-[(4-[(4,4,4-trifluorobutoxy)carbonyl]amino)benzoyl)oxy] phenyl}acrylate
3,5-Diaminobenzyl (2E) 3-{4-[(4-[(4,4,4-trifluoropentyloxy)carbonyl]amino) benzoyl]oxy} phenyl}acrylate
3,5-Diaminobenzyl (2E) 3-{4-[4-(4,4,5,5,5,-pentafluoropentyloyloxy)benzoyl oxy]phenyl}acrylate
3,5-Diaminobenzyl (2E) 3-{4-[4-(4,4,5,5,6,6,6-heptafluorohexyloyloxy)benzoyl oxy]phenyl}acrylate
3,5-Diaminobenzyl (2E) 3-{4-[(3-fluoro-4-(4,4,4-trifluorobutoxy)benzoyl)oxy]phenyl}acrylate
2,5-Diaminobenzyl (2E) 3-{4-[(4-trifluoromethoxybenzoyl)oxy]phenyl}acrylate
2,5-Diaminobenzyl (2E) 3-{4-[(4-(2,2,2-trifluoroethoxy)benzoyl)oxy]phenyl}acrylate
2,5-Diaminobenzyl (2E) 3-{4-[(4-(5,5,5-trifluorobutoxy)benzoyl)oxy]phenyl}acrylate
2,5-Diaminobenzyl (2E) 3-{4-[(4-(5,5,5-trifluoropentyloxy)benzoyl)oxy]phenyl}acrylate
2,5-Diaminobenzyl (2E) 3-{4-[(4-(4,4,5,5,5-pentafluoropentyloxy)benzoyl)oxy] phenyl}acrylate

2,5-Diaminobenzyl (2E) 3-{4-[(4-(1,1,2,2-tetrafluoroethoxy)benzoyl)oxy] phenyl}acrylate
2,5-Diaminobenzyl (2E) 3-{4-[(4-(1,1,2,2-tetrafluoropropoxy)benzoyl)oxy] phenyl}acrylate
2,5-Diaminobenzyl (2E) 3-{4-[(4-(4,4,5,5,6,6,6-heptafluorohexyloxy)benzoyl)oxy] phenyl}acrylate
2,5-Diaminobenzyl (2E) 3-{4-{ [(4-(4,4,5,5,6,6,6-heptafluorohexyloyl)oxy)benzoyl oxy]phenyl}acrylate
2,5-Diaminobenzyl (2E) 3-{4-[(4-[(4,4,4-trifluorobutoxy)carbonyl]amino)benzoyl)oxy] phenyl}acrylate
2,5-Diaminobenzyl (2E) 3-{4-[(4-[(4,4,4-trifluoropentyloxy)carbonyl]amino) benzoyl]oxy} phenyl}acrylate
2,5-Diaminobenzyl (2E) 3-{4-[4-(4,4,5,5,5,-pentafluoropentyloyloxy)benzoyl oxy]phenyl}acrylate
2,5-Diaminobenzyl (2E) 3-{4-[4-(4,4,5,5,6,6,6-heptafluorohexyloyloxy)benzoyl oxy]phenyl}acrylate2,5-Diaminobenzyl (2E) 3-{4-[(2-fluoro-4-(4,4,4-trifluorobutoxy)benzoyl)oxy]phenyl}acrylate
2,4-Diaminobenzyl (2E) 3-{4-[(4-trifluoromethoxybenzoyl)oxy]phenyl}acrylate
2,4-Diaminobenzyl (2E) 3-{4-[(4-(2,2,2-trifluoroethoxy)benzoyl)oxy]phenyl}acrylate
2,4-Diaminobenzyl (2E) 3-{4-[(4-(5,5,5-trifluoropentyloxy)benzoyl)oxy]phenyl}acrylate
2,4-Diaminobenzyl (2E) 3-{4-[(4-(4,4,4-trifluorobutoxy)benzoyl)oxy] phenyl}acrylate
2,4-Diaminobenzyl (2E) 3-{4-[(4-(4,4,5,5,5-pentafluoropentyloxy)benzoyl)oxy] phenyl}acrylate
2,4-Diaminobenzyl (2E) 3-{4-[(4-(1,1,2,2-tetrafluoroethoxy)benzoyl)oxy] phenyl}acrylate
2,4-Diaminobenzyl (2E) 3-{4-[(4-(1,1,2,2-tetrafluoropropoxy)benzoyl)oxy] phenyl}acrylate
2,4-Diaminobenzyl (2E) 3-{4-[(4-(4,4,5,5,6,6,6-heptafluorohexyloxy)benzoyl)oxy] phenyl}acrylate
2,4-Diaminobenzyl (2E) 3-{4-{ [(4-(4,4,5,5,6,6,6-heptafluorohexyloyl)oxy)benzoyl oxy]phenyl}acrylate
2,4-Diaminobenzyl (2E) 3-{4-[(4-[(4,4,4-trifluorobutoxy)carbonyl]amino)benzoyl)oxy] phenyl}acrylate
2,4-Diaminobenzyl (2E) 3-{4-[(4-[(4,4,4-trifluoropentyloxy)carbonyl]amino) benzoyl]oxy} phenyl}acrylate
2,4-Diaminobenzyl (2E) 3-{4-[4-(4,4,5,5,5,-pentafluoropentyloyloxy)benzoyl oxy]phenyl}acrylate
2,4-Diaminobenzyl (2E) 3-{4-[4-(4,4,5,5,6,6,6-heptafluorohexyloyloxy)benzoyl oxy]phenyl}acrylate
2,4-Diaminobenzyl (2E) 3-{4-[(3-fluoro-4-(4,4,4-trifluorobutoxy)benzoyl)oxy] phenyl}acrylate
2-(2,4-Diaminophenyl)ethyl (2E) 3-{4-[(4-(4,4,5,5,5-pentafluoropentoxy)benzoyl)oxy] phenyl}acrylate
2-(3,5-Diaminophenyl)ethyl (2E) 3-{4-[(4-trifluoromethoxybenzoyl)oxy]phenyl}acrylate
2-(3,5-Diaminophenyl)ethyl (2E) 3-{4-[(4-(2,2,2-trifluoroethoxy)benzoyl)oxy]phenyl} acrylate
2-(3,5-Diaminophenyl)ethyl (2E) 3-{4-[(4-(4,4,4-trifluorobutoxy)benzoyl)oxy]phenyl} acrylate
2-(3,5-Diaminophenyl)ethyl (2E) 3-{4-[(4-(5,5,5-trifluoropentyloxy)benzoyl)oxy]phenyl} acrylate
2-(3,5-Diaminophenyl)ethyl (2E) 3-{4-[(4-(4,4,5,5,5-pentafluoropentoxy)benzoyl)oxy] phenyl}acrylate
2-(3,5-Diaminophenyl)ethyl (2E) 3-{4-[(4-(1,1,2,2-tetrafluoroethoxy)benzoyl)oxy] phenyl}acrylate
2-(3,5-Diaminophenyl)ethyl (2E) 3-{4-[(4-(4,4,4-trifluorobutanoyl)oxy)benzoyl]oxy} phenyl}acrylate
2-(3,5-Diaminophenyl)ethyl (2E) 3-{4-[(3-methoxy-4-trifluoromethoxybenzoyl)oxy]phenyl}acrylate
2-(3,5-Diaminophenyl)ethyl (2E) 3-{4-[(3-methoxy 4-(2,2,2-trifluoroethoxy)benzoyl)oxy]phenyl} acrylate
2-(3,5-Diaminophenyl)ethyl (2E) 3-{4-[(3-methoxy 4-(4,4,4-trifluorobutoxy)benzoyl)oxy]phenyl} acrylate
2-(3,5-Diaminophenyl)ethyl (2E) 3-{4-[(3-methoxy 4-(5,5,5-trifluoropentyloxy)benzoyl)oxy]phenyl} acrylate
2-(3,5-Diaminophenyl)ethyl (2E) 3-{4-[(3-methoxy 4-(4,4,5,5,5-pentafluoropentoxy)benzoyl)oxy] phenyl}acrylate
2-(3,5-Diaminophenyl)ethyl (2E) 3-{4-[(3-methoxy4-(1,1,2,2-tetrafluoroethoxy)benzoyl)oxy] phenyl}acrylate
2-(3,5-Diaminophenyl)ethyl (2E) 3-{4-[(3-methoxy 4-(4,4,4-trifluorobutanoyl)oxy)benzoyl]oxy} phenyl}acrylate
2-(3,5-Diaminophenyl)ethyl (2E) 3-{4-[(4-trifluoromethoxybenzoyl)oxy]-3-methoxyphenyl}acrylate
2-(3,5-Diaminophenyl)ethyl (2E) 3-{4-[(4-(2,2,2-trifluoroethoxy)benzoyl)oxy]-3-methoxyphenyl} acrylate
2-(3,5-Diaminophenyl)ethyl (2E) 3-{4-[(4-(4,4,4-trifluorobutoxy)benzoyl)oxy]-3-methoxyphenyl} acrylate
2-(3,5-Diaminophenyl)ethyl (2E) 3-{4-[(4-(5,5,5-trifluoropentyloxy)benzoyl)oxy]-3-methoxyphenyl} acrylate
2-(3,5-Diaminophenyl)ethyl (2E) 3-{4-[(4-(4,4,5,5,5-pentafluoropentoxy)benzoyl)oxy]-3-methoxyphenyl}acrylate
2-(3,5-Diaminophenyl)ethyl (2E) 3-{4-[(4-(1,1,2,2-tetrafluoroethoxy)benzoyl)oxy] -3-methoxyphenyl}acrylate
2-(3,5-Diaminophenyl)ethyl (2E) 3-{4-[(4-(4,4,4-trifluorobutanoyl)oxy)benzoyl]oxy}-3-methoxyphenyl}acrylate
2-(3,5-Diaminophenyl)ethyl (2E) 3-{4-[(4-trifluoromethoxyphenoxy)carbonyl]phenyl}acrylate
2-(3,5-Diaminophenyl)ethyl (2E) 3-{4-[(4-(2,2,2-trifluoroethoxy)phenoxy)carbonyl]phenyl} acrylate
2-(3,5-Diaminophenyl)ethyl (2E) 3-{4-[(4-(4,4,4-trifluorobutoxy)phenoxy)carbonyl]phenyl} acrylate
2-(3,5-Diaminophenyl)ethyl (2E) 3-{4-[(4-(5,5,5-trifluoropentyloxy)phenoxy)carbonyl]phenyl} acrylate
2-(3,5-Diaminophenyl)ethyl (2E) 3-{4-[(4-(4,4,5,5,5-pentafluoropentoxy)phenoxy)carbonyl] phenyl}acrylate
2-(3,5-Diaminophenyl)ethyl (2E) 3-{4-[(4-(1,1,2,2-tetrafluoroethoxy)phenoxy)carbonyl] phenyl}acrylate
2-(2,5-Diaminophenyl)ethyl (2E) 3-{4-[(4-trifluoromethoxybenzoyl)oxy]phenyl}acrylate
2-(2,5-Diaminophenyl)ethyl (2E) 3-{4-[(4-(2,2,2-trifluoroethoxy)benzoyl)oxy]phenyl} acrylate
2-(2,5-Diaminophenyl)ethyl (2E) 3-{4-[(4-(4,4,4-trifluorobutoxy)benzoyl)oxy]phenyl} acrylate
2-(2,5-Diaminophenyl)ethyl (2E) 3-{4-[(4-(5,5,5-trifluoropentyloxy)benzoyl)oxy]phenyl} acrylate
2-(2,5-Diaminophenyl)ethyl (2E) 3-{4-[(4-(4,4,5,5,5-pentafluoropentoxy)benzoyl)oxy] phenyl}acrylate
2-(2,5-Diaminophenyl)ethyl (2E) 3-{4-[(4-(1,1,2,2-tetrafluoroethoxy)benzoyl)oxy] phenyl}acrylate
2-(2,5-Diaminophenyl)ethyl (2E) 3-{4-[(4-(4,4,4-trifluorobutanoyl)oxy)benzoyl]oxy] phenyl}acrylate

2-(2,4-Diaminophenyl)ethyl (2E) 3-{4-[(4-trifluoromethoxybenzoyl)oxy]phenyl}acrylate
2-(2,4-Diaminophenyl)ethyl (2E) 3-{4-[(4-(2,2,2-trifluoroethoxy)benzoyl)oxy]phenyl} acrylate
2-(2,4-Diaminophenyl)ethyl (2E) 3-{4-[(4-(4,4,4-trifluorobutoxy)benzoyl)oxy]phenyl} acrylate
2-(2,4-Diaminophenyl)ethyl (2E) 3-{4-[(4-(5,5,5-trifluoropentyloxy)benzoyl)oxy]phenyl} acrylate
2-(2,4-Diaminophenyl)ethyl (2E) 3-{4-[(4-(2,2,3,3,3-pentafluoropropyloxy) benzoyl)oxy] phenyl}acrylate
2-(2,4-Diaminophenyl)ethyl (2E) 3-{4-[(4-(2,2,3,4,4,4-hexafluorobutoxy)benzoyl)oxy] phenyl}acrylate
2-(2,4-Diaminophenyl)ethyl (2E) 3-{4-[(4-(3,3,4,4,5,5,6,6,6-nonafluorohexyloxy) benzoyl)oxy] phenyl}acrylate
2-(2,4-Diaminophenyl)ethyl (2E) 3-{4-[(4-(1,1,2,2-tetrafluoroethoxy)benzoyl)oxy] phenyl}acrylate
2-(2,4-Diaminophenyl)ethyl (2E) 3-{4-[(4-(1,1,2,2-tetrafluoropropoxy)benzoyl)oxy] phenyl}acrylate
2-(2,4-Diaminophenyl)ethyl (2E) 3-{4-[(4-(4,4,5,5,6,6,6-heptafluorohexyloxy)benzoyl)oxy] phenyl}acrylate
2-(2,4-Diaminophenyl)ethyl (2E) 3-{4-[(4-(5,5,6,6,6-pentafluorohexyl)benzoyl)oxy] phenyl}acrylate
2-(2,4-Diaminophenyl)ethyl (2E) 3-{4-[(4-(4,4,4-trifluorobutanoyl)oxy)benzoyl]oxy} phenyl}acrylate
2-(2,4-Diaminophenyl)ethyl (2E) 3-{4-[(3-fluoro-4-(4,4,4-trifluorobutoxy)benzoyl) oxy]phenyl} acrylate
2-(2,4-Diaminophenyl)ethyl (2E) 3-{4-[(4-(5,5,5-trifluoropentoxy)benzoyl)oxy] phenyl}acrylate
2-(2,4-Diaminophenyl)ethyl (2E) 3-{4-[(3,4-di(4,4,4-trifluorobutoxy)benzoyl) oxy]phenyl} acrylate
2-(2,4-Diaminophenyl)ethyl (2E) 3-{4-[(4-(4,4,5,5,5-pentafluoropentoxy carbonyl)phenoxy)carbonyl] phenyl}acrylate
2-(2,4-Diaminophenyl)ethyl (2E) 3-{4-[(4-[(4,4,4-trifluorobutoxy)carbonyl]amino) benzoyl]oxy} phenyl}acrylate
2-(2,4-Diaminophenyl)ethyl (2E) 3-{4-[(4-[ (4,4,5,5,5-pentafluoropentoxy)carbonyl]amino) benzoyl]oxy} phenyl}acrylate
2-(2,4-Diaminophenyl)ethyl (2E) 3-{4-[(3-methoxy-4-trifluoromethoxybenzoyl)oxy]phenyl}acrylate
2-(2,4-Diaminophenyl)ethyl (2E) 3-{4-[(3-methoxy 4-(2,2,2-trifluoroethoxy)benzoyl)oxy]phenyl} acrylate
2-(2,4-Diaminophenyl)ethyl (2E) 3-{4-[(3-methoxy 4-(4,4,4-trifluorobutoxy)benzoyl)oxy]phenyl} acrylate
2-(2,4-Diaminophenyl)ethyl (2E) 3-{4-[(3-methoxy 4-(5,5,5-trifluoropentyloxy)benzoyl)oxy]phenyl} acrylate
2-(2,4-Diaminophenyl)ethyl (2E) 3-{4-[(3-methoxy 4-(4,4,5,5,5-pentafluoropentoxy)benzoyl)oxy] phenyl}acrylate
2-(2,4-Diaminophenyl)ethyl (2E) 3-{4-[(3-methoxy 4-(1,1,2,2-tetrafluoroethoxy)benzoyl)oxy] phenyl}acrylate
2-(2,4-Diaminophenyl)ethyl (2E) 3-{4-[(3-methoxy 4-(4,4,4-trifluorobutanoyl)oxy)benzoyl]oxy} phenyl}acrylate
2-(2,4-Diaminophenyl)ethyl (2E) 3-{4-[(4-(4,4,4-trifluorobutoxy)benzoyl)oxy]-3-methoxy phenyl} acrylate
2-(2,4-Diaminophenyl)ethyl (2E) 3-{4-[(4-(5,5,5-trifluoropentyloxy)benzoyl)oxy]-3-methoxyphenyl} acrylate
2-(2,4-Diaminophenyl)ethyl (2E) 3-{4-[(4-(4,4,5,5,5-pentafluoropentoxy)benzoyl)oxy]-3-methoxyphenyl}acrylate
2-(2,4-Diaminophenyl)ethyl (2E) 3-{4-[(4-(1,1,2,2-tetrafluoroethoxy)benzoyl)oxy] -3-methoxyphenyl}acrylate
2-(2,4-Diaminophenyl)ethyl (2E) 3-{4-[(4-(4,4,4-trifluorobutanoyl)oxy)benzoyl]oxy}-3-methoxyphenyl}acrylate
2-(2,4-Diaminophenyl)ethyl (2E) 3-{4-[(4-(4,4,4-trifluorobutoxy)phenoxy)carbonyl]phenyl} acrylate
2-(2,4-Diaminophenyl)ethyl (2E) 3-{4-[(4-(5,5,5-trifluoropentyloxy)phenoxy)carbonyl]phenyl} acrylate
2-(2,4-Diaminophenyl)ethyl (2E) 3-{4-[(4-(4,4,5,5,5-pentafluoropentoxy)phenoxy)carbonyl] phenyl}acrylate
2-(2,4-Diaminophenyl)ethyl (2E) 3-{4-[(4-(1,1,2,2-tetrafluoroethoxy)phenoxy)carbonyl] phenyl}acrylate
3-(3,5-Diaminophenyl)propyl (2E) 3-{4-[(4-trifluoromethoxybenzoyl)oxy]phenyl} acrylate
3-(3,5-Diaminophenyl)propyl (2E) 3-{4-[(4-(2,2,2-trifluoroethoxy)benzoyl)oxy]phenyl} acrylate
3-(3,5-Diaminophenyl)propyl (2E) 3-{4-[(4-(4,4,4-trifluorobutoxy)benzoyl)oxy]phenyl} acrylate
3-(3,5-Diaminophenyl)propyl (2E) 3-{4-[(4-(5,5,5-trifluoropentyloxy)benzoyl)oxy]phenyl} acrylate
3-(3,5-Diaminophenyl)propyl (2E) 3-{4-[(4-(4,4,5,5,5-pentafluoropentoxy)benzoyl)oxy] phenyl}acrylate
3-(3,5-Diaminophenyl)propyl (2E) 3-{4-[(4-(1,1,2,2-tetrafluoroethoxy)benzoyl)oxy] phenyl}acrylate
3-(3,5-Diaminophenyl)propyl (2E) 3-{4-[(4-(4,4,4-trifluorobutanoyl)oxy)benzoyl]oxy} phenyl}acrylate 3-(2,4-Diaminophenyl)propyl (2E) 3-{4-[(4-(4,4,4-trifluorobutoxy)benzoyl)oxy]phenyl} acrylate
3-(2,4-Diaminophenyl)propyl (2E) 3-{4-[(4-(4,4,5,5,5-pentafluoropentoxy)benzoyl)oxy] phenyl}acrylate
3-(2,4-Diaminophenyl)propyl (2E) 3-{4-[(4-(1,1,2,2-tetrafluoroethoxy)benzoyl)oxy] phenyl}acrylate
3-(2,4-Diaminophenyl)propyl (2E) 3-{4-[(4-(4,4,4-trifluorobutanoyl)oxy)benzoyl]oxy} phenyl}acrylate
6-(2,4-Diaminophenyl)hexyl (2E) 3-{4-[(4-(4,4,4-trifluorobutoxy)benzoyl)oxy]phenyl} acrylate
6-(2,4-Diaminophenyl)hexyl (2E) 3-{4-[(4-(4,4,5,5,5-pentafluoropentoxy)benzoyl)oxy] phenyl}acrylate
6-(2,4-Diaminophenyl)hexyl (2E) 3-{4-[(4-(1,1,2,2-tetrafluoroethoxy)benzoyl)oxy] phenyl}acrylate
2,2-bis(4-aminobenzyl)-1,3 di[(2E)-3-{4-[(4-(4,4,4-trifluorobutoxy)benzoyl)oxy]phenyl}prop-2-enoyl] propanediol
2,2-bis(4-aminobenzyl)-1,3 di[(2E) 3-{4-[(4-trifluoromethoxybenzoyl)oxy]phenyl}prop-2-enoyl] propanediol
2,2-bis(4-aminobenzyl)-1,3 di[(2E) 3-{4-[(4-(2,2,2-trifluoroethoxy)benzoyl)oxy]phenyl} prop-2-enoyl] propanediol
2,2-bis(4-aminobenzyl)-1,3 di[(2E) 3-{4-[(4-(4,4,4-trifluorobutoxy)benzoyl)oxy]phenyl} prop-2-enoyl] propanediol
2,2-bis(4-aminobenzyl)-1,3 di[(2E) 3-{4-[(4-(5,5,5-trifluoropentyloxy)benzoyl)oxy]phenyl} prop-2-enoyl] propanediol
2,2-bis(4-aminobenzyl)-1,3 di[(2E) 3-{4-[(4-(4,4,5,5,5-pentafluoropentoxy)benzoyl)oxy] phenyl}prop-2-enoyl] propanediol
2,2-bis(4-aminobenzyl)-1,3 di[(2E) 3-{4-[(4-(1,1,2,2-tetrafluoroethoxy)benzoyl)oxy] phenyl}prop-2-enoyl] propanediol

2,2-bis(4-aminobenzyl)-1,3 di[(2E) 3-{4-[(4-(4,4,4-trifluorobutanoyl)oxy)benzoyl]oxy} phenyl}prop-2-enoyl] propanediol

2,2-bis(4-aminobenzyl)-1,3 di[(2E) 3-{4-[(3-methoxy-4-trifluoromethoxybenzoyl)oxy]phenyl}prop-2-enoyl] propanediol

2,2-bis(4-aminobenzyl)-1,3 di[(2E) 3-{4-[(3-methoxy 4-(2,2,2-trifluoroethoxy)benzoyl)oxy]phenyl} prop-2-enoyl] propanediol

2,2-bis(4-aminobenzyl)-1,3 di[(2E) 3-{4-[(3-methoxy 4-(4,4,4-trifluorobutoxy)benzoyl)oxy]phenyl} prop-2-enoyl] propanediol

2,2-bis(4-aminobenzyl)-1,3 di[(2E) 3-{4-[(3-methoxy 4-(5,5,5-trifluoropentyloxy)benzoyl)oxy]phenyl} prop-2-enoyl] propanediol

2,2-bis(4-aminobenzyl)-1,3 di[(2E) 3-{4-[(3-methoxy 4-(4,4,5,5,5-pentafluoropentoxy)benzoyl)oxy] phenyl}prop-2-enoyl] propanediol

2,2-bis(4-aminobenzyl)-1,3 di[(2E) 3-{4-[(3-methoxy 4-(1,1,2,2-tetrafluoroethoxy)benzoyl)oxy] phenyl}prop-2-enoyl] propanediol

2,2-bis(4-aminobenzyl)-1,3 di[(2E) 3-{4-[(3-methoxy 4-(4,4,4-trifluorobutanoyl)oxy)benzoyl]oxy} phenyl}prop-2-enoyl] propanediol

2,2-bis(4-aminobenzyl)-1,3 di[(2E) 3-{4-[(4-trifluoromethoxybenzoyl)oxy]-3-methoxyphenyl}prop-2-enoyl] propanediol

2,2-bis(4-aminobenzyl)-1,3 di[(2E) 3-{4-[(4-(2,2,2-trifluoroethoxy)benzoyl)oxy]-3-methoxyphenyl} prop-2-enoyl] propanediol

2,2-bis(4-aminobenzyl)-1,3 di[(2E) 3-{4-[(4-(4,4,4-trifluorobutoxy)benzoyl)oxy]-3-methoxy phenyl} prop-2-enoyl] propanediol

2,2-bis(4-aminobenzyl)-1,3 di[(2E) 3-{4-[(4-(5,5,5-trifluoropentyloxy)benzoyl)oxy]-3-methoxyphenyl} prop-2-enoyl] propanediol

2,2-bis(4-aminobenzyl)-1,3 di[(2E) 3-{4-[(4-(4,4,5,5,5-pentafluoropentoxy)benzoyl)oxy]-3-methoxyphenyl}prop-2-enoyl] propanediol

2,2-bis(4-aminobenzyl)-1,3 di[(2E) 3-{4-[(4-(1,1,2,2-tetrafluoroethoxy)benzoyl)oxy] -3-methoxyphenyl}prop-2-enoyl] propanediol

2,2-bis(4-aminobenzyl)-1,3 di[(2E) 3-{4-[(4-(4,4,4-trifluorobutanoyl)oxy)benzoyl]oxy}-3-methoxyphenyl}prop-2-enoyl] propanediol

2,2-bis(4-aminobenzyl)-1,3 di[(2E) 3-{4-[(4-trifluoromethoxyphenoxy)carbonyl]phenyl}prop-2-enoyl] propanediol

2,2-bis(4-aminobenzyl)-1,3 di[(2E) 3-{4-[(4-(2,2,2-trifluoroethoxy)phenoxy)carbonyl]phenyl} prop-2-enoyl] propanediol

2,2-bis(4-aminobenzyl)-1,3 di[(2E) 3-{4-[(4-(4,4,4-trifluorobutoxy)phenoxy)carbonyl]phenyl} prop-2-enoyl] propanediol

2,2-bis(4-aminobenzyl)-1,3 di[(2E) 3-{4-[(4-(5,5,5-trifluoropentyloxy)phenoxy)carbonyl]phenyl} prop-2-enoyl] propanediol

2,2-bis(4-aminobenzyl)-1,3 di[(2E) 3-{4-[(4-(4,4,5,5,5-pentafluoropentoxy)phenoxy)carbonyl] phenyl}prop-2-enoyl] propanediol

2,2-bis(4-aminobenzyl)-1,3 di[(2E) 3-{4-[(4-(1,1,2,2-tetrafluoroethoxy)phenoxy)carbonyl] phenyl}prop-2-enoyl] propanediol

6-{[((2E)-3-{4-[(4-(4,4,4-trifluorobutoxy)benzoyl)oxy]phenyl}prop-2-enoyl)oxy]}hexyl 3,5-Diamino-4-[6-{[((2E)-3-{4-[(4-(4,4,4-trifluorobutoxy)benzoyl)oxy]phenyl}prop-2-enoyl)oxy]}hexyloxy]benzoate

2,2'-bis[(2E)-3-{4-[(4-(4,4,4-trifluorobutoxy)benzoyl)oxy]phenyl}prop-2-enoyl]methyl 4,4'-Diamino 1,1'-biphenyl

2,2'-bis[(2E) 3-{4-[(4-trifluoromethoxybenzoyl)oxy]phenyl}prop-2-enoyl]methyl 4,4'-diamino 1,1'-biphenyl

2,2'-bis[(2E) 3-{4-[(4-(2,2,2-trifluoroethoxy)benzoyl)oxy]phenyl} prop-2-enoyl]methyl 4,4'-diamino 1,1'-biphenyl

2,2'-bis[(2E) 3-{4-[(4-(4,4,4-trifluorobutoxy)benzoyl)oxy]phenyl} prop-2-enoyl] methyl 4,4'-diamino 1,1'-biphenyl

2,2'-bis[(2E) 3-{4-[(4-(5,5,5-trifluoropentyloxy)benzoyl)oxy]phenyl} prop-2-enoyl] methyl 4,4'-diamino 1,1'-biphenyl

2,2'-bis[(2E) 3-{4-[(4-(1,1,2,2-tetrafluoroethoxy)benzoyl)oxy] phenyl}prop-2-enoyl] methyl 4,4'-diamino 1,1'-biphenyl

2,2'-bis[(2E) 3-{4-[(4-(4,4,4-trifluorobutanoyl)oxy)benzoyl]oxy} phenyl]prop-2-enoyl] methyl 4,4'-diamino 1,1'-biphenyl

2,2'-bis[(2E) 3-{4-[(3-methoxy-4-trifluoromethoxybenzoyl)oxy]phenyl}prop-2-enoyl] methyl 4,4'-diamino 1,1'-biphenyl

2,2'-bis[(2E) 3-{4-[(3-methoxy 4-(2,2,2-trifluoroethoxy)benzoyl)oxy]phenyl} prop-2-enoyl] methyl 4,4'-diamino 1,1'-biphenyl

2,2'-bis[(2E) 3-{4-[(3-methoxy 4-(4,4,4-trifluorobutoxy)benzoyl)oxy]phenyl} prop-2-enoyl] methyl 4,4'-diamino 1,1'-biphenyl

2,2'-bis[(2E) 3-{4-[(3-methoxy 4-(5,5,5-trifluoropentyloxy)benzoyl)oxy]phenyl} prop-2-enoyl] methyl 4,4'-diamino 1,1'-biphenyl

2,2'-bis[(2E) 3-{4-[(3-methoxy 4-(4,4,5,5,5-pentafluoropentoxy)benzoyl)oxy] phenyl}prop-2-enoyl] methyl 4,4'-diamino 1,1'-biphenyl

2,2'-bis[(2E) 3-{4-[(3-methoxy 4-(1,1,2,2-tetrafluoroethoxy)benzoyl)oxy] phenyl}prop-2-enoyl] methyl 4,4'-diamino 1,1'-biphenyl

2,2'-bis[(2E) 3-{4-[(3-methoxy 4-(4,4,4-trifluorobutanoyl)oxy)benzoyl]oxy} phenyl]prop-2-enoyl] methyl 4,4'-diamino 1,1'-biphenyl

2,2'-bis[(2E) 3-{4-[(4-trifluoromethoxybenzoyl)oxy]-3-methoxyphenyl}prop-2-enoyl] methyl 4,4'-diamino 1,1'-biphenyl

2,2'-bis[(2E) 3-{4-[(4-(2,2,2-trifluoroethoxy)benzoyl)oxy]-3-methoxyphenyl} prop-2-enoyl] methyl 4,4'-diamino 1,1'-biphenyl

2,2'-bis[(2E) 3-{4-[(4-(4,4,4-trifluorobutoxy)benzoyl)oxy]-3-methoxy phenyl} prop-2-enoyl] methyl 4,4'-diamino 1,1'-biphenyl

2,2'-bis[(2E) 3-{4-[(4-(5,5,5-trifluoropentyloxy)benzoyl)oxy]-3-methoxyphenyl} prop-2-enoyl] methyl 4,4'-diamino 1,1'-biphenyl

2,2'-bis[(2E) 3-{4-[(4-(4,4,5,5,5-pentafluoropentoxy)benzoyl)oxy]-3-methoxyphenyl}prop-2-enoyl] methyl 4,4'-diamino 1,1'-biphenyl

2,2'-bis[(2E) 3-{4-[(4-(1,1,2,2-tetrafluoroethoxy)benzoyl)oxy] -3-methoxyphenyl}prop-2-enoyl] methyl 4,4'-diamino 1,1'-biphenyl

2,2'-bis[(2E) 3-{4-[(4-(4,4,4-trifluorobutanoyl)oxy)benzoyl]oxy}-3-methoxyphenyl]prop-2-enoyl] methyl 4,4'-diamino 1,1'-biphenyl

2,2'-bis[(2E) 3-{4-[(4-trifluoromethoxyphenoxy)carbonyl]phenyl}prop-2-enoyl]methyl 4,4'-diamino 1,1'-biphenyl

2,2'-bis[(2E) 3-{4-[(4-(2,2,2-trifluoroethoxy)phenoxy)carbonyl]phenyl} prop-2-enoyl]methyl 4,4'-diamino 1,1'-biphenyl

2,2'-bis[(2E) 3-{4-[(4-(4,4,4-trifluorobutoxy)phenoxy)carbonyl]phenyl} prop-2-enoyl]methyl 4,4'-diamino 1,1'-biphenyl

2,2'-bis[(2E) 3-{4-[(4-(5,5,5-trifluoropentyloxy)phenoxy)carbonyl]phenyl} prop-2-enoyl methyl 4,4'-diamino 1,1'-biphenyl

2,2'-bis[(2E) 3-{4-[(4-(4,4,5,5,5-pentafluoropentoxy)phenoxy)carbonyl] phenyl}prop-2-enoyl]methyl 4,4'-diamino 1,1'-biphenyl

2,2'-bis[(2E) 3-{4-[(4-(1,1,2,2-tetrafluoroethoxy)phenoxy)carbonyl] phenyl}prop-2-enoyl]methyl 4,4'-diamino 1,1'-biphenyl

2-(2,4-Diaminophenyl)- 1,3 di[(2E)-3-{4-[(4-(4,4,4-trifluorobutoxy) benzoyl)oxy]phenyl}prop-2-enoyl] propanediol

2-(2,4-Diaminophenyl)- 1,3 di[(2E)-3-{4-[(4-(4,4,4-trifluorobutoxy) benzoyl)oxy]phenyl}prop-2-enoyl] propanediol

2-(2,4-Diaminophenyl)-1,3 di[(2E) 3-{4-[(4-trifluoromethoxybenzoyl)oxy]phenyl}prop-2-enoyl] propanediol

2-(2,4-Diaminophenyl)-1,3 di[(2E) 3-{4-[(4-(2,2,2-trifluoroethoxy)benzoyl)oxy]phenyl} prop-2-enoyl] propanediol

2-(2,4-Diaminophenyl)-1,3 di[(2E) 3-{4-[(4-(4,4,4-trifluorobutoxy)benzoyl)oxy]phenyl} prop-2-enoyl] propanediol

2-(2,4-Diaminophenyl)-1,3 di[(2E) 3-{4-[(4-(5,5,5-trifluoropentyloxy)benzoyl)oxy]phenyl} prop-2-enoyl] propanediol

2-(2,4-Diaminophenyl)-1,3 di[(2E) 3-{4-[(4-(4,4,5,5,5-pentafluoropentoxy)benzoyl)oxy] phenyl}prop-2-enoyl] propanediol

2-(2,4-Diaminophenyl)-1,3 di[(2E) 3-{4-[(4-(1,1,2,2-tetrafluoroethoxy)benzoyl)oxy] phenyl}prop-2-enoyl] propanediol

2-(2,4-Diaminophenyl)-1,3 di[(2E) 3-{4-[(4-(4,4,4-trifluorobutanoyl)oxy)benzoyl]oxy} phenyl}prop-2-enoyl] propanediol

2-(2,4-Diaminophenyl)-1,3 di[(2E) 3-{4-[(3-methoxy-4-trifluoromethoxybenzoyl)oxy]phenyl}prop-2-enoyl] propanediol

2-(2,4-Diaminophenyl)-1,3 di[(2E) 3-{4-[(3-methoxy 4-(2,2,2-trifluoroethoxy)benzoyl)oxy]phenyl} prop-2-enoyl] propanediol

2-(2,4-Diaminophenyl)-1,3 di[(2E) 3-{4-[(3-methoxy 4-(4,4,4-trifluorobutoxy)benzoyl)oxy]phenyl} prop-2-enoyl] propanediol

2-(2,4-Diaminophenyl)-1,3 di[(2E) 3-{4-[(3-methoxy 4-(5,5,5-trifluoropentyloxy)benzoyl)oxy]phenyl} prop-2-enoyl] propanediol

2-(2,4-Diaminophenyl)-1,3 di[(2E) 3-{4-[(3-methoxy 4-(4,4,5,5,5-pentafluoropentoxy)benzoyl)oxy] phenyl}prop-2-enoyl] propanediol

2-(2,4-Diaminophenyl)-1,3 di[(2E) 3-{4-[(3-methoxy 4-(1,1,2,2-tetrafluoroethoxy)benzoyl)oxy] phenyl}prop-2-enoyl] propanediol

2-(2,4-Diaminophenyl)-1,3 di[(2E) 3-{4-[(3-methoxy 4-(4,4,4-trifluorobutanoyl)oxy)benzoyl]oxy} phenyl}prop-2-enoyl] propanediol

2-(2,4-Diaminophenyl)-1,3 di[(2E) 3-{4-[(4-trifluoromethoxybenzoyl)oxy]-3-methoxyphenyl}prop-2-enoyl] propanediol

2-(2,4-Diaminophenyl)-1,3 di[(2E) 3-{4-[(4-(2,2,2-trifluoroethoxy)benzoyl)oxy]-3-methoxyphenyl} prop-2-enoyl] propanediol

2-(2,4-Diaminophenyl)-1,3 di[(2E) 3-{4-[(4-(4,4,4-trifluorobutoxy)benzoyl)oxy]-3-methoxy phenyl} prop-2-enoyl] propanediol

2-(2,4-Diaminophenyl)-1,3 di[(2E) 3-{4-[(4-(5,5,5-trifluoropentyloxy)benzoyl)oxy]-3-methoxyphenyl} prop-2-enoyl] propanediol

2-(2,4-Diaminophenyl)-1,3 di[(2E) 3-{4-[(4-(4,4,5,5,5-pentafluoropentoxy)benzoyl)oxy]-3-methoxyphenyl}prop-2-enoyl] propanediol

2-(2,4-Diaminophenyl)-1,3 di[(2E) 3-{4-[(4-(1,1,2,2-tetrafluoroethoxy)benzoyl)oxy] -3-methoxyphenyl}prop-2-enoyl] propanediol

2-(2,4-Diaminophenyl)-1,3 di[(2E) 3-{4-[(4-(4,4,4-trifluorobutanoyl)oxy)benzoyl]oxy}-3-methoxyphenyl}prop-2-enoyl] propanediol

2-(2,4-Diaminophenyl)-1,3 di[(2E) 3-{4-[(4-trifluoromethoxyphenoxy)carbonyl]phenyl}prop-2-enoyl] propanediol

2-(2,4-Diaminophenyl)-1,3 di[(2E) 3-{4-[(4-(2,2,2-trifluoroethoxy)phenoxy)carbonyl]phenyl} prop-2-enoyl] propanediol

2-(2,4-Diaminophenyl)-1,3 di[(2E) 3-{4-[(4-(4,4,4-trifluorobutoxy)phenoxy)carbonyl]phenyl} prop-2-enoyl] propanediol

2-(2,4-Diaminophenyl)-1,3 di[(2E) 3-{4-[(4-(5,5,5-trifluoropentyloxy)phenoxy)carbonyl]phenyl} prop-2-enoyl] propanediol

2-(2,4-Diaminophenyl)-1,3 di[(2E) 3-{4-[(4-(4,4,5,5,5-pentafluoropentoxy)phenoxy)carbonyl] phenyl}prop-2-enoyl] propanediol

2-(2,4-Diaminophenyl)-1,3 di[(2E) 3-{4-[(4-(1,1,2,2-tetrafluoroethoxy)phenoxy)carbonyl] phenyl}prop-2-enoyl] propanediol

2-(3,5-Diaminophenyl)-1,3 di[(2E) 3-{4-[(4-trifluoromethoxybenzoyl)oxy]phenyl}prop-2-enoyl] propanediol

2-(3,5-Diaminophenyl)-1,3 di[(2E) 3-{4-[(4-(2,2,2-trifluoroethoxy)benzoyl)oxy]phenyl} prop-2-enoyl] propanediol

2-(3,5-Diaminophenyl)-1,3 di[(2E) 3-{4-[(4-(4,4,4-trifluorobutoxy)benzoyl)oxy]phenyl} prop-2-enoyl] propanediol

2-(3,5-Diaminophenyl)-1,3 di[(2E) 3-{4-[(4-(5,5,5-trifluoropentyloxy)benzoyl)oxy]phenyl} prop-2-enoyl] propanediol

2-(3,5-Diaminophenyl)-1,3 di[(2E) 3-{4-[(4-(4,4,5,5,5-pentafluoropentoxy)benzoyl)oxy] phenyl}prop-2-enoyl] propanediol

2-(3,5-Diaminophenyl)-1,3 di[(2E) 3-{4-[(4-(1,1,2,2-tetrafluoroethoxy)benzoyl)oxy] phenyl}prop-2-enoyl] propanediol

2-(3,5-Diaminophenyl)-1,3 di[(2E) 3-{4-[(4-(4,4,4-trifluorobutanoyl)oxy)benzoyl]oxy} phenyl}prop-2-enoyl] propanediol

2-(3,5-Diaminophenyl)-1,3 di[(2E) 3-{4-[(3-methoxy-4-trifluoromethoxybenzoyl)oxy]phenyl}prop-2-enoyl] propanediol

2-(3,5-Diaminophenyl)-1,3 di[(2E) 3-{4-[(3-methoxy 4-(2,2,2-trifluoroethoxy)benzoyl)oxy]phenyl} prop-2-enoyl] propanediol

2-(3,5-Diaminophenyl)-1,3 di[(2E) 3-{4-[(3-methoxy 4-(4,4,4-trifluorobutoxy)benzoyl)oxy]phenyl} prop-2-enoyl] propanediol

2-(3,5-Diaminophenyl)-1,3 di[(2E) 3-{4-[(3-methoxy 4-(5,5,5-trifluoropentyloxy)benzoyl)oxy]phenyl} prop-2-enoyl] propanediol

2-(3,5-Diaminophenyl)-1,3 di[(2E) 3-{4-[(3-methoxy 4-(4,4,5,5,5-pentafluoropentoxy)benzoyl)oxy] phenyl}prop-2-enoyl] propanediol

2-(3,5-Diaminophenyl)-1,3 di[(2E) 3-{4-[(3-methoxy 4-(1,1,2,2-tetrafluoroethoxy)benzoyl)oxy] phenyl}prop-2-enoyl] propanediol

2-(3,5-Diaminophenyl)-1,3 di[(2E) 3-{4-[(3-methoxy 4-(4,4,4-trifluorobutanoyl)oxy)benzoyl]oxy} phenyl}prop-2-enoyl] propanediol

2-(3,5-Diaminophenyl)-1,3 di[(2E) 3-{4-[(4-trifluoromethoxybenzoyl)oxy]-3-methoxyphenyl}prop-2-enoyl] propanediol

2-(3,5-Diaminophenyl)-1,3 di[(2E) 3-{4-[(4-(2,2,2-trifluoroethoxy)benzoyl)oxy]-3-methoxyphenyl} prop-2-enoyl] propanediol

2-(3,5-Diaminophenyl)-1,3 di[(2E) 3-{4-[(4-(4,4,4-trifluorobutoxy)benzoyl)oxy]-3-methoxy phenyl} prop-2-enoyl] propanediol

2-(3,5-Diaminophenyl)-1,3 di[(2E) 3-{4-[(4-(5,5,5-trifluoropentyloxy)benzoyl)oxy]-3-methoxyphenyl} prop-2-enoyl] propanediol

2-(3,5-Diaminophenyl)-1,3 di[(2E) 3-{4-[(4-(4,4,5,5,5-pentafluoropentoxy)benzoyl)oxy]-3-methoxyphenyl}prop-2-enoyl] propanediol

2-(3,5-Diaminophenyl)-1,3 di[(2E) 3-{4-[(4-(1,1,2,2-tetrafluoroethoxy)benzoyl)oxy] -3-methoxyphenyl}prop-2-enoyl] propanediol

2-(3,5-Diaminophenyl)-1,3 di[(2E) 3-{4-[(4-(4,4,4-trifluorobutanoyl)oxy)benzoyl]oxy}-3-methoxyphenyl}prop-2-enoyl] propanediol

2-(3,5-Diaminophenyl)-1,3 di[(2E) 3-{4-[(4-trifluoromethoxyphenoxy)carbonyl]phenyl}prop-2-enoyl] propanediol

2-(3,5-Diaminophenyl)-1,3 di[(2E) 3-{4-[(4-(2,2,2-trifluoroethoxy)phenoxy)carbonyl]phenyl} prop-2-enoyl] propanediol

2-(3,5-Diaminophenyl)-1,3 di[(2E) 3-{4-[(4-(4,4,4-trifluorobutoxy)phenoxy)carbonyl]phenyl} prop-2-enoyl] propanediol

2-(3,5-Diaminophenyl)-1,3 di[(2E) 3-{4-[(4-(5,5,5-trifluoropentyloxy)phenoxy)carbonyl]phenyl} prop-2-enoyl] propanediol

2-(3,5-Diaminophenyl)-1,3 di[(2E) 3-{4-[(4-(4,4,5,5,5-pentafluoropentoxy)phenoxy)carbonyl] phenyl}prop-2-enoyl] propanediol

2-(3,5-Diaminophenyl)-1,3 di[(2E) 3-{4-[(4-(1,1,2,2-tetrafluoroethoxy)phenoxy)carbonyl] phenyl}prop-2-enoyl] propanediol.

The diamine compounds are prepared according to methods known in the art or according to a process comprising contacting a compound of formula (XIV)

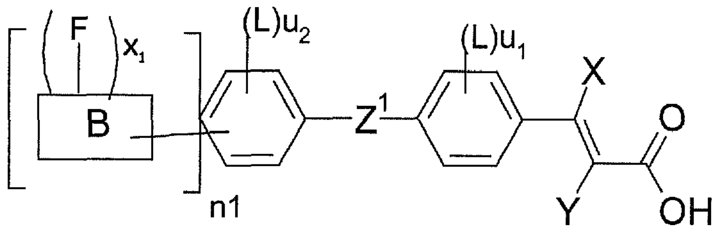

(XIV),

preferably

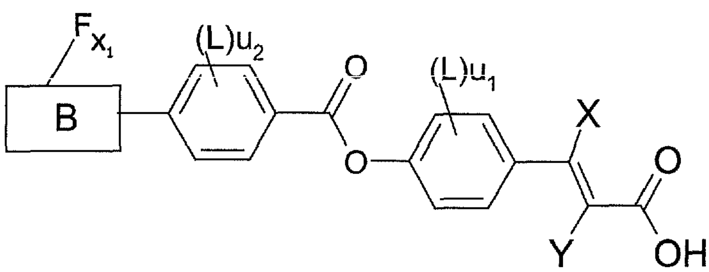

(XV)

with a dinitro compound of formula (XVI)

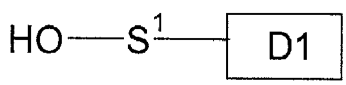

(XVI)

and then converting the obtained dinitro compound of formula (XVIa)

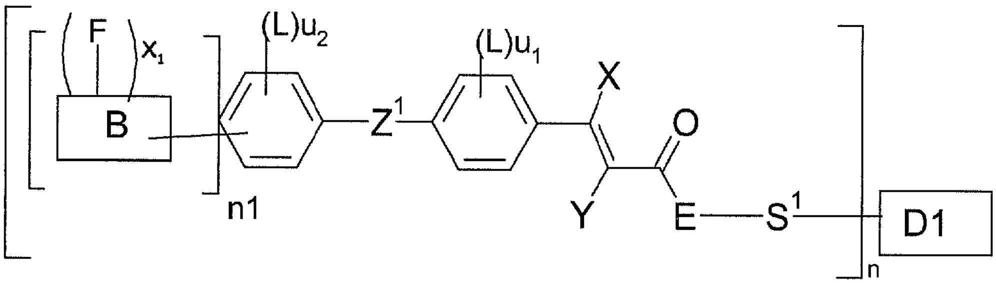

(XVIa)

in the corresponding diamino compound of formula (XII)

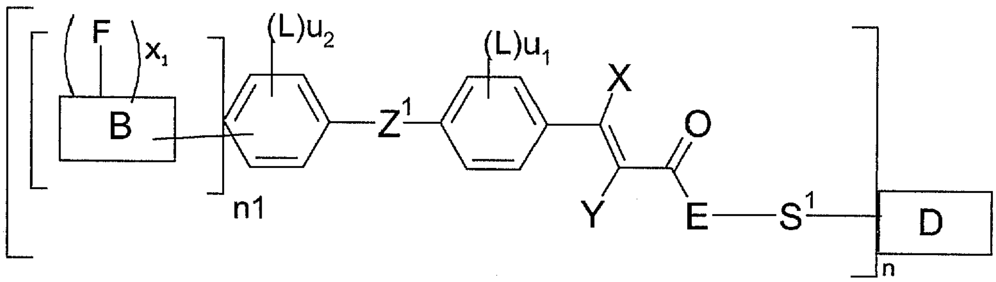

wherein

F, $x_1$, $n_1$, n, B, D, , X, Y, $Z^1$, L, $u_1$, $u_2$ and $S^1$ have the same meanings and preferences as given above, and wherein D1 has the same meaning and preferences as D as given above, with the proviso that the two amino groups of D are replaced by two nitro groups.

The reaction between compounds (XIV) and (XVI) can be conducted in many known ways (see J. March, Advanced Organic Chemistry, second edition, pages 363 and 365).

The present invention also concerns method for the preparation of a polymer through polycondensation reaction of a diamine (I) with one or more tetracarboxylic acid anhydrides, preferably of the general formula (V) as given below, optionally in the presence of one or more additional other diamines.

Preferably, the tetracarboxylic acid anhydride is of formula (V)

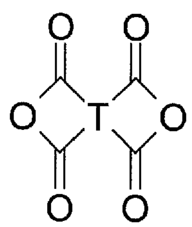

(V)

wherein:

T represents a tetravalent organic radical.

The tetravalent organic radical T is preferably derived from an aliphatic, alicyclic or aromatic tetracarboxylic acid dianhydride.

Preferred examples of aliphatic or alicyclic tetracarboxylic acid dianhydrides are:

1,1,4,4-butanetetracarboxylic acid dianhydride,
ethylenemaleic acid dianhydride,
1,2,3,4-cyclobutanetetracarboxylic acid dianhydride,
1,2,3,4-cyclopentanetetracarboxylic acid dianhydride,
2,3,5-tricarboxycyclopentylacetic acid dianhydride,
3,5,6-tricarboxynorbornylacetic acid dianhydride,
2,3,4,5-tetrahydrofurantetracarboxylic acid dianhydride,
rel-[1 S,5R,6R]-3-oxabicyclo[3.2.1]octane-2,4-dione-6-spiro-3'-(tetrahydrofuran2',5'-dione),
4-(2,5-dioxotetrahydrofuran-3-yl)tetrahydronaphthalene-1,2-dicarboxylicacid dianhydride,
5-(2,5-dioxotetrahydrofuran-3-yl)-3-methyl-3-cyclohexene-1,2-dicarboxylic-acid dianhydride,
bicyclo[2.2.2]oct-7-ene-2,3,5,6-tetracarboxylic acid dianhydride,
bicyclo[2.2.2]octane-2,3,5,6-tetracarboxylic acid dianhydride,
1,8-dimethylbicyclo[2.2.2]oct-7-ene-2,3,5,6-tetracarboxylic acid dianhydride, pyromellitic acid dianhydride,
3,3',4,4'-benzophenonetetracarboxylic acid dianhydride,
4,4'-oxydiphthalic acid dianhydride,
3,3',4,4'-diphenylsulfonetetracarboxylic acid dianhydride,
1,4,5,8-naphthalenetetracarboxylic acid dianhydride,
2,3,6,7-naphthalenetetracarboxylic acid dianhydride,
3,3',4,4'-dimethyldiphenylsilanetetracarboxylic acid dianhydride,
3,3',4,4'-tetraphenylsilanetetracarboxylic acid dianhydride,
1,2,3,4-furantetracarboxylic acid dianhydride,
4,4'-bis(3,4-dicarboxyphenoxy)diphenyl sulfide dianhydride,
4,4'-bis(3,4-dicarboxyphenoxy)diphenyl sulfone dianhydride,
4,4'-bis(3,4-dicarboxyphenoxy)diphenylpropane dianhydride,
3,3',4,4'-biphenyltetracarboxylic acid dianhydride,
ethylene glycol bis(trimellitic acid) dianhydride,
4,4'-(1,4-phenylene)bis(phthalic acid) dianhydride,
4,4'-(1,3-phenylene)bis(phthalic acid) dianhydride,
4,4'-(hexafluoroisopropylidene)diphthalic acid dianhydride,
4,4'-oxydi(1,4-phenylene)bis(phthalic acid) dianhydride, and
4,4'-methylenedi(1,4-phenylene)bis(phthalic acid) dianhydride.

Preferred examples of aromatic tetracarboxylic acid dianhydrides are:

pyromellitic acid dianhydride,
3,3',4,4'-benzophenonetetracarboxylic acid dianhydride,
4,4'-oxydiphthalic acid dianhydride,
3,3',4,4'-diphenylsulfonetetracarboxylic acid dianhydride,
1,4,5,8-naphthalenetetracarboxylic acid dianhydride,
2,3,6,7-naphthalenetetracarboxylic acid dianhydride,
3,3',4,4'-dimethyldiphenylsilanetetracarboxylic acid dianhydride,
3,3',4,4'-tetraphenylsilanetetracarboxylic acid dianhydride,
1,2,3,4-furantetracarboxylic acid dianhydride,
4,4'-bis(3,4-dicarboxyphenoxy)diphenyl sulfide dianhydride,
4,4'-bis(3,4-dicarboxyphenoxy)diphenyl sulfone dianhydride,
4,4'-bis(3,4-dicarboxyphenoxy)diphenylpropane dianhydride,
3,3',4,4'-biphenyltetracarboxylic acid dianhydride,
ethylene glycol bis(trimellitic acid) dianhydride,
4,4'-(1,4-phenylene)bis(phthalic acid) dianhydride,
4,4'-(1,3-phenylene)bis(phthalic acid) dianhydride,
4,4'-(hexafluoroisopropylidene)diphthalic acid dianhydride,
4,4'-oxydi(1,4-phenylene)bis(phthalic acid) dianhydride,
4,4'-methylenedi(1,4-phenylene)bis(phthalic acid) dianhydride,

and the like.
More preferably the tetracarboxylic acid dianhydrides used to form the tetravalent organic radical T are selected from:

1,2,3,4-cyclobutanetetracarboxylic acid dianhydride,
1,2,3,4-cyclopentanetetracarboxylic acid dianhydride,
2,3,5-tricarboxycyclopentylacetic acid dianhydride,
5-(2,5-dioxotetrahydrofuran-3-yl)-3-methyl-3-cyclohexene-1,2-dicarboxylic acid dianhydride,
4-(2,5-dioxotetrahydrofuran-3-yl)tetrahydronaphthalene-1,2-dicarboxylic acid dianhydride,
4,4'-(hexafluoroisopropylidene)diphthalic acid dianhydride and bicyclo[2.2.2]oct-7-ene-2,3,5,6-tetracarboxylic acid dianhydride.

The polymer, copolymer or oligomer, especially the polyamic acid, polyamic acid ester and polyimide and mixtures thereof may be prepared in line with known methods, such as those described in Plast. Eng. 36 (1996), (Polyimides, fundamentals and applications), Marcel Dekker, Inc.

For example, the amidisation, poly-condensation reaction for the preparation of the polyamic acids is carried out in solution in a polar aprotic organic solvent, such as $\gamma$-butyrolactone, N,N-dimethylacetamide, 2-butoxyethanol (BC), N-methylpyrrolidone or N,N-dimethylformamide. In most cases equimolar amounts of the anhydride and the diamine are used, i.e. one amino group per anhydride group. If it is desired to stabilize the molecular weight of the polymer, copolymer or oligomer, it is possible for that purpose to either add an excess or a less-than-stoichiometric amount of one of the two components or to add a mono-functional compound in the form of a dicarboxylic acid monoanhydride or in the form of a monoamine. Examples of such mono-functional compounds are maleic acid anhydride, phthalic acid anhydride, aniline and the like. Preferably the reaction is carried out at temperatures of less than 100 °C.

The imidisation, cyclisation of the polyamic acids to form the polyimides can be carried out by heating, i.e. by condensation with removal of water or by other imidisation reactions using appropriate reagents.
Partially imidisation is achieved for example, if the imidisation is carried out purely thermally, the imidisation of the polyamic acids may not always be complete, i.e. the resulting polyimides may still contain proportions of polyamic acid. Complete imidisation reactions are carried out at temperatures between 60 and 250 °C, preferably at temperatures of less than 200 °C.

In order to achieve imidisation at lower temperatures additional reagents that facilitate the removal of water are added to the reaction mixture. Such reagents are, for example, mixtures consisting of acid anhydrides, such as acetic acid anhydride, propionic acid anhydride, phthalic acid anhydride, trifluoroacetic acid anhydride or tertiary amines, such as triethylamine, trimethylamine, tributylamine, pyridine, N,N-dimethylaniline, lutidine, collidine etc. The amount of aforementioned additional reagents that facilitate the removal of water is preferably at least four equivalents of acid anhydride and two equivalents of amine per equivalent of polyamic acid to be condensed.
The imidization degree of each polymer used in the liquid crystal alignment agent of the invention can be arbitrarily adjusted by controlling the catalyst amount, reaction time and reaction temperature employed in production of the polymer. In the present description, "imidization degree" of polymer refers to a proportion (expressed in %) of the number of recurring units of polymer forming an imide ring or an isoimide ring to the number of total recurring units of polymer. In the present description, the imidization degree of a polyamic acid not subjected to dehydration and ring closure is 0%. The imidization degree of each polymer is determined by dissolving the polymer in deuterated dimethyl sulfoxide, subjecting the resulting solution to $^1$H-NMR measurement at a room temperature using tetramethylsilane as a standard substance, and calculating from the following formula.

$$\text{Imidization degree (\%)} = 1-(A^1/A2 \times B)x100$$

$A^1$: Peak area based on protons of NH groups (in the vicinity of 10ppm)
$A^2$: Peak area based of one proton of acrylate double bond (in the vicinity of 6.5 ppm).
B: Proportion of the number of acrylate protons to one proton of NH group in the polymer precursor

The imidization degree is usually in the range of 1 to 99%, preferably 5 to 50%, more preferably 10 to 40%.

Preferably, the present invention concerns a method, wherein subsequent to the poly-condensation cyclisation with removal of water is carried out thermally under formation of a polyimide.

More preferably, the present invention concerns a method, wherein imidisation is carried out prior or after the application of the polymer to a support.

A further preferred embodiment of the invention relates to photoalignment materials comprising coumarine- and quinoline-groups as for example described in US 6,201,087 B1, and are incorporated by reference herewith.
More preferred are those of US 6,201,087, claims 1-14, more preferred are those enumerated in examples 1-10 in col. 10, line 6 - col. 31, line 54;

A further preferred embodiment of the invention relates to photoalignment materials comprising cyanostilbene-groups are for example described in PCT/CH Application 2006/000499, filed September 15, 2006.
More preferred are those of the general formula (I)

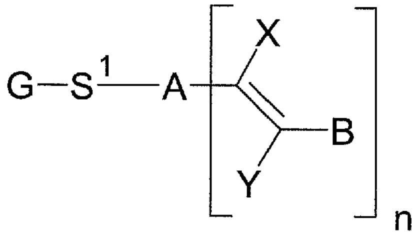

(IV)

wherein

A and B each independently are a ring system of 5 to 40 atoms, wherein each ring system includes at least one unsaturation directly connected via electron conjugation ($\pi$-$\pi$ bonding) to the double bond shown in formula (IV), wherein the ring system may be unsubstituted or mono- or poly-substituted by a halogen atom, a hydroxyl group and/or a polar group like nitro, nitrile or a carboxy group, and/or a cyclic, straight-chain or branched alkyl residue having from 1 to 30 carbon atoms, which is unsubstituted, mono- or poly-substituted by methyl, fluorine and/or chlorine, wherein one or more, preferably non-adjacent $-CH_2-$ groups independently may be replaced by a group selected from -O-, -CO- -CO-O-, -O-CO-, $-NR^1-$, $-NR^1-CO-$, $-CO-NR^1-$, $-NR^1-CO-O-$, $-O-CO-NR^1-$, $-NR^1-CO-NR^1-$, -CH=CH-, -C≡C-, -O-CO-O- and $-Si(CH_3)_2-O-Si(CH_3)_2-$, an aromatic or an alicyclic group, wherein $R^1$ is a hydrogen atom or lower alkyl; and/or an acryloyloxy, alkoxy, alkylcarbonyloxy, alkyloxocarbonyloxy, methacryloyloxy, vinyl, allyl, vinyloxy and/or allyloxy group, having from 1 to 20 carbon atoms, preferably having from 1 to 10 carbon atoms,
$S^1$ is a single covalent bond or a spacer unit;
n is 1, 2 or 3;
X and Y represent groups of which one is a hydrogen atom and the other is an electron withdrawing group, which preferably is selected from the groups $-COR^2$, $-COOR^2$, $-COSR^2$,$-CO-NR^2$, $-SOR^2$, $-SOCF_3$, $-SO_2CF_2COR^2$, $-SOOR^2$, -C≡S, $-NO_2$, $-CF_3$, -CN, wherein $R^2$ is a hydrogen atom or a straight-chain or branched alkyl or alkylene group, having from 1 to 16 carbon atoms, wherein one or more, preferably non-adjacent $-CH_2-$ groups independently may be replaced by a group, selected from -O-, -CO-, -CO- O-, -O- CO-, -C=C-, -C≡C- , or by an optionally substituted alkyl, or by a polymerizable group,
G is a hydrogen atom, optionally substituted alkyl, or a polymerizable group,

with the proviso, that when Y is -CN and A is unsubstituted phenylene, then B may not be phenylene para-substituted by-CN, $-NO_2$ or -COOH; and
with the proviso that if ring system A is 1,4-phenylene, which is unsubstituted or substituted with halogen, cyano and/or nitro, and ring system B is 1,4-phenylene, which is unsubstituted or substituted with halogen, cyano and/or nitro, or pyrimidine-2,5-diyl, pyridine-2,5-diyl, 2,5-thiophenylenediyl, 2,5-furanylene, 1,4-naphthylene or 2,6-naphthylene, then X is different from -CN and -COO-alkyl having from 1 to 12 carbon atoms.
Particularly preferred photoalignment materials are polymers of:

8-{4-[2-cyano-2-(3,4-dimethoxyphenyl)vinyl]-2-methoxyphenoxy}octyl methacrylate
6-{4-[2-cyano-2-phenylvinyl]phenoxy}hexyl methacrylate
8-{4-[2-cyano-2-phenylvinyl]phenoxy}octyl methacrylate
11-{4-[2-cyano-2-phenylvinyl]phenoxy}undecyl methacrylate
8-{4-[2-cyano-2-(4-methoxyphenyl)vinyl]phenoxy}octyl methacrylate
6-{4-[2-cyano-2-(4-hexoxyphenyl)vinyl]phenoxy}hexyl methacrylate
8-{4-[2-cyano-2-(4-hexoxyphenyl)vinyl]phenoxy}octyl methacrylate
11-{4-[2-cyano-2-(3,4,5-trimethoxyphenyl)vinyl]phenoxy}undecyl methacrylate
8-{4-[2-cyano-2-(4-methoxyphenyl)vinyl]-2-methoxyphenoxy}octyl methacrylate
11-{4-[2-cyano-2-(2-naphtyl)-vinyl]phenoxy}undecyl methacrylate
8-{4-[1-cyano-2-(1-naphtyl)-vinyl]phenoxy}octyl methacrylate
8-{4-[2-cyano-2-(3,4,5-trimethoxyphenyl)vinyl]-2-methoxyphenoxy}octyl methacrylate
11-{4-[2-cyano-2-(2,3,4,5,6-pentafluorophenyl)vinyl]phenoxy}undecyl methacrylate

8-{2-[(2-cyano-2-phenylvinyl]-4-[2-cyano-2-phenylvinyl]phenoxy}octyl methacrylate
3-[4-(allyloxy)phenyl]-2-phenylacrylonitrile
3-[4-(allyloxy)phenyl]-2-(3,4-dimethoxyphenyl)acrylonitrile
2-{4-[2-cyano-2-(3,4-dimethoxyphenyl)vinyl]-2-methoxyphenoxy}ethyl methacrylate
2-{4-[2-cyano-2-(3,4-dimethoxyphenyl)vinyl]-2-methoxyphenoxy}ethoxyethyl methacrylate
4-{4-[2-cyano-2-(3,4-dimethoxyphenyl)vinyl]-2-methoxyphenoxy}butyl methacrylate
6-{4-[2-cyano-2-(3,4-dimethoxyphenyl)vinyl]-2-methoxyphenoxy}hexyl methacrylate
11-{4-[2-cyano-2-(3,4-dimethoxyphenyl)vinyl]-2-methoxyphenoxy}undecyl methacrylate
8-{4-[2-cyano-2-(3,4-dimethoxyphenyl)vinyl]-phenoxy}octyl methacrylate
8-{4-[2-cyano-2-phenylvinyl]-2-methoxyphenoxy}octyl methacrylate
8-{4-[2-cyano-2-(4-nitrophenyl)vinyl]-2-methoxyphenoxy}octyl methacrylate
8-{4-[2-cyano-2-(4-nitrophenyl)vinyl]phenoxy}octyl methacrylate
8-{4-[2-cyano-2-(2-methoxyphenyl)vinyl]-2-methoxyphenoxy}octyl methacrylate
6-(methacryloyloxy)hexyl-2,3-diphenylacrylate
2-(methacryloyloxy)1-methylethyl-2,3-diphenylacrylate.

A further preferred embodiment of the invention relates to photoalignment materials comprising

- chalcone-groups as described in J. Photopolym. Sci. Technol., 11, 187 (1998), diphenylacetylene groups as described in Chem. Mat., 11, 1293 (1999),
- benzylidenephtalimidine as described in Macromol. Chem. Phys., 199, 375 (1998),
- phenylenediacryloyl groups as described in Japan. J. Appl. Phys., 1, 37, 2620 (1998),
- stilbazole derivatives groups as described in J. Photopolym. Sci. Technol., 12, 279 (1999),
- azo derivatives groups as described in Chemical Reviews, 100, 1847 (2000)), which are incorporated with reference herewith.

In the context of the present invention the term "solvent" has the meaning and preferences as given below: The solvent or solvent mixture used in the present application may be any compound that can dissolve the composition according to the invention. At least one solvent such as a common polar solvent or a nonpolar solvent may be used. The solvents which are particularly preferred are those leading to a good coatability or printability of the solution of the material for the photo-alignment layer to the substrate such as glass.

Non-polar solvents are compounds that have low dielectric constants and are not miscible with water, such as for example hexane, benzene, toluene, diethyl ether, chloroform, ethyl acetate, dichloromethane.

Polar solvent are aprotic or protic.

Polar aprotic solvents are solvents that share ion dissolving power with protic solvents but lack an acidic hydrogen. These solvents generally have high dielectric constants and high polarity. Examples are 1,4-dioxane, tetrahydrofuran (THF) , acetone, acetonitrile (MeCN), dimethylformamide (DMF), dimethyl sulfoxide (DMSO), N-methylpyrrolidone (NMP), ethylpyrrolidone, N-vinylpyrrolidone, 2-butoxyethanol (BC), gamma.-butyrolactone (BL), N-methylmorpholine, gamma.-butyrolactone, acetonitrile, ethylcarbitol, butylcarbitol, ethylcarbitol acetate, ethylene glycol, propylene glycol monoacetate, propylene glycol diacetate, dipropylene glycol, and dipropylene glycol monomethyl ether, chlorobenzene, tetrahydrofuran, butylcellosolve, cyclopentanone (CP), methylethylketone (MEK), ethyl acetate (EA), anisole (AN), cyclohexanone (CHN), methyl isobutyl ketone (MIBK), 1-methoxy-2-propanol acetate (MPA), N,N-dimethyl-formamide (DMF), dichloromethane, gamma-butyrolactone (BL), and mixtures thereof.

Polar protic solvents are solvents, which contain dissociable H+, such as hydrogen fluoride, are called a protic solvent. The molecules of such solvents can donate an H+ (proton). Conversely, aprotic solvents cannot donate hydrogen bonds. Common characteristics of protic solvents are to display hydrogen bonding, to have an acidic hydrogen (although they may be very weak acids), to be able to stabilize ions (cations by unshared free electron pairs, anions by hydrogen bonding). Examples are acetic acid, n-butanol, isopropanol, n-propanol, ethanol, methanol, formic acid and water.

Preferred solvents are gamma.-butyrolactone (BL), N-methylpyrrolidone (NMP), N-ethylpyrrolidone, 2-butoxyethanol (BC), N-vinylpyrrolidone, N,N-dimethylacetamide, N,N-dimethylformamide, ethylcellosolve, butylcellosolve, ethylcarbitol, butylcarbitol, ethylcarbitol acetate, ethylene glycol, propylene glycol monoacetate, propylene glycol diacetate, dipropylene glycol, and dipropylene glycol monomethyl ether, chlorobenzene, tetrahydrofuran, N-methylpyrrolidone (NMP), butylcellosolve, cyclopentanone (CP), methylethylketone (MEK), ethyl acetate (EA), anisole (AN), cyclohexanone (CHN), methyl isobutyl ketone (MIBK), 1-methoxy-2-propanol acetate (MPA), N,N-dimethylformamide (DMF), dichloromethane, gamma-butyrolactone (BL), and mixtures thereof.

More preferred solvents are gamma.-butyrolactone (BL), N-methylpyrrolidone (NMP), N-ethylpyrrolidone, N-vinylpyrrolidone, N,N-dimethylacetamide, N,N-dimethylformamide, ethylcellosolve, methylethylketone (MEK), cyclohexanone (CHN), 2-butoxyethanol (BC), butylcellosolve, ethylcarbitol, butylcarbitol, ethylcarbitol acetate, ethylene glycol, propylene glycol monoacetate, propylene glycol diacetate, dipropylene glycol, and dipropylene glycol monomethyl ether, chlorobenzene, tetrahydrofuran, mixtures thereof.

Most preferred are methylethylketone (MEK), cyclohexanone (CHN), butyrolactone (BL), N-methylpyrrolidone (NMP), dimethylformamide and 2-butoxyethanol (BC).

Especially most preferred are butyrolactone (BL), N-methylpyrrolidone (NMP), dimethylformamide and 2-butoxyethanol (BC).

A more preferred embodiment of the present invention relates to a method for the manufacturing of uniform and defect free liquid crystal aligning layers by applying onto a substrate a composition having a viscosity in the range of 1 to 14 mPas, which comprises at least one liquid crystal photoalignment material and at least one solvent, which is selected from the group of solvents as following:

butyrolactone (BL), N-methylpyrrolidone (NMP), dimethylformamide and 2-butoxyethanol (BC) and/or
wherein the amount of the liquid crystal photoalignment material in the composition with the solvent is in the range of 99-90% by weight, preferably 99-95% by weight and more preferably 99 to 97% by weight.

A further more preferred embodiment of the present invention relates to a method for the manufacturing of uniform and defect free liquid crystal aligning layers by applying onto a substrate compositions as described above; preferably having a viscosity in the range of 1 to 14 mPas, which comprises at least one liquid crystal photoalignment material and at least one solvent; wherein the liquid crystal photoalignment material is a polymer comprising diamine (I) and tetracarboxylic acid anhydride as described above, and with all preferences described above.

More preferred liquid crystal photoalignment materials are polymers comprising diamine (I) which comprises in preferred embodiment of the present invention a compound residue (Ia)

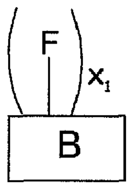

(Ia)

represents a straight-chain or branched $C_1$-$C_{16}$fluoralkyl group with terminal units selected from $-CF_2H$ and $-CF_3$, preferably selected from $-CF_2H$ or $-CF_3$, $-CF_2CF_3$, $-CF_2CHF_2$, $-(CF_2)_2CF_3$, $-(CF_2)_2CHF_2$, $-(CF_2)_3CHF_2$, $-(CF_2)_3CF_3$, $-CF(CF_3)_2$ and $-CF_2(CHF)CF_3$.

Preferably B is a straight-chain or branched $C_1$-$C_{12}$alkyl, wherein one or more, preferably non-adjacent, $-CH_2$- group(s) may independently from each other be replaced by a group selected from
-O-, -CO, -CO-O-, -O-CO-, $-NR^1$-, $-NR^1$-CO-, -CO-$NR^1$-, $-NR^1$-CO-O-, -O-CO-$NR^1$-, $-NR^1$-CO-$NR^1$, -CH=CH-, -C≡C-, -O-CO-O-, and $-Si(CH_3)_2$-O-$Si(CH_3)_2$-, an aromatic and an alicyclic group; and wherein:
$R^1$ represents a hydrogen atom or $C_1$-$C_6$alkyl;
with the proviso that oxygen atoms are not directly linked to each other.

More preferably, B is a straight-chain or branched $C_1$-$C_{12}$alkyl, wherein one or more, preferably non-adjacent, $-CH_2$- group(s) may be replaced by a group selected from from -O-, -CO, -CO-O-, -O-CO-, $-NR^1$-, $-NR^1$-CO-, -CO-$NR^1$- or -CH=CH- wherein:
$R^1$ represents a hydrogen atom or $C_1$-$C_6$alkyl;
with the proviso that oxygen atoms are not directly linked to each other.

Most preferably, B is a straight-chain or branched $C_1$-$C_8$alkyl, wherein one or more, preferably non-adjacent, $-CH_2$- group(s) may be replaced by a group selected from from -O-, -CO, -CO-O-, -O-CO-, $-NR^1$-, $-NR^1$-CO-, -CO-$NR^1$- or -CH=CH- wherein: $R^1$ represents a hydrogen atom or $C_1$-$C_6$alkyl;
with the proviso that oxygen atoms are not directly linked to each other.

Especially most preferably, B is a straight-chain or branched $C_1$-$C_8$alkyl, wherein one or more, preferably non-adjacent, the $-CH_2$- group may be replaced by a group selected from -O-, -CO-, -CO-O-, -O-CO-, and -CH=CH-, with the proviso that oxygen atoms are not directly linked to each other.

Preferably the compound residue (Ia) is:

trifluoromethyl; 2,2,2-trifluoroethyl; difluoromethylen; pentafluoroethyl; 2,2-tetrafluoroethyl; 3,2-tetrafluoroethyl;

3,3,3-trifluoropropyl; 2,2,3,3-tetrafluoropropyl;

2,2,3,3,3-pentafluoropropyl; hexafluoropropyl; heptafluoropropyl; 4,4,4-trifluorobutyl;

tetrafluorobutyl; 3,3,4,4,4-pentafluorobutyl; hexafluorobutyl; 2,2,3,3,4,4,4-heptafluorobutyl; 5,5,5-trifluoropentyl; tetrafluoropentyl; 4,4,5,5,5-pentafluoropentyl;

hexafluoropentyl; 3,3,4,4,5,5,5-heptafluoropentyl; 6,6,6-trifluorohexyl; tetrafluorohexyl;

5,5,6,6,6-pentafluorohexyl; hexafluorohexyl; 4,4,5,5,6,6,6-heptafluorohexyl; nonafluorohexyl;

1-trifluoro-1,2,2,2-tertafluoroethoxy, 2-trifluoro-2,3,3,3-tertafluoropropoxy, 3-trifluoro-3,4,4,4-tertafluorobutoxy, 4-trifluoro-4,5,5,5-tertafluoropentoxy, 5-trifluoro-5,6,6,6-tertafluorohexoxy, 6-trifluoro-6,7,7,7-tertafluoroheptoxy, 7-trifluoro-7,8,8,8-tertafluorononoxy;

fluoroalkoxy derivatives, such as
trifluoromethoxy; 2,2,2-trifluoroethoxy; difluoromethoxy; pentafluoroethoxy; 1,1,2,2-tetrafluoroethoxy; 2,2,2,1-tetrafluoroethoxy; 3,3,3-trifluoropropoxy; 2,2,3,3-tetrafluoropropoxy; 2,2,3,3,3-pentafluoropropoxy; hexafluoropropoxyl; heptafluoropropoxy; 4,4,4-trifluorobutoxy; tetrafluorobutoxy; 3,3,4,4,4-pentafluorobutoxy; 2,2,3,3,4,4-hexafluorobutoxy; 2,2,3,3,4,4,4-heptafluorobutoxy; 5,5,5-trifluoropentoxy; tetrafluoropentoxy; 4,4,5,5,5-pentafluoropentoxy; hexafluoropentoxy; 3,3,4,4,5,5,5-heptafluoropentoxy; 6,6,6-trifluorohexoxy; tetrafluorohexoxy; 5,5,6,6,6-pentafluorohexoxy; hexafluorohexoxy; 4,4,5,5,6,6,6-heptafluorohexoxy; nonafluorohexoxy;

trifluoromethylen carbamate; 2,2,2-trifluoroethylen carbamate; difluoromethylen carbamate; pentafluoroethylen carbamate; 2,2-tetrafluorethylen carbamate; 3,2-tetrafluorethylen carbamate; 3,3,3-trifluoropropylen carbamate; 2,2,3,3-tetrafluoropropylen carbamate; 2,2,3,3,3-pentafluoropropylen carbamate; hexafluoropropylen carbamate; heptafluoropropylen carbamate; 4,4,4-trifluorobutylen carbamate; tetrafluorobutylen carbamate; 3,3,4,4,4-pentafluorobutylen carbamate; hexafluorobutylen carbamate; 2,2,3,3,4,4,4-heptafluorobutylen carbamate; 5,5,5-trifluoropentylen carbamate; tetrafluoropentylen carbamate; 4,4,5,5,5-pentafluoropentylen carbamate; hexafluoropentylen carbamate; 3,3,4,4,5,5,5-heptafluoropentylen carbamate; 6,6,6-trifluorohexylen carbamate; tetrafluorohexylen carbamate; 5,5,6,6,6-pentafluorohexylen carbamate; hexafluorohexylen carbamate; 4,4,5,5,6,6,6-heptafluorohexylen carbamate; nonafluorohexylen carbamate;

fluoroalkyloyloxy derivatives, such as
trifluoromethyloyloxy; 2,2,2-trifluoroethyloyloxy; pentafluoroethyloyloxy; 1,1,2,2-tetrafluorethyloyloxy; 2,2,2,1-tetrafluorethyloyloxy; 3,3,3-trifluoropropyloyloxy; tetrafluoropropyloyloxy; 2,2,3,3,3-pentafluoropropyloyloxy; hexafluoropropyloyloxy; 1,1,2,2,3,3,3-heptafluoropropyloyloxy; 4,4,4-trifluorobutyloyloxy; tetrafluorobutyloyloxy; 3,3,4,4,4-pentafluorobutyloyloxy; hexafluorobutyloyloxy; 2,2,3,3,4,4,4-heptafluorobutyloyloxy; 5,5,5-trifluoropentyloyloxy; tetrafluoropentyloyloxy; 4,4,5,5,5-pentafluoropentyloyloxy; hexafluoropentyloyloxy; 3,3,4,4,5,5,5-heptafluoropentyloyloxy; 6,6,6-trifluorohexyloyloxy; tetrafluorohexyloyloxy; 5,5,6,6,6-pentafluorohexyloyloxy; hexafluorohexyloyloxy; 4,4,5,5,6,6,6-heptafluorohexyloyloxy;
trifluoroacetyl; nonafluorohexyloyloxy;

4,4,4-trifluorobut-2-enyl; 5,5,5-trifluoropent-1-enyl; 6,6,6-trifluorohex-1-enyl; 7,7,7-trifluorohept-1-enyl; trifluoroacetylaminomethoxy; trifluoroacetylaminoethoxy; trifluoroacetylaminopropoxy; trifluoroacetylaminobutoxy; 2-fluoroethyl; 3-fluoropropyl; 4-fluorobutyl; 5-fluoropentyl; 6-fluorohexyl; 2-fluoroethoxy; 3-fluoropropoxy; 4-fluorobutoxy; 5-fluoropentoxy; 6-fluorohexyloxy; 4-fluorobut-1-enyl; 5-fluoropent-1-enyl; 6-fluorohex-1-enyl; 7-fluorohept-1-enyl; 4,4,4-trifluoro-3-(trifluoromethyl)butoxy; 4,5,5-trifluoropent-4-enoxy; 4,5,5-trifluoropent-4-enoyloxy; 5,6,6-trifluorohex-5-enoxy or5,6,6-trifluoropent-5-enoyloxy.

Especially preferred are fluoroalkoxy, preferably trifluor- and pentafluoro fluoroalkoxy derivatives, especially preferred are 5,5,5-trifluoropentoxy and 4,4,5,5,5-pentafluoropentoxy.
Most preferred are polymers comprising diamine (I) which comprises pentafluoro derivates of formula (Ia) of these polymers, those having a $C_3$- or $C_5$-alkylgroup, preferably a $C_5$-alkylgroup, in the terminal position of the diamine (I).
Surfactants are chemicals that have a tendency to adsorb physically at a surface or interface, thereby altering the energy relationship at the interface. Thereby surfactants change the surface tension.
Suitable surfactants are wetting-, or levelling-; blocking-, scratch-, slip-, mar- or abrasion-restistant-; deaerating-, defoaming-, hydrophobing-, dispersing-, rheology controlling- agents; and

preferred are wetting-, levelling-; blocking- scratch-, slip-, mar- or abrasion-restistant-; dispersing- and rheology controlling- agents; and
more preferred are wetting-, dispersing-, levelling-, blocking- scratch-restistant-agents; and
most preferred are surfactants wetting-, dispersing-, levelling- agents. Especially most preferred are wetting- and levelling agents.

The surfactants with the above cited properties are well known in the art.

Preferably, the surfactants are non-polymeric or polymeric; reactive or non-reactive, saturated or unsaturated; non-ionic, amphotheric; anionic or cationic compounds.
In the context of the present invention reactive has the meaning of crosslinkable, polymerisable or dimerisable.
Preferred surfactants are polymeric and crosslinkable, polymerisable or dimerisable.

Amphoteric are for example alkyl ampho(di)acetates, amido betaines or alkyl betaines.

Cationic surfactants are for example alkyl dimethylamines, alkyl amidopropylamines, alkyl imidazoline derivatives, quaternised amine ethoxylates, quaternary ammonium compounds;

Polymers are in the context of the present invention oligomeric, copolymeric or homopolymeric compounds.

More preferably the polymers are homo- or copolymers (block, statistic, grafted, branched) or unreactive or reactive, such as crosslinkable, polymerisable or dimerisable surfactants. Most preferred are reactive, such as crosslinkable surfactants.

Examples of non-polymeric surfactants are organic sulphonate derivatives, such as alkyl phenol ether sulphates, alpha olefin sulphonates, aromatic hydrocarbon sulphonic acids, salts and blends, naphthalene sulphonates, condensed naphthalene sulphonates, fatty alcohol sulphates, di-alkyl sulpho-succinates, mono-alkyl sulphosuccinates, alkyl sulphosuccinamates, di-alkyl sulphosuccinates, lecithine derivates such as sojalecithine; tenside derivates, such as cationic, anionic or amphoteric tensides especially fatty acid ester derivatives; carbonic acid ester or ether derivates, such as hydroxyfunctional carbonic acid ester or ether derivates, alkyl ether phosphates, alkyl ether carboxylic acids and salts, alkyl ether sulphates; alkyl phosphates, alkyl benzene sulphonic acids and salts, alkyl phenol ether phosphates, alkyl phenol ether sulphates, aromatic hydrocarbon sulphonic acids, salts and blends.

Preferred non-polymeric surfactants are carbonic acid ester or ether derivates, especially, Disperbyk®-108.

Examples of polymeric surfactants are for example organic polymers, such as amide polymers, imide polymers, polyurethane, silicon/siloxane polymers, fluoro polymers or acrylate polymers, polyether polycarbonic acid structure (also containing organo-modified polysiloxane or an amine derivative), or non-ionic dispersing polymers.

Organic polymer surfactants are for example hydrocarbon surfactants, such as solvent blend of high-boiling aromatics, ketones and esters, or fame (<u>F</u>atty <u>A</u>cid <u>M</u>odified <u>E</u>mulsifiers).
Fame is based upon fatty acid chemistry, having polar heads based on tertiary amines, such as for example fatty acid modified polyester, aliphatic polyether with acidic groups, solution of fatty acid modified, polyester in water.

Silicon/siloxane polymers are for example reactive or non-reactive polysiloxane, such as
organically modified polysiloxane
organically modified polysiloxane
fluorocarbon modified polysiloxane
solvent-free modified polysiloxane
modified polysiloxane emulsion
polysiloxane
polysiloxane copolymer
polyether siloxane copolymer
isocyanate-terminated polysiloxane
polysiloxane modified with unsaturated terminal groups
polysiloxane modified polyisocyanates
emulsion of polyether siloxane copolymer
polysiloxane based products containing fumed silica
silicone acrylate

Fluoro polymers are for example
fluorocarbon modified polymer
fluorocarbon modified polyacrylate
fluorosilicone
polymeric fluorocarbon compound

Acrylate polymers are for example
acrylic polymer
ammonium polyacrylate
sodium polyacrylate
ammonium polyacrylate copolymer

sodium polyacrylate copolymer;

Non-ionic dispersing polymers are for example amine oxides
alkyl polysaccharides
block copolymers
castor oil ethoxylates
ceto-oleyl alcohol ethoxylates
ceto-stearyl alcohol ethoxylates
decyl alcohol ethoxylates
dinonyl phenol ethoxylates
dodecyl phenol ethoxylates
end-capped ethoxylates
ether amine derivatives
ethoxylated alkanolamides
ethylene glycol esters
fatty acid alkanolamides
fatty alcohol alkoxylates
lauryl alcohol ethoxylates
mono-branched alcohol ethoxylates
natural alcohol ethoxylates
monyl phenol ethoxylates
octyl phenol ethoxylates
oleyl amine ethoxylates
random copolymer alkoxylates
sorbitan ester ethoxylates
stearic acid ethoxylates
stearyl amine ethoxylates
synthetic alcohol ethoxylates
tall oil fatty acid ethoxylates
tallow amine ethoxylates
trid tridecanol ethoxylates

Preferred polymeric surfactants are non-ionic polymeric surfactants, especially silicone or siloxane polymers and most preferred is silicone acrylate, especially, Tego®Rad 2500.

A further preferred embodiment of the present invention concerns compositions of 2 or more than 2 surfactants.

Typical suppliers for surfactants having wetting and levelling properties are for example ADD APT, Air Products, Akzo-Nobel, Akzo-Nobel Cellulosic Specialities, BASF, Borchers, BYK Chemie, Ciba Specialty Chemicals, Cognis, Condea Servo, Degussa-Goldschmidt, Dexter Chemical, Dow Chemical, Dow Corning, DuPont, Elementis, GE Silicones, International Speciality Product, Rhodia, Tego, Tiarco Chemical, Troy, UCB Chemical, Ultra Additive, Worlée, 3M, Additek, C. P. Hall, Cytec, Efka Additives, Hercules, Liaoyang Huaxing Chemical, Polyvel, R. T. Vanderbilt, Sovereign Chemical, Stepan, Tiarco Chemical, Sachtleben, Rhodia, Raschig, Potters Ballotini.

Example of surfactants having wetting and levelling properties are:

- by Tego/Degussa available: Tego® Colorol, Tego® Dispers, Tego® Lipotin, Tego® Twin, Tego® Wet, Rewopol®, Tego® Surten , Tego®Rad, Tego®Glide, Tegomer®, Tego®Flow such as Tego®Flow 300, Tego® Colorol E, Tego® Colorol F , Tego® Colorol Standard , Tego® Dispers 655 , Tego® Dispers 660 C , Tego® Dispers 661 C, Tego® Dispers 662 C ,Tego® Dispers 680 UV , Tego® Dispers 681 UV, Tego® Lipotin A , Tego® Lipotin BL, Tego® Lipotin DB, Tego® Lipotin SB, Tego® Twin 4000 , Tego® Wet 250 , Tego® Wet 260 , Tego® Wet 265, Tego® Wet 270 , Tego® Wet 280 , Tego® Wet 500 , Tego® Wet 505 , Tego® Wet 510 , Tego® Wet 590 , Tego® Wet 591, Tego® Wet KL 245, Rewopol® B 2003, Rewopol® M 365 , Rewopol® SB DO 70 , Rewopol® SB DO , Rewopol® SB DO 75 PG , Rewopol® SB FA 50 , Rewoquat® W 75 , Rewoteric® AM CAS , Tego® Surten W 111 , Tego® Surten W 125 , Tego® Surten W 130 , Tego® Surten W 133 , Tego® Surten W 5840 , Tego® Surten W 5878, Tego®Rad 2100, Tego®Rad 2200 N, Tego®Rad 2250, Tego®Rad 2300, Tego®Rad 2500, Tego®Rad 2600, Tego®Rad 2700, Tego®Glide 130, Tego®Glide 406, Tego®Glide 410, Tego®Glide 411, Tego®Glide 415, Tego®Glide 420, Tego®Glide 432, Tego®Glide 435, Tego®Glide 440, Tego®Glide 450, Tego®Glide 482, Tego®Glide A 115, Tego®Glide B 1484, Tego®Glide ZG 400, Tego®Flow 300, Tegomer® CSi 2342, Tegomer® D 3403, Tegomer® E-si. Tegomer® ESi 2330, Tegomer® HSi 2311, Tegomer® VSi 2250.
- by Efka available: EFKA 3033 , EFKA 3034, EFKA 3232 , EFKA 3277, EFKA 3299, EFKA 3883, EFKA 6903, EFKA 6906, EFKA 3522 , EFKA 5010 , EFKA 5044 , EFKA 5054 , EFKA 5055 , EFKA 5063, EFKA , EFKA 5066 , EFKA , EFKA 5207, EFKA 5244 , Efka® 3500, Efka® 3600 , Efka® 3650 , Efka® 4590 , EFKA® 5065 , EFKA® 5070, Efka®

6225, Efka® 6230, Efka®, Efka® 7311, Efka® 7315, Efka® 7316 , Efka® 7340 , Efka® 7361 , Efka® 7375 , Efka® 7381 , Efka® 7390 , Efka® 7500 , Efka® 7544 , Efka® 7554, Efka® 7564

- by BYK available: Byk® additives such as Byk® 307, Byk® 333, Byk® 9075, Byk® 9076, Byk® 9077, Byk® 935, Byk® 961, Byk® A 560, Byk® W 909, BYKOPLAST® 1000 , Disperplast 1011, Byk® S 706, Byk® W 909, Aquacer® 840, Byk® -077, Byk®
- 085, Byk® -315, Byk® -320, Byk® -321, Byk® -322, Byk® -323 , Byk® -325 , Byk® - 336, Byk® -340, Byk® -345 , Byk® -346, Byk® -347, Byk® -348, Byk® -352, Byk® -353, Byk® -354 , Byk® -355 , Byk® -356, Byk® -357 , Byk® -358 N , Byk®-359, Byk® -360 P , Byk® -361 N , Byk® -363 P , Byk® -364 P , Byk® -365 P , Byk®-366 P , Byk® -368 P , Byk® -370 , Byk® -371, Byk® -373 , Byk® -375 , Byk® -380N , Byk® -381 , Byk® -390 , Byk® -392 , Byk® -P 104 S , Byk® -S 706 , Byk® -Silclean 3700 , Byk® -UV 3500 , Byk® -UV 3510 , Byk® -UV 3530 , Byketol® -OK , Byketol®-Special , Byketol® -WS, Minerpol® 221, Disperbyk® -108.

Most preferred surfactants are Tego®Flow 300, Tego®Rad 2600, Tegomer® E-si, Tego®Rad 2700, EFKA-3883, EFKA 6903, EFKA 6906, EFKA 3299, Tego®Rad 2500 a polydimethylsiloxane and Disperbyk® -108 a hydroxyl functionalized carbonic ester with pigment affine groups. Especially most preferred surfactants are Tego®Flow 300, Tego®Rad 2500 and Disperbyk® -108.

In a further preferred embodiment the present invention relates to a method which comprises applying onto a substrate a composition comprising at least one photoalignment material and at least one surfactant, wherein the latter does not have any negative impact on the aligning properties; and in addition, a solvent within the above given description and described preferences of solvents given above.

Within the scope of the invention the term substrate describes a base material on which a process is conducted which produces one or more layers or films on a part of or on the complete surface of the base material. The substrate can consist of any type of solid material as e.g. glass, metals, polymer films or composite materials. Not necessarily, but in most cases substrates are applied in the shape of slabs, either individually cut pieces or in case of flexible base materials also rolled up into a cylinder shape.

In a further preferred embodiment the present invention relates to a method comprising a composition having a concentration of the liquid crystal photoalignment material and the surfactant in the solvent in the range of between 1 and 99%, preferred between 1 and 20%, more preferred between 1 and 10% by weight.

The amount of the surfactants in the composition is determined according to the wished performances in respect of mechanical and thermal stability, and of optical and electro-optical performances.
A further preferred embodiment the present invention relates to a method, wherein the addition level of the surfactant on the liquid crystal photoalignment material is below 20%, preferably between 0.01 and 10%, more preferably between 0.1 and 5% by weight and most preferably between 0.1 and 1% per weight.

In addition, the present invention relates to a method for the manufacturing of uniform and defect free liquid crystal aligning layers having an average roughness $R_a \leq 25$ ($\pm$1 nm), preferably $R_a \leq 10$ ($\pm$0.5 nm), and more preferably $R_a \leq 5$ ($\pm$0.5 nm), and most preferably $R_a \leq 3$ ($\pm$0.25 nm).

After that the quality of the printed films is characterized by means of differential interference contrast (DIC) microscopy (Olympus BX60 with Olympus U-DICR, Olympus Corporation, Japan) and by profilometry (Alpha-Step 500, Tencor, U.S.). As a quantitative characteristic the average roughness is measured with the profilometer (Alpha-Step 500, Tencor, U.S.). The average roughness is defined as the integral of the absolute value of the local height along the scanned path divided by the scan length. A scan length of 2 mm is used.

Further preferred is a method, wherein the surfactants of the compositions according to the invention do not have any negative impacts on the aligning properties, which are:

Alignment of liquid crystal cells, LCDs:

- a change in the tilt angle between aligning layers prepared with compositions with or without surfactants is > +/-0.5°, preferably > +/-0.2°, more > +/-0.1 ° (for the technical field of LCDs); or

Alignment of optical films:

- a change in the tilt angle in the technical field of optical films of > +/-5°, preferably > +/-3°; or
- a reduction in the contrast between aligning layers prepared with compositions with or without surfactants by >20% , preferably by >10%; or

wherein the alignment quality factor is < 2, preferably <1.5 and more preferably <1.2.

In the context of the present invention the alignment quality factor is determined according to the below given method:

The prepared photoalignment material and the liquid crystal polymer (LCP) is placed between sheet polarizers and illuminated by a non collimated light source (diffuse backlight) which generates a wide cone of light rays. The transmitted light through the polarisers and sample is collected by the objective lens of the microscope whose acceptance angle is given by the numerical aperture of 0.22 (corresponding to 13°). The transmitted intensity of dark state (crossed polarisers) is measured. A good alignment state of the LCP molecules results in very low value of the transmitted dark state intensity. The alignment quality factor is defined in terms of the ratio of dark state intensity of the oriented LCP sample to the intensity of light source without sample, measured in the same conditions, according to:

(+) : when the ratio is less than 1.2 (means good orientation)
(+/-):when the ratio is ranging from 1.2 to 2 (means acceptable orientation)
(-): when the ratio is higher than 2 (means bad orientation)

Optical films in the sense of the present invention are films which vary the properties of light transmitted through the film and/or light reflected by the film. The properties of the light which are varied by the film in particular are the polarization state and/or the spectral characteristics of the light. Examples for such optical films are retardation films, compensator films, reflectively and absorptively polarizing films and combinations thereof.

Preferably, the present invention concerns a composition comprising a liquid crystal photoalignment material and a surfactant, wherein the latter does not have any negative impact on the Voltage Holding Ratio (VHR), Residual DC (RDC) or AC Memory (ACM).

VHR, ACM and RDC are commonly known values in the technical field of liquid crystal displays and will be described as following:

VHR:
In the case of liquid crystal displays of thin-film transistor type a certain amount of charge is applied over the course of a very short period of time to the electrodes of a pixel and must not subsequently drain away by means of the resistance of the liquid crystal. The ability to hold that charge and thus to hold the voltage drop over the liquid crystal is quantified by what is known as the "voltage holding ratio" (VHR). It is the ratio of the RMS-voltage (root mean square voltage) at a pixel within one frame period and the initial value of the voltage applied.

ACM (AlternativeCurrentMemory): An AC (AlternativeCurrent) voltage of 7 Volts (1kHz) is applied to the cell for 700 hours. The pre-tilt angle of the cell is measured before and after the application of the AC stress. The ACM performance is expressed in terms of a pretilt angle difference, $\Delta\theta$.

RDC (Residual DirectCurrent) : An adjustable DC (DirectCurrent)-component of V=2VDC is added to the symmetric square wave signal of V=2.8V(30Hz), the fluctuations of light transmitted by the test cell can be eliminated or at least minimized by adequate selection of the external DC component. The external DC-voltage for which the flicker is eliminated or minimized by compensation of the internal residual DC-voltage is taken to be equivalent to the internal residual DC-voltage.

Preferred are non-ionic surfactants not having any negative impact on Voltage Holding Ratio (VHR), Residual DC (RDC) or AC Memory (ACM) are non-ionic surfactants.

A further preferred embodiment of the present invention relates to a method as described above with all described preferences, comprising a composition which is applied to a substrate by printing or coating.

In general, the composition is applied onto a substrate optionally coated with an electrode [for example a glass plate coated with indium-tin oxide (ITO)] so that homogeneous layers of 0.05 to 100 $\mu$m thickness are produced.

A further preferred embodiment of the present invention relates to a method as described above and all described preferences of the method, for the preparation of uniform and defect free liquid crystal aligning layers having a thickness of <200 nm, preferably <100 nm, more preferably from <50 nm, most preferably from <40 nm and especially most preferred from <30 nm; and preferably, wherein the liquid crystal photoalignment material is a polymer comprising diamine (I) and tetracarboxylic acid anhydride as described above, and with all preferences described above.

More preferred is a method as described above and all described preferences of the method, for the manufacturing of uniform and defect free liquid crystal aligning layers by applying onto a substrate a composition having a viscosity in the range of 1 to 14 mPas, which comprises at least one liquid crystal photoalignment material and at least one solvent, for the preparation of liquid crystal aligning layers having a thickness of <50 nm, preferably from <40 nm and more preferably from <30 nm; and preferably, wherein the liquid crystal photoalignment material is a polymer comprising diamine (I) and tetracarboxylic acid anhydride as described above, and with all preferences described above.

A more preferred is a method as described above and all described preferences of the method, for the manufacturing of uniform and defect free liquid crystal aligning layers by applying onto a substrate a composition having a

viscosity in the range of 1 to 14 mPas, which comprises at least one liquid crystal photoalignment material and at least one solvent, for the preparation of liquid crystal aligning layers having a thickness of <50 nm, preferably from <40 nm and more preferably from <30 nm; and wherein the liquid crystal photoalignment material is a polymer comprising diamine (I) and tetracarboxylic acid anhydride as described above, and with all preferences described above.

A further more preferred embodiment of the present invention relates to a method as described above and all described preferences of the method, for the preparation of uniform and defect free liquid crystal aligning layers, comprising a composition which is printed, preferably by ink jet printing, with droplet volumes of ≥ 10 pl (pico litre), preferably ≥ 30 pl and most preferably ≥ 50 pl; and preferably, wherein the liquid crystal photoalignment material is a polymer comprising diamine (I) and tetracarboxylic acid anhydride as described above, and with all preferences described above.

In addition, the present invention relates to a method as described above and all described preferences of the method, for the preparation of uniform and defect free liquid crystal aligning layers, comprising a composition which is printed, preferably by ink jet printing, having a printing resolution of ≤ 1000 DPI (dot per inch), preferably ≤ 400 DPI and most preferably ≤ 360 DPI .

A most preferred embodiment of the present invention relates to a method as described above and all described preferences of the method, for the preparation of uniform and defect free liquid crystal aligning layers having a thickness of <50 nm, preferably from <40 nm and more preferably from <30 nm, comprising a composition which is printed, preferably by ink jet printing, having a printing resolution of ≤ 1000 DPI (dot per inch), preferably ≤ 400 DPI and most preferably ≤ 360 DPI ; and preferably, wherein the liquid crystal photoalignment material is a polymer comprising diamine (I) and tetracarboxylic acid anhydride as described above, and with all preferences described above.

Coating methods are for example spin coating, air doctor coating, blade coating, knife coating, reverse-roll coating, transfer roll coating, gravure roll coating, kiss roll coating, cast coating, spray coating, spin-coating, meniscus-coating, wire-coating, slot-orifice coating, calendar coating, electro-deposition coating, dip coating or die coating.

Printing methods are for example ink-jet-printing, direct-printing, relief printing such as flexographic printing, intaglio printing such as direct gravure printing or offset gravure printing, lithographic printing such as offset printing, or stencil printing such as screen printing, flexographic-printing or planographic-printing.

Preferred is the direct printing such as for example gravure, flexography; screen printing and letterpress printing processes;
further preferred are the indirect printing, such as offset printing; and
planographic printing, such as lithography; relief printing, intaglio printing and
ink-jet printing, and flexographic printing.

A detailed description of the single printing processes is common knowledge and partially given above.

A further more preferred embodiment of the present invention relates to a method as described above and all described preferences of the method, comprising a composition which is applied to a substrate by printing, preferably by indirect printing, such as offset printing;
planographic printing, such as lithography; relief printing, intaglio printing;
ink-jet printing or
flexographic printing; more preferably by ink-jet printing.

A further preferred embodiment of the present invention relates to a method as described above and all preferences described for these methods and which in addition comprises
treating, preferably aligning, more preferably cross-linking and/or isomerising, the liquid crystal photoalignment material with aligning light.

The regions, which should be aligned, are irradiated, for example, with a high-pressure mercury vapour lamp, a xenon lamp or a pulsed UV laser, using a polarizer and optionally a mask for creating images of structures.

Further, it is possible to vary the direction of orientation and the tilt angle within the liquid crystal aligning layer by controlling the polarization plane and/or the irradiance direction of the irradiation of the aligning light. It is understood that by selectively irradiating specific regions of the liquid crystal aligning layer very specific regions of the layer can be aligned. In this way, layers with a defined tilt angle can be provided. The induced orientation and tilt angle are retained in the liquid crystal aligning layer by the process, especially by the process of crosslinking.

The treatment with aligning light may be conducted in a single step or in several separate steps. In a preferred embodiment of the invention the treatment with aligning light is conducted in a single step.

The incidence direction of the aligning light may be normal to the substrate or at any oblique angle.

For generating tilt angles, preferably the aligning light is exposed from oblique angles.

Further preferred methods of the invention relate to

- a method for the preparation of liquid crystal aligning layer, which are vertically aligned;
- a method for the preparation of multi-domain vertical alignment of a liquid crystal aligning layer;
- a method for the preparation of a liquid crystal aligning layer with tilted optical axis.

In addition, the present invention relates to compositions as described above and all preferences described for this compositions.

Further, the present invention concerns the use of a liquid crystal aligning layer according to, or, prepared according to a method of, the present invention for aligning liquid crystals.
A further embodiment of the present invention relates to a liquid crystal aligning layer obtainable by a method to the present invention.

A further embodiment of the present invention concerns a liquid crystal aligning layer, comprising a composition according to the invention.

A further preferred embodiment of the present invention concerns a liquid crystal aligning layer having a thickness of <200 nm, preferably <100 nm, more preferably <50 nm, most preferably <40 nm and especially most preferred < 30 nm.

The liquid crystal aligning layer can be used in the manufacture of unstructured or structured optical-or electro-optical elements, preferably in the production of hybrid layer elements.

A further embodiment of the present invention relates to optical and electro-optical unstructured or structured constructional elements, preferably liquid crystal display cells, multi-layer and hybrid layer elements, comprising at least one liquid crystal aligning layer as described above.

Further, the present invention concerns preferably the use of a liquid crystal aligning layer for the induction of vertical alignment of adjacent liquid crystalline layers, in particular for operating a cell in MVA mode.

Preferred is the use of the liquid crystal aligning layer for the induction of vertical alignment of adjacent liquid crystalline layers.

A further preferred embodiment of the invention relates to an optical or electro-optical device comprising one or more liquid crystal aligning layers. The electro-optical devices may comprise more than one layer. The layer, or each of the layers may contain one or more regions of different spatial orientation.

More preferably, the present invention concerns an optical and electro-optical unstructured or structured constructional elements, preferably liquid crystal display cells, multi-layer and hybrid layer elements, comprising at least one polymer layer, copolymer or oligomer layer according to the present invention.

The advantages of the present invention could not be foreseen by a skilled person.
It has surprisingly been found, that surfactants can be used in liquid crystal aligning layers without changing the optical or electro-optical properties, though they are described to change the surface of the compound to which they are applied.

SHORT DESCRIPTION OF THE FIGURES

In the accompanying figures the following is shown:

| | |
|---|---|
| Figure 1 | Pattern with 50% surface coverage used for inkjet printing; and |
| Figure 2 observed (b) LPP ink-jetted | Macroscopic view of inkjet printed films according to example 14 as in reflection using (a) LPP formulation 19, strong dewetting is observed and formulation 20, homogeneous film; under optical microscope good merging of droplets is observed. |

**EXAMPLES**

LPP Material used

**<u>LPP1</u> = Poly[1-[6-[4-[(E)-2-methoxycarbonyl-vinyl]-phenoyl]hexyloxycarbonyl]-1-metyl-ethylene], as described in** US 6107427

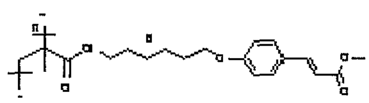

**<u>LPP2</u> = Polycondensation of 2-(2,4-Diaminophenyl)ethyl (2E) 3-{4-[(4-(4,4,5,5,5-pentafluoropentyloxy)benzoyl)oxy] phenyl} acrylate with 2,3,5-tricarboxycyclopentylacetic acid dianhydride.**

Preparation of 2-(2,4-Diaminophenyl)ethyl (2E) 3-{4-[(4,4,5,5,5-pentafluoropentoxy)benzoyl)oxy]phenyl}acrlyate

1 Preparation of 2-(2,4-dinitrophenyl)ethanol

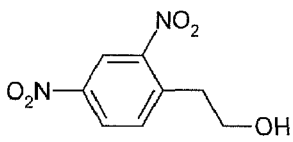

22.6 g (100 mmol) 2,4-dinitrophenylacetic acid are dissolved in 150 ml tetrahydrofuran and added drop wise in a the course of 2 hours to 300 ml (300 mmol) of a boranetetrahydrofuran complex 1.0 M solution in tetrahydrofuran. After 3 hours at 25°C , 200 ml water are carefully added. The reaction mixture is then partitioned between ethyl acetate and water; the organic phase was washed repeatedly with water, dried over sodium sulfate, filtered and concentrated by rotary evaporation. Chromatography of the residue on 400 g silica gel using toluene:ethyl acetate 1:1 as eluant and crystallization form ethylacetate:hexane mixture to yield 20.7 g (98%) of 2-(2,4-dinitrophenyl)ethanol as yellowish crystals.

Preparation of (2E)-3-(4-{[4-(4,4,5,5,5-pentafluoropentoxy)benzoyl]oxy}phenyl)acrylic acid

2 Preparation of 4-(4,4,5,5,5-pentafluoropentoxy)benzoic acid

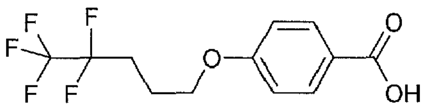

72.66 g (0.408 Mol) 4,4,5,5,5-pentafluoropentan-1-ol are dissolved in 550 ml tetrahydrofurane, 142 ml (0.102 Mol) triethylamine are added at room temperature.38 ml (0.490 Mol) methanesulfonyl chloride were added dropwise under nitrogen. The mixture is stirred for 1 h at 0-5°C. The beige suspension is Hyflo-filtrated and washed with tetrahydrofurane. The filtrate is concentrated. The residue is dissolved in 1.4 l 1-methyl-2-pyrrolidone 62.70 g (0.408 Mol) of methyl 4-hydroxybenzoate and 226.00 g (1.43 Mol) of potassium carbonate are added to the lightly brown solution. The reaction suspension is allowed to react at 80°C for 14 h. 1l (1.0 Mol) of a 1 N NaOH solution is added to the above mixture. The suspension is heated at reflux temperature for 30 min until the reaction is completed. The reaction mixture is allowed to cool at room temperature and thrown in cold water. The solution is carefully acidified with a 25% HCl solution and is stirred for 15 min. The product is filtrated off, washed with water and dried overnight at room temperature under vacuum to give 119.00 g (98%)of 4-(4,4,5,5,5-pentafluoropentoxy)benzoic acid as a white solid.

3. Preparation of 4-Formylphenyl-4-(4,4,5,5,5-pentafluoropentoxy)benzoate

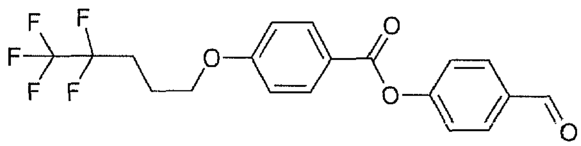

6.89 g (56.4 mmol) of 4-hydroxybenzaldehyd, 16.8 g (56.4 mmol) of 4-(4,4,5,5,5-pentafluoropentoxy)benzoic acid, 0.69 g (5.6 mmol) of 4-Dimethylaminopyridine are dissolved in 100 ml of dichloromethane. 11.89 g (62.0 mmol) of N-(3-Dimethylaminopropyl)-N'-ethylcarbodiimide hydrochloride (EDC hydrochloride) are added at 0°C. The solution is stirred for 1 h at 0°C and allowed to stir at room temperature overnight. After 22 hours at room temperature the reaction mixture was partitioned between dichloromethane and water; the organic phase is washed repeatedly with water, dried over sodium sulphate, filtered and concentrated by rotary evaporation. Crystallization form 2-propanol at 0°C give 4-formylphenyl-4-(4,4,5,5,5-pentafluoropentoxy)benzoate as colourless crystals.

4. Preparation of (2E)-3-(4-{[4-(4,4,5,5,5-pentafluoropentoxy)benzoyl]oxy}phenyl)acrylic acid

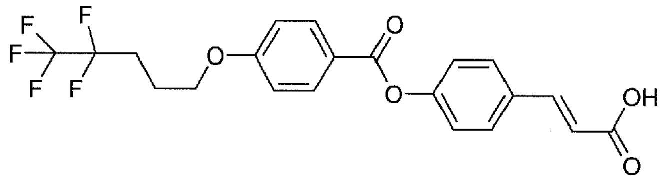

5.71 g (14.2 mMol) of 4-formylphenyl 4-(4,4,5,5,5-pentafluoropentoxy)benzoate and 3.00 g (28.4 mMol) of Malonic acid are dissolved in 18 ml (227.1 mMol) of Pyridin.1.21 g (14.2 mMol) of Piperidin are added to the suspension which is allowed to react at 100°C under argon for 1.5 h. The yellow solution is then thrown on ice. The solution is carefully acidified to pH=1-2 with a 25% HCl solution and is stirred for 15 min. The product is filtrated off and dried at room temperature under vacuum for 10 h to give (2E)-3-(4-{[4-(4,4,5,5,5-pentafluoropentoxy)benzoyl]oxy}phenyl)acrylic acid as white powder.

5. Preparation of 2-(2,4-Dinitrophenyl)ethyl (2E) 3-{4-[(4-(4,4,5,5,5-pentafluoropentoxy)benzoyl)oxy] phenyl}acrylate

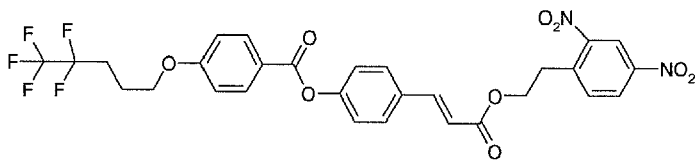

2.50 g (11.8 mmol) of 2-(2,4-dinitrophenyl)ethanol, 5.24 g (11.8 mmol) of (2E)-3-(4-{[4-(4,4,5,5,5-pentafluoropentoxy) benzoyl]oxy}phenyl)acrylic acid, 144 mg (1.2 mmol) of 4-Dimethylaminopyridine are dissolved in 30 ml of dichloromethane. 2.48 g (13.0 mmol) of N-(3-Dimethylaminopropyl)-N'-ethylcarbodiimide hydrochloride (EDC hydrochloride) are added at 0°C. The solution is stirred for 1 h at 0°C and allowed to stir at room temperature overnight. After 22 hours at room temperature the reaction mixture is partitioned between dichloromethane and water. The organic phase is washed repeatedly with water, dried over sodium sulphate, filtered and concentrated by rotary evaporation. Chromatography of the residue on 200 g silica gel using toluene:ethyl acetate 95:5 as eluant and crystallization form ethylacetate:hexane mixture to yield 5.35 g (71%) 2-(2,4-Dinitrophenyl)ethyl (2E) 3-{4-[(4-(4,4,5,5,5-pentafluoropentoxy)benzoyl)oxy] phenyl} acrylate as colorless crystals.

6. Preparation of 2-(2,4-Diaminophenyl)ethyl (2E) 3-{4-[(4-(4,4,5,5,5-pentafluoropentoxy)benzoyl)oxy] phenyl}acrylate

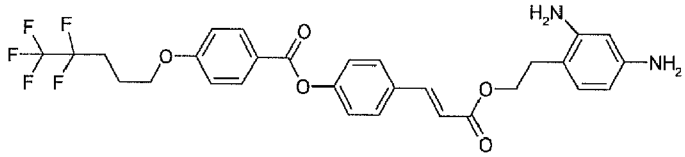

5.35 g (8.38 mmol) of (2E)3-{4-[(4-(4,4,5,5,5-pentafluoropentoxy) benzoyl)oxy] phenyl}acrylate are dissolved in a mixture of 54 ml of N,N-dimethylformamide and 6 ml water. 13.9 g (51.4 mmol) ferric chloride hexahydrate are added. 5.60 g (85.7 mmol) Zinc powder are added portion wise within 60 min. The mixture is allowed to react for 2 hours. The reaction mixture is then partitioned between ethyl acetate and water and filtered. The organic phase is washed repeatedly with water, dried over sodium sulfate, filtered and concentrated by rotary evaporation. Filtration of the residue on 200 g silica gel using toluene:ethyl acetate(1:3) as eluant and crystallization form ethylacetate:hexane mixture yielded 3.30 g 2-(2,4-Diaminophenyl)ethyl (2E) 3-{4-[(4-(4,4,5,5,5-pentafluoropentoxy)benzoyl)oxy] phenyl}acrylate as yellowish crystals

**LPP3 =** Polycondensation of 2-(2,4-Diaminophenyl)- 1,3 di[(2E)-3-{4-[(4-(4,4,4-trifluorobutoxy) benzoyl)oxy]phenyl} prop-2-enoyl] propanediol with 1,2,3,4-cyclobutantetracarboxylic acid dianhydride yield Polyamic acid

Preparation of 2-(2,4-Diaminophenyl)- 1,3 di[(2E)-3-{4-[(4-(4,4,4-trifluorobutoxy) benzoyl)oxy]phenyl}prop-2-enoyl] propanediol

1 Preparation of 2-(2,4-Dinitrophenyl)- 1,3 di[(2E)-3-{4-[(4-(4,4,4-trifluorobutoxy) benzoyl)oxy]phenyl}prop-2-enoyl] propanediol

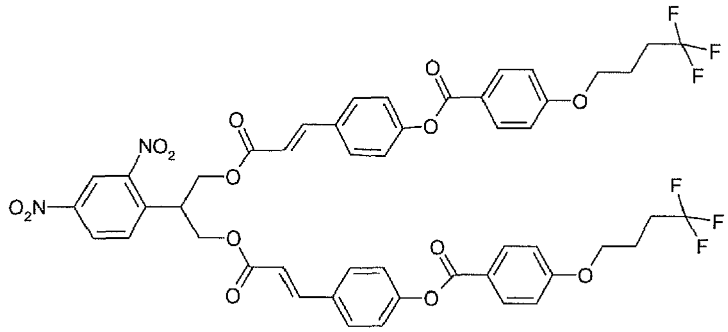

2.90 g (12.0 mmol) of 2-(4-nitrophenyl)-1,3-propandiol, 9.54 g (24.2 mmol) of (2E)-3-(4-{[4-(4,4,4-trifluorobutoxy)benzoyl]oxy}phenyl)acrylic acid. 296 mg (2.42 mmol) of 4-Dimethylaminopyridine are dissolved in 100 ml of dichloromethane. 9.20 g (49.0 mmol) of N-(3-Dimethylaminopropyl)-N'-ethylcarbodiimide hydrochloride (EDC hydrochloride) are added at 0°C. The solution is stirred for 1 h at 0°C and allowed to stir at room temperature overnight. After 22 hours at room temperature the reaction mixture is partitioned between dichloromethane and water. The organic phase is washed repeatedly with water, dried over sodium sulphate, filtered and concentrated by rotary evaporation. Chromatography of the residue on 600 g silica gel using toluene:ethyl acetate 9:1 as eluant to yield 7.60 g 2-(4-nitrophenyl)-1,3 di[(2E)-3-{4-[(4-(4,4,4-trifluorobutoxy)benzoyl)oxy]phenyl}prop-2-enoyl] propanediol as white crystals.

2 Preparation of 2-(2,4-Diaminophenyl)- 1,3 di[(2E)-3-{4-[(4-(4,4,4-trifluorobutoxy) benzoyl)oxy]phenyl}prop-2-enoyl] propanediol

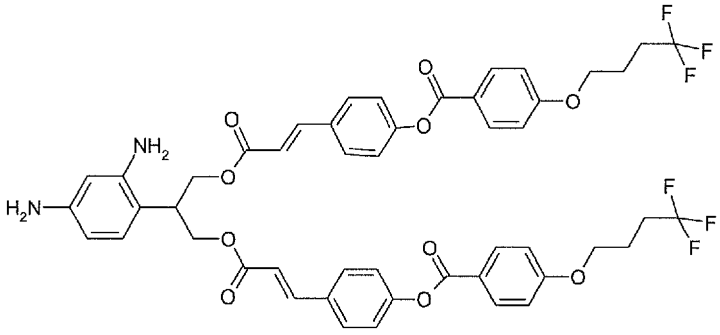

7.60 g (7.64 mmol) of 2-(4-nitrophenyl)-1,3 di[(2E)-3-{4-[(4-(4,4,4-trifluorobutoxy)benzoyl)oxy]phenyl}prop-2-enoyl] propanediol are dissolved in a mixture of 45 ml of N,N-dimethylformamide and 5 ml water. 12.39 g (45.84 mmol) ferric chloride hexahydrate are added. 4.99 g (76.4 mmol) Zinc powder are added portionwise within 40 min. The mixture is allowed to react for 2 hours. The reaction mixture is then partitioned between ethyl acetate and water and filtered. The organic phase is washed repeatedly with water, dried over sodium sulfate, filtered and concentrated by rotary evaporation. Chromatography of the residue on 1000 g silica gel using toluene:ethyl acetate 1:1 as eluant and crystallization form ethylacetate:hexane mixture to yield 4.30 g of 2-(2,4-Diaminophenyl)- 1,3 di[(2E)-3-{4-[(4-(4,4,4-trifluorobutoxy) benzoyl) oxy]phenyl}prop-2-enoyl] propanediol.
**wt%** = % by weight **TAC/HC substrate** = Triacetate cellulose hard coat

**Example 1**

a) Preparation of LPP solution 1

A 3 wt% solution, of a linearly photo-polymerizable polymer LPP1, was made in a methylethylketone (MEK) and cyclohexanone (CHN) mixture (4parts / 1 part). The solution was homogenized with moderate stirring for few minutes and filtered through a 0.2 micrometer filter.

b) Preparation of aligning layer

The aligning layer is made by contact-free photoaligning technology. The LPP solution 1 was thinly spin coated at 3000 rpm onto TAC substrate coated with a hardcoat (HC) layer. The plates were warmed for 2 minutes at 95 °C in oven. The resulting layer had a thickness of about 100 nanometers.

c) Preparation of the LCP solution 1

For the production of the cross-linkable liquid crystalline (LCP) layer, in the examples, the following cross-linkable liquid crystal diacrylate components were used in a supercoolable nematic mixture:

Compound A: 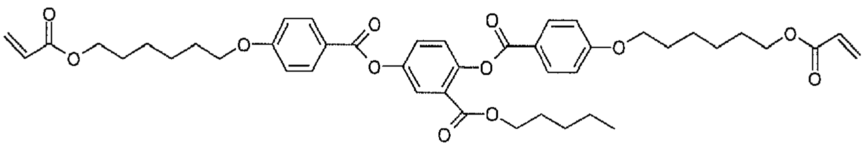

Compound B: 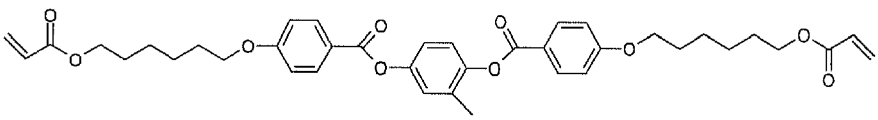

Compound C: 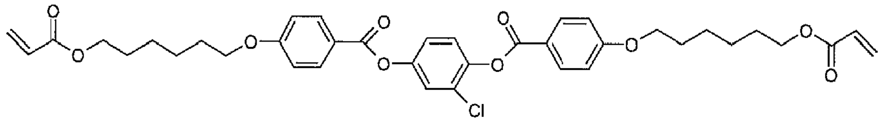

The process for preparation of compounds A, B and C is well known in the art. Compounds B and C can for example be prepared as described in WO 97/00600 and compound A in analogy to their described synthesis, or in analogy to the synthesis described by D. J. Broer, R. A. M. Hikmet and G. Challa: Makromol.Chem. 190 (1989) 3201.

The mixture was prepared from 80 wt% of Compound A, 15 wt% of Compound B, 4 wt% of Compound C, 0.5 wt% of a photoinitiator (Irgacure (trade mark) 369 by CIBA), and 0.5 wt% of BHT (butyl hydroxy toluene) as an inhibitor. From the above mixture a 30 wt% solution (LCP-Solution-1) was made in methyl isobutyl ketone (MEK). The solution was homogenized with moderate stirring for 5 minutes at 50°C and filtered through a 0.2 micrometer filter.

d) Preparation of an aligned LCP film

An aligning layer is prepared as indicated in section b above and exposed to linearly polarised UV light from a mercury high pressure lamp using energy doses ranging from 5 to 100 $mJ/cm^2$. To make final samples, LCP solution 1 was spin coated at 3000RPM to form a 1.2μm thick LCP film onto LPP orientation layer prepared in the above-mentioned manner. The plates were warmed for 5 minutes at 50 °C on a hotplate. The coated layer was then irradiated by isotropic (non-polarized) light from a mercury lamp to cause crosslinking of liquid crystal pre-polymers (LCP) using an energy dose of 1 $J/cm^2$.

e) Evaluation of the physical performance of the alignment layer

Characteristics of the alignment layer on plastic film obtained as described above were evaluated by measurements methods described below.

1) Evaluation of the alignment quality of the LCP layer

The alignment quality was evaluated using an optical polarising microscope to check the existence of any microscopic defects and alignment quality of LCP molecules. A backlight system was used to illuminate test samples under reproducible illumination conditions similar to backlight's illumination in LC displays.

The prepared LPP/LCP sample is placed between sheet polarizers and illuminated by a non collimated light source (diffuse backlight) which generates a wide cone of light rays. The transmitted light through the polarisers and sample is collected by the objective lens of the microscope whose acceptance angle is given by the numerical aperture of 0.22 ( corresponding to 13°). The transmitted intensity of dark state (crossed polarisers) is measured. A good alignment state of the LCP molecules results in very low value of the transmitted dark state intensity. The alignment quality is defined in terms of the ratio of dark state intensity of the oriented LCP sample to the intensity of light source without sample, measured in the same conditions, according to:

(**+**) : when the ratio is less than 1.2 (means good orientation)
(**+/-**):when the ratio is ranging from 1.2 to 2 (means acceptable orientation)
(**-**): when the ratio is higher than 2 (means bad orientation)

The obtained results are reported in table 1.

2) Evaluation of blocking property

The TAC/HC substrate coated with alignment layer and bare TAC substrate were stacked so that the aligning layer was brought into contact with back side of the bare TAC substrate. The stacked system was aged under a load of 4.5 $Kg/cm^2$ for 16 hours. After removal of the load, the coated layer was evaluated, to check if the coated layer is transferred either partly or totally to the backside of the covering bare substrate, as follows:
Firstly by naked eye to check visually any peel off or deterioration of the alignment layer. If no visual change is detected, then an LCP film is coated onto the aged LPP layer and alignment quality evaluated according to section 1 to check the existence of any microscopic defects. The results are presented as follow:

(**+**):means no change was observed
(**+/-**):means layer was peeled off partly.
(**-**): means layer was peeled off totally

The obtained results are reported in table 1.

3) Evaluation of scratch resistance

The scratch resistance of the alignment layer was evaluated according to MIL-CCC-440, USA military specification. A 3" x 4" (9cm x 11cm) sheet of cheesecloth is folded, to obtain a 1" x 1" sheet. Then, the eraser and chuck of the tester covered with cheesecloth and the cloth pad fastened with the adhesive-tape. After that, the cheesecloth pad is rubbed across the LPP coated surface perpendicular to the LPUV exposure direction and then pulled regularly for a certain number of strokes (2 strokes = 1 cycle) with a force of 11.2 N, continuously applied. All strokes should be made on the same path and abrasion tester shall be held approximately normal to the surface under test during the rubbing operation. Finally, the tested-part of the sample is gently cleaned with an ethanol-impregnated (soft) paper.
After this scratch test, the coated layer was evaluated, to check if the surface of the coated layer is damaged, as follows:
Firstly by naked eyes (in reflection) to check visually any damage or scratches of the alignment layer. If no visual change is detected, then an LCP film is coated onto the tested LPP layer and alignment quality evaluated according to section 1 to check the existence of any microscopic defects. The results are presented as follow:

**(+)** : means no change was observed
**(+/-)**: means layer was scratched or partially removed.
**(-)**: means layer was completely removed

The obtained results are reported in table 1.

**Example 2**

a) Preparation of photo-alignment LPP solution 2:

The mixture was prepared from 98.5% wt% of LPP1, which is a linearly photo-polymerizable polymer and 1.5 wt% of the additive Tego®Rad2600 (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.
Preparation of alignment layer and subsequent evaluation were done according to example 1. The obtained results are reported in table 1.

**Example 3**

a) Preparation of photo-alignment LPP solution 3:

The mixture was prepared from 98.5% wt% of LPP1, which is a linearly photo-polymerizable polymer and 1.5 wt% of the additive Tegomer®E-si (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.
Preparation of alignment layer and subsequent evaluations were done according to example 1. The obtained results are reported in table 1.

**Example 4**

a) Preparation of photo-alignment LPP solution 4:

The mixture was prepared from 97% wt% of LPP1, which is a linearly photo-polymerizable polymer and 3 wt% of the additive Tegomer®E-si (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.
Preparation of alignment layer and subsequent evaluations were done according to example 1. The obtained

results are reported in table 1.

**Example 5**

a) Preparation of photo-alignment LPP solution 5:

The mixture was prepared from 95% wt% of LPP1, which is a linearly photo-polymerizable polymer and 5 wt% of the additive Tegomer®E-si (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.

Preparation of alignment layer and subsequent evaluations were done according to example 1. The obtained results are reported in table 1.

**Example 6**

a) Preparation of photo-alignment LPP solution 6:

The mixture was prepared from 98.5% wt% of LPP1, which is a linearly photo-polymerizable polymer and 1.5 wt% of the additive Tego®Rad2500 (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.

Preparation of alignment layer and subsequent evaluation were done according to example 1. The obtained results are reported in table 1.

**Example 7**

a) Preparation of photo-alignment LPP solution 7:

The mixture was prepared from 97% wt% of LPP1, which is a linearly photo-polymerizable polymer and 3 wt% of the additive Tego®Rad2500. From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.

Preparation of alignment layer and subsequent evaluation were done according to example 1. The obtained results are reported in table 1.

**Example 8**

a) Preparation of photo-alignment LPP solution 8:

The mixture was prepared from 98.5% wt% of LPP1, which is a linearly photo-polymerizable polymer and 1.5 wt% of the additive Tego®Rad2700 (Tego Chemie Service, Germany). From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.

Preparation of alignment layer and subsequent evaluation were done according to example 1. The obtained results are reported in table 1.

**Example 9**

a) Preparation of photo-alignment LPP solution 9:

The mixture was prepared from 98.5% wt% of LPP1, which is a linearly photo-polymerizable polymer and 1.5 wt% of the additive EFKA®-3883. From the above mixture, a 3 wt% solution was made in a methylethylketone (MEK) and cyclohexanone (CHN) mixture (4parts / 1 part). The solution was homogenized with moderate stirring for few minutes and filtered trough a 0.2 micrometer filter.

Preparation of alignment layer and subsequent evaluation were done according to example 1. The obtained results are reported in table 1.

**Table 1:** Evaluation results of the effect of additives on performance of LPP photo-alignment layer.

| LPP Solution | Additive, Ratio % | Blocking | scratch resistance | Alignment |
|---|---|---|---|---|
| Solution 1 | - | - | - | + |
| Solution 2 | Tego® Rad2600, 1.5% | + | + | + |
| Solution 3 | Tegomer® E-Si, 1.5% | + | + | + |
| Solution 4 | Tegomer® E-Si, 3.0% | + | + | + |
| Solution 5 | Tegomer® E-Si, 5.0% | + | + | +/- |
| Solution 6 | Tego® Rad2500, 1.5% | + | + | + |
| Solution 7 | Tego® Rad2500, 3.0% | + | + | + |
| Solution 8 | Tego® Rad2700, 1.5% | +/- | +/- | + |
| Solution 9 | EFKA®-3883, 1.5% | - | - | + |

**Example 13: Flexographic Printing of LPP Formulations**

To examine differences in the printability of different LPP formulations, printing trials were performed using a Nakan Table Printer T-150 from Nakan Corporation (Japan). With every formulation a series of three glass substrates of glass type D263 (Schott GmbH, Germany) and three soda lime glass substrates coated with 25 nm ITO (part no. 317 645 P0, Merck ESGaA, Germany) were printed. The substrates had square shape with an edge length of 2.5 inches and a thickness of 1.1 mm. Prior to utilization the substrates were thoroughly cleaned to comply with the TFT grade requirements of the LCD industry.

**TFT-Grade Definition :**

An attribute of an entity, such as a material (LPP) or object (substrate, vial), indicating that it has the necessary purity and properties to be used in display applications, as in the manufacture of materials used in the display applications.
The process conditions applied for all of the following flexographically printed LPP films are summarized in the following:
TFT grade cleaned substrates are printed with the following adjustments at the Nakan T-150 printer:

- distance between doctor roll and anilox roll: 2.9 mm
- anilox roll velocity: 800 rounds per minute
- an amount of 1 g to 1.5 g of the formulation to be printed is dispensed onto the anilox roll before printing the series of six substrates.

The printed substrates with the wet film are immediately transferred onto a first hotplate with a temperature of 130° centigrade. This so-called pre-baking is done for 5 minutes. After that the substrates are placed onto a second hotplate with a temperature of 220° centigrade. The duration of this post-baking is 40 minutes. Subsequently, the substrates are cooled down to room temperature. Finally, the alignment layer on the substrate is exposed to collimated linearly polarized UVB light (wavelengths between 280 and 320 nm) to induce the alignment capability to the LPP film.

An LPUV dose of 48 mJ/$cm^2$ was applied to the LPP layer at an intensity of 3 mW/$cm^2$.

After that the quality of the printed films is characterized by means of differential interference contrast (DIC) microscopy (Olympus BX60 with Olympus U-DICR, Olympus Corporation, Japan) and by profilometry (Alpha-Step 500, Tencor, U.S.). As a quantitative characteristic the average roughness is measured with the profilometer. The average roughness is defined as the integral of the absolute value of the local height along the scanned path divided by the scan length. For the following results a scan length of 2 mm was used. With a formulation with very good printability average roughnesses in the range of 1 to 3 nm are achieved for comparison.

*Example 13a: LPP Formulations with and without surfactant additives*

In a first step the following formulations were applied in accordance with the above process description:
Formuiation(13):
8 wt% LPP2, 46 wt% 1-Methyl-2-pyrrolidone, 46 wt% Butylcellosolve (2-Butoxyethanol)
Formulation(14):
7.992 wt% LPP2, 0.008 wt% Tegorad® 2500 (Tego Chemie Service, Germany), 46 wt% 1-Methyl-2-pyrrolidone, 46 wt% Butylcellosolve (2-Butoxyethanol)

Formulation(13) represents a reference solution which only contains the LPP in a solvent system comprising one part NMP (1-methyl-2-pyrrolidone) and one part BC (Butylcellosolve). Formulation(14) comprises 0.008 wt% of a silicone acrylate additive which acts as a surfactant and thus potentially influences the printability.

The examination of the samples with the DIC microscope clearly shows that the films comprising formulation (13) (without surfactant) have more pronounced thickness inhomogenities than the films prepared with formulation(14) including the surfactant. This result is also confirmed by the profilometry results. The dry film thicknesses were determined for both types of formulations to approximately 80 nm. On both types of substrates formulation(14) with the surfactant leads to an average film roughness of $R_a \approx (3 \pm 0.25)$ nm, while the utilization of formulation(13) results in a higher surface roughness of $R_a \approx (5.5 \pm 0.5)$ nm.
Profilometry:
Surface profilometry is a technique in which a stylus, in contact with a sample, can measure minute physical surface variations as a function of position. The technique thus on the one hand allows to image surface reliefs and extract characteristic parameters like the average surface roughness. On the other hand layer thicknesses can be determined by profilometry in case the layer to be measured can be selectively and locally ablated, e.g. by generating a scratch in the layer. Scanning the stylus over the transition between area with and area without the layer provides a profile which directly enables to evaluate said layer thickness.

*Example 13b: LPP formulations with and without surfactant additives with lower dry film thickness*

In a second step the following two formulations were tested according to the above process description:

- Formulation(15): 3 wt% LPP2,48.5 wt% 1-Methyl-2-pyrrolidone, 48.5 wt% Butylcellosolve (2-butoxyethanol)
- Formulation(16): 2.997 wt% LPP2, 0.003 wt% Tego®Rad 2500 (Tego Chemie Service, Germany), 48.5 wt% 1-Methyl-2-pyrrolidone, 48.5 wt% Butylcellosolve (2-Butoxyethanol)

For this example the concentration of the non-solvent components (LPP and if included additive) was decreased from 8 wt% (formulation(13) and formulation(14)) to 3% (formulation(15) and formulation(16)). This way, considerably lower dry film thicknesses of approximately 20 nm were achieved.

On both types of substrates formulation(16) with the surfactant leads to an average film roughness of $R_a \approx (2 \pm 0.25)$ nm, while the utilization of formulation(15) results in a higher surface roughness of $R_a \approx (3 \pm 0.5)$ nm. The difference in homogeneity becomes also quite visible observing the sample with the DIC microscope.

Thus, also for formulations with lower concentrations of the non-solvent components the improving effect of the additive on the film quality is very obvious.
In addition, a comparison of the results of example 13a with 13b shows that for both formulations, the ones with and the ones without surfactant, the film quality is markedly improved just by the utilization of formulations with lower concentration of non-solvent components. With the formulations with lower concentration (formulation(15) and (16)) thinner films with a considerably reduced surface roughness are achieved. For the formulations without the surfactant additive the roughness improves from $R_a \approx (5.5 \pm 0.5)$ nm at a film thickness of approximately 80 nm to $R_a \approx (3 \pm 0.25)$ nm at a film thickness of approximately 20 nm if the non-solvent components concentration is reduced from 8 wt % to wt 3%. For the formulations with the surfactant additive the roughness improves from $R_a \approx (3 \pm 0.25)$ nm at a film thickness of approximately 80 nm to $R_a \approx (2 \pm 0.25)$ nm at a film thickness of approximately 20 nm if the non-solvent components concentration is reduced from 8 wt % to 3 wt %.

*Example 13c: Alternative formulations with additives*

In a third step formulation (17) was tested:
Formulation(17):
3.96 wt% LPP2, 0.04wt% Tego®Rad2500 (Tego Chemie Service, Germany), 48 wt % 1-Methyl-2-pyrrolidone, 48 wt % Butylcellosolve (2-Butoxyethanol)

The formulation contains a ten times higher ratio of the same surfactant additive used in the previous formulations. The dry film thickness achieved printing this formulation is approximately 25 nm. An average film roughness of $R_a \approx (2 \pm 0.25)$ nm is found for the printed films of formulation(17). Thus, the formulation allows to achieve high quality printing results.

In a fourth step a formulation with an alternative surfactant additive was tested:
Formulation(18):
3.96wt% LPP2, 0.04 wt % Disperbyk® 108 (BYK-Chemie GmbH, Germany), 48 wt % 1-methyl-2-pyrrolidone, 48 wt % Butylcellosolve (2-Butoxyethanol)

The alternative surfactant additive used in formulation(18) is a hydroxyfunctional carbocyclic acid ester with pigment affinic groups. The dry film thickness achieved printing this formulation is approximately 30 nm. An average film roughness of $R_a \approx (2.75 \pm 0.25)$ nm is found for the printed films of formulation(18). Compared with formulation(1) an improvement in film homogeneity is visible also with formulation(18). The extent of the improvement is, however, lower than with formulation(17).

**Example 14a: Inkjet Printing of LPP Formulations**

To prove the differences in printability of different LPP formulations, printing trials were performed using a modified desktop printer from Brother Company based on drop-on-demand piezo technology.

A pattern is designed using Microsoft Word software. The pattern is a periodical drawing of "filled dots" and "free spaces" (i.e. 50% surface coverage), well adapted to study the wetting effect of a solution on a surface to obtain a homogeneous thin film. (see Fig. 1). A resolution of about 600 DPI was used.

Three different LPP formulations were tested according to the above process description:

- Formulation(19): 1wt% LPP2, 48.5 wt % 1-Methyl-2-pyrrolidone, 48.5 wt % Butylcellosolve (2-butoxyethanol)
- Formulation(20): 0.99 wt % LPP2, 0.01 wt % Tegorad® 2500 (Tego Chemie Service, Germany), 48.5 wt % 1-Methyl-2-pyrrolidone, 48.5 wt % Butylcellosolve (2-Butoxyethanol)
- Formulation(21): 1 wt % LPP2, 0.001 wt % Tegorad® 2500 (Tego Chemie Service, Germany), 48.5 wt % 1-Methyl-2-pyrrolidone, 48.5 wt % Butylcellosolve (2-Butoxyethanol)

With every formulation glass substrates of glass type D263 (Schott GmbH, Germany) and soda lime glass substrates coated with 25 nm ITO (part no. 317 645 P0, Merck KGaA, Germany) were printed. The distance between print head and substrate surface during the printing is maximally 1 mm. Prior to utilization the substrates were thoroughly cleaned according to process disclosed in example 13.

The examination of the samples with the reflected light and with (DIC) microscope clearly shows that the films comprising formulation(19) (without surfactant) have more pronounced thickness inhomogeneities than the films prepared with formulations(20) and (21) including the surfactant. This finding is illustrated in figure 2.

***Example 14b**: LPP formulations without surfactant additives and effect of lower dry film thickness*

To prove the differences in printability of different LPP formulations, printing trials were performed using a commercial desktop printer based on drop-on-demand piezo technology. We used a print head having nozzles with diameter approximately equal to 135 microns. This allows high volume droplets and hence high printing speeds. Although specified viscosity range for this print head ranges from 7 to 14 mPas, the following examples demonstrate that lower viscosities are well adapted to get homogeneous thin film. The examples also demonstrate that the resulting thin film show better homogeneity than thick films.

Various patterns can be designed using Photoshop software. In the following examples, we used a black square (i.e. 100% surface coverage) which is well adapted to get a homogeneous thin film. A resolution of 360 DPI was used.

Two different LPP formulations were tested according to the above process description:

- Formulation(22): 5 wt% LPP3 in a solvent mixture of 6 wt % 1-Methyl-2-pyrrolidone, 50 wt% Butylcellosolve (2-butoxyethanol), 44 wt% γ-Butyrolacton resulting in a formulation with a viscosity of ca. 7 mPas.
- Formulation(23): 1 wt% LPP3, in the same solvent mixture of solution (22) resulting in a reduced viscosity of ca. 2.9

mPas.

With every formulation, glass substrates of glass type D263 (Schott GmbH, Germany) and soda lime glass substrates coated with 25 nm ITO (part no. 317 645 P0, Merck KGaA, Germany) were printed. The distance between printhead and substrate surface during the printing is maximally 1 mm. Prior to utilization the substrates were thoroughly cleaned according to process disclosed in example 13.

For this example the concentration of the non-solvent components (LPP and if included additive) was decreased from 5% (formulation(22)) to 1% (formulation(23)). This way, considerably lower (ca. order of magnitude) dry film thicknesses of approximately 42 nm were achieved.

The examination of the samples with the reflected light clearly shows that the films comprising formulation(22) (viscosity 7mPas) have more pronounced thickness inhomogeneities than the films prepared with formulations (23) having lower viscosity (2.9 mPas). After that the quality of the printed films is characterized by means of differential interference contrast (DIC) microscopy (Olympus BX60 with Olympus U-DICR, Olympus Corporation, Japan) and by profilometry (Alpha-Step 500, Tencor, U.S.). As a quantitative characteristic the average roughness is measured with the profilometer. The average roughness is defined as the integral of the absolute value of the local height along the scanned path divided by the scan length. For the following results a scan length of 5 mm was used. Formulation (23) with lower viscosity leads to an average film roughness of $R_a \approx (2 \pm 0.25)$ nm, while the utilization of the higher viscosity formulation (22) results in a higher surface roughness of $R_a \approx (24 \pm 0.5)$ nm. The difference in homogeneity becomes also quite visible observing the sample with the DIC microscope.

**Example 15: LC-Cells with Alignment Layers with and without Surfactant Additives**

In addition to the printing trials, which confirmed the positive effect of the surfactant additives with respect to the printing quality, further experiments were done to test for adverse effects regarding the alignment capability of the orientation layer or any electro-optic performance characteristics of LC cells comprising the orientation layer.

For this purpose LC test cells were prepared. An orientation layer formulation which induces vertical alignment was used in combination with a vertically aligning LC mixture. The processing steps which were used for the preparation of the test cells described below are as follows:

- substrates: Nemapearl X-008-Glass-1 (Nippo Denki Co. Ltd., Japan) washed according to TFT grade requirements of the LCD industry
- Coating process: Spin-coating with spin-speed of typically 1500 rounds per minute adapted to achieve approximately 65 nm dry film thickness; a spin acceleration of 2000 rounds per minute per second was used in all cases
- Pre-Baking: 5 minutes at 130° centigrade on hot-plate
- Post-Baking: 40 minutes at 200° centigrade on hot-plate
- LPUV exposure: oblique exposure of the alignment layer with linearly polarized UVB light with an intensity of approximately 3 $mW/cm^2$; an exposure dose of 48 $mJ/cm^2$ is used; the alignment layer is exposed at an angle of 40° from the substrate normal
- Cell assembly: two substrates are used to assemble a cell with approximately 4 micron spacing; the orientations of the two substrates are chosen such that the alignment induced to a LC is parallel at both alignment layers
- Annealing of cell: 14 hours at 120° centigrade in vacuum
- Vacuum filling of cell with LC MLC6610 (Merck KGaA, Germany) at room temperature
- Final sealant curing: 1 hour at 130° centigrade

The resulting vertically aligned test cells were characterized with respect to the alignment quality, the pre-tilt angle, the change of pre-tilt angle as a consequence of thermal treatment of the cells, the change of pre-tilt angle caused by AC (alternating current) stress, the voltage holding ratio and the residual DC (direct current) voltage. In the following the characterization methods are shortly described.

The alignment quality is checked macroscopically by switching the cells and simultaneously observing the cell on a light table between crossed polarizers. Additionally, the cells are inspected by means of a polarization microscope with the intention to identify alignment defects on a smaller scale.

Pre-tilt angles were measured by means of a setup based on the crystal rotation method (as described e.g. in T.J. Scheffer and J. Nehring, Journal of Applied Physics, 48, 1783 (1977)).

The characterization of the voltage holding ratio (VHR) is done as follows: Prior to testing the VHR the cells are subjected to aging for 50 hours at 120° centigrade. The voltage decay V (at T=20ms) of a voltage surge of 64 $\mu$s with $V_0$ (V at t=0)=5 V was then measured over a period of T=20ms. The voltage holding ratio then is given by $VHR=V_{rms}(t=T)/V_0$. During the measurement the test-cell is kept at a temperature of 80° centigrade.

For the measurement of the residual DC voltage the so-called flicker free method was applied: after the application of an external signal with non-zero DC component, the residual DC voltage can either be measured directly (with a very high impedance voltmeter) or indirectly by compensation with the so-called flicker free method. This method is based on the fact that the optical response of the test cell exhibits temporal fluctuations, i.e. flicker caused by superposition of the internal residual DC voltage and the external driving waveform (usually a symmetric square wave signal). When an adjustable DC-component is added to the symmetric square wave signal, the fluctuations of light transmitted by the test cell can be eliminated or at least minimized by adequate selection of the external DC component. The external DC-voltage for which the flicker is eliminated or minimized by compensation of the internal residual DC-voltage is taken to be equivalent to the internal residual DC-voltage.

The following alignment layer formulations were in comparison investigated regarding above properties:

Formulation(24):

4 wt% LPP2, 28.8 wt% 1-Methyl-2-pyrrolidone, 67.2 wt% Butylcellosolve (2-Butoxyethanol)

Formulation(25):

3.96 wt% LPP2, 0.04 wt% Tegorad 2500 (Tego Chemie Service, Germany), 28.8 wt% 1-Methyl-2-pyrrolidone, 67.2 wt% Butylcellosolve (2-Butoxyethanol)

Formulation(26):

3.96 wt% LPP2, 0.04 wt% Disperbyk®108 (BYK-Chemie GmbH, Germany), 28.8 wt% 1-Methyl-2-pyrrolidone, 67.2 wt% Butylcellosolve (2-Butoxyethanol)

Formulations(24) represents the reference formulation which does not contain any surfactant additive. Formulation (25) and (26) contain each 1% of a surfactant in reference to the non-solvent components.

First the alignment quality of cells prepared according to the above processing conditions was characterized. No difference was found between the cells prepared with the alignment material formulations(25) and (26) with surfactant and the reference formulation(24). Consequently, the surfactant additive does not have a negative effect on the alignment quality of cells prepared using the respective alignment material formulation.

The initial pre-tilt angles of test cells prepared according to the above processing conditions were measured. The following pre-tilt angles were measured: cell prepared with formulation(24): 87.99°±0.05°; cell prepared with formulation(25): 87.95°±0.05°; cell prepared with formulation(26): 88.05°±0.05°. Thus, the initial pre-tilt angles were found to agree within the measurement error and the usual cell-to-cell reproducibility.

Consequently, the surfactant additives do not have an influence on the achieved pretilt angle.

Depending on the type of alignment layer a temperature treatment can induce a more or less pronounced change in the pre-tilt angle. Test-cells were prepared to examine the behaviour concerning this matter. The cells were thermally treated for 1 hour at 130° centigrade. The following changes in the pre-tilt $\Delta\theta$ were found: cell prepared with formulation(24): $\Delta\theta$=0.37±0.05°; cell prepared with formulation(25): $\Delta\theta$ =0.31±0.05°; cell prepared with formulation(26): $\Delta\theta$ =0.41±0.05°. Within the measurement error and the usual cell-to-cell reproducibility the changes in the pre-tilt angle due to a thermal treatment are on the same level. Thus it turns out that the surfactant additives do not have an influence on the thermal stability of the pre-tilt angle.

Depending on the type of alignment layer an AC stress of the LC test cell can have a more or less pronounced reversible and/or irreversible effect on the pre-tilt angle, i.e. a so-called AC memory effect. To check the influence of the surfactant additives on the AC memory performance further test cells were prepared according to the above processing description. To induce sufficient AC stress, cells prepared with alignment material formulation(24) to (26) were stored at room-temperature and an AC (alternating current) voltage of 7 Volts was applied to the cells for 700 hours. The pre-tilt angle of each cell was measured before and after the application of the AC stress. For all three formulations a reduction of pre-tilt of only 0.03° was found. Thus, the AC memory performance of the alignment material is not influenced by the surfactant additives.

A further important property of TFT LCDs is the VHR. For the measurement of the VHR further test cells were prepared with formulations (24) to (26) according to the above processing steps. The following VHR values were measured: cell prepared with formulation (24): VHR=90%; cell prepared with formulation (25): VHR=90%; cell prepared with formulation(9): VHR=92%. Within the measurement error and the usual reproducibility the VHR values found for the three different LC cells are the same. Thus the surfactant additives do not affect the VHR of the LC test cell prepared with the respective alignment material formulation.

For the measurement of the residual DC voltage a further set of test cells was prepared with formulations (24) to (26). The residual DC characterisation lead to the following results: cell prepared with formulation (24): RDC=100 mV ±10 mV; cell prepared with formulation(25): RDC=90 mV ±10 mV; cell prepared with formulation(26): RDC=300 mV ±30 mV. Thus, the residual DC voltage of the test cells prepared with the reference formulation (24) and the formulation (25) are within the measurement accuracy and the usual reproducibility the same. The residual DC voltage of the cell prepared with alignment layers consisting of formulation (26) is, however, significantly higher. Thus, the Tegorad® 2500 surfactant does not have a negative influence on the residual DC voltage, the Disperbyk®108 surfactant considerably increases the residual DC voltage.

## Claims

1. A method for the manufacturing of uniform and defect free liquid crystal aligning layers which comprises applying onto a substrate a composition having a viscosity in the range of 1 to 14 mPas, which comprises at least one liquid crystal photoalignment material and at least one solvent; or applying onto a substrate a composition comprising at least one liquid crystal photoalignment material and at least one surfactant, wherein the latter does not have any negative impact on the aligning properties.

2. A method according to claim 1, wherein the photoalignment material comprises a photoreactive group.

3. A method according to any of the preceding claims, wherein the photoalignment material comprises a photoreactive group which is a cinnamate-, coumarine-, quinoline-, azo-, stilbene- and/or cyanostilbene-group.

4. A method according to any of the preceding claims, wherein the photoalignment material is a polymer comprising diamine (I) and tetracarboxylic acid anhydride

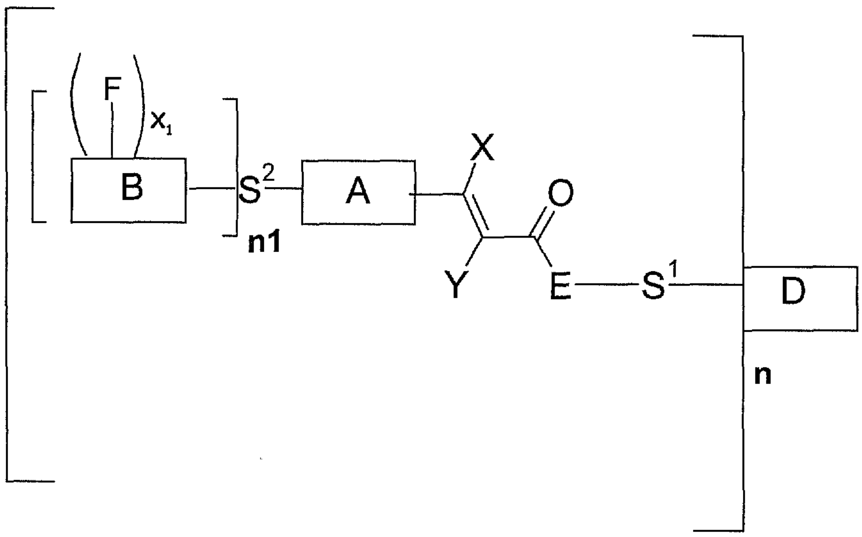

(I)

wherein,

A represents an unsubstituted or substituted carbocyclic or heterocyclic aromatic group selected from a monocyclic ring of five or six atoms, two adjacent monocyclic rings of five or six atoms, a bicyclic ring system of eight, nine or ten atoms, or a tricyclic ring system of thirteen or fourteen atoms;

and
wherein the following compound residue of formula (I), the compound residue (Ia)

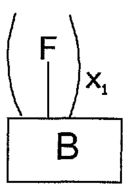
(Ia)

represents a straight-chain or branched $C_1$-$C_{16}$fluoralkyl group, wherein

F is fluorine, and

$X_1$ is an integer from 1 to 15,
B represents a straight-chain or branched $C_1$-$C_{16}$alkyl group, which is in addition to its fluorine substituent(s) unsubstituted or substituted by
di-($C_1$-$C_{16}$alkyl)amino, $C_1$-$C_6$alkyloxy, nitro, cyano and/or chlorine; and wherein one or more -$CH_2$- group may independently from each other be replaced by a linking group;
D represents an unsubstituted or substituted, aliphatic, aromatic and/or alicyclic diamine group having from 1 to 40 carbon atoms;
E represents an aromatic group, an oxygen atom, a sulphur atom, -NH-, -N($C_1$-$C_6$alkyl)-, -$CR^2R^3$,
wherein $R^2$ and $R^3$ are independently from each other hydrogen or a cyclic, straight-chain or branched, substituted or unsubstituted $C_1$-$C_{24}$alkyl, wherein one or more -$CH_2$- group(s) may be independently from each other replaced by a linking group, and with the proviso that at least one of $R^2$ and $R^3$ is not hydrogen;
$S^1$, $S^2$ each independently from each other represents a spacer unit;
X, Y each independently from each other represents hydrogen, fluorine, chlorine, cyano, unsubstituted or with fluorine substituted $C_1$-$C_{12}$alkyl, in which one or more -$CH_2$- groups may be replaced by a linking group;

n, n1 each independently from each other represents 1, 2, 3 or 4, with the proviso that if n is 2, 3, or 4, each A, B, $x_1$, E, $S^1$, $S^2$, X, Y are identical or different; and if n1 is 2, 3 or 4 each B, $x_1$ is identical or different.

**5.** A method according to any of the preceding claims which comprises applying onto a substrate a composition having a viscosity in the range of 1 to 14 mPas, which comprises at least one liquid crystal photoalignment material and at least one solvent, wherein the liquid crystal photoalignment material is a polymer comprising diamine (I) and tetracarboxylic acid anhydride as described in claim 4, wherein the compound residue (Ia)

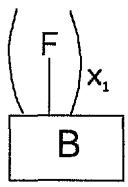
(Ia)

represents a straight-chain or branched $C_3$- or $C_5$fluoralkyl group, wherein
F is fluorine, and
$x_1$ is 3 or 5,
B represents a straight-chain or branched $C_1$-$C_{16}$alkyl group, which is in addition to its fluorine substituent(s) unsubstituted or substituted by
di-($C_1$-$C_{16}$alkyl)amino, $C_1$-$C_6$alkyloxy, nitro, cyano and/or chlorine; and wherein one or more -$CH_2$- group may independently from each other be replaced by a linking group.

**6.** A method according to any of the preceding claims wherein the surfactants are non-polymeric or polymeric; reactive or non-reactive, saturated or unsaturated; non-ionic, amphotheric; anionic or cationic compounds.

**7.** A method according to any of the preceding claims wherein the liquid crystal aligning layers have an average roughness $R_a \leq 25$ ($\pm$1 nm), preferably $R_a \leq 10$ ($\pm$0.5 nm).

**8.** A method according to any of the preceding claims wherein the surfactant does not have any negative impacts on the aligning properties, which are:

Alignment of liquid crystal cells, LCDs:

- a change in the tilt angle between aligning layers prepared with compositions with or without surfactants is > +/-0.5°, (for the technical field of LCDs);

Alignment of optical films:

- a change in the tilt angle in the technical field of optical films of > +/-5°;
- a reduction in the contrast between aligning layers prepared with compositions with or without surfactants

by >20%.

**9.** A method according to any of the preceding claims for the manufacturing of uniform and defect free liquid crystal aligning layers by applying onto a substrate a composition having a viscosity in the range of 1 to 14 mPas, which comprises at least one liquid crystal photoalignment material and at least one solvent, which is selected from the group of solvents as following:

butyrolactone (BL), N-methylpyrrolidone (NMP), dimethylformamide and 2-butoxyethanol (BC) and/or wherein the amount of the liquid crystal photoalignment material in the composition with the solvent is in the range of 99-90% by weight.

**10.** A method according to any of the preceding claims wherein the composition is printed or coated onto a substrate.

**11.** A method to any of the preceding claims for the preparation of liquid crystal aligning layers having a thickness of <200 nm.

**12.** A composition having a viscosity in the range of 1 to 14 mPas, which comprises at least one liquid crystal photoalignment material and at least one solvent; or a composition comprising at least one liquid crystal photoalignment material and at least one surfactant, wherein the latter does not have any negative impact on the aligning properties.

**13.** Liquid crystal aligning layer obtainable by a method according to claims 1 or 11.

**14.** Liquid crystal aligning layer comprising a composition as described in claims 1 and 2.

**15.** Optical and electro-optical unstructured or structured constructional elements, preferably liquid crystal display cells, multi-layer and hybrid layer elements, comprising at least one liquid crystal aligning layer according to claims 13 and 14.

FIG. 1 :

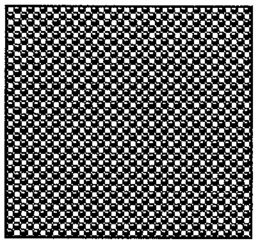

FIG. 2 :

(a)

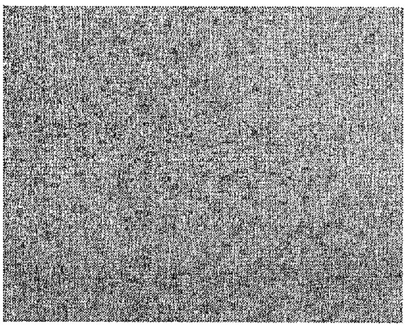

(b)

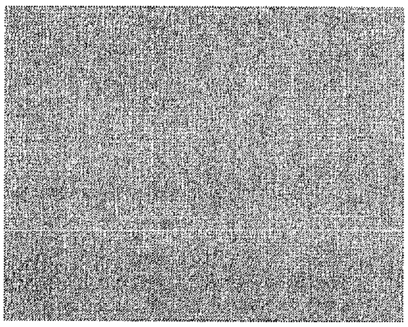

European Patent Office

# EUROPEAN SEARCH REPORT

Application Number
EP 07 10 5243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 218 501 B1 (CHOI HWAN JAE [KR] ET AL) 17 April 2001 (2001-04-17)<br>* column 6, line 66 - column 8, line 45 * | 1-3,6-15 | INV.<br>G02F1/1337 |
| A | EP 1 767 523 A (DAINIPPON INK & CHEMICALS [JP]; UNIV HONG KONG SCIENCE & TECHN [CN]) 28 March 2007 (2007-03-28)<br>* paragraph [0052] - paragraph [0055] *<br>* paragraph [0062] - paragraph [0063] * | 1,12 | |
| A | US 2005/157234 A1 (PARK SU H [KR]) 21 July 2005 (2005-07-21)<br>* paragraph [0058] - paragraph [0060] *<br>* paragraph [0064] *<br>* paragraph [0074] - paragraph [0075] * | 1,12 | |
| A | WO 2004/090025 A (MERCK PATENT GMBH [DE]; HARDING RICHARD [GB]; MARDEN SHIRLEY ANN [GB];) 21 October 2004 (2004-10-21)<br>* page 23, line 28 - page 25, line 28 * | 1,12 | TECHNICAL FIELDS SEARCHED (IPC) |
| A,D | WO 2006/039824 A (ROLIC AG [CH]; CHERKAOUI ZOUBAIR MOHAMMED [CH]; BACHELS THOMAS [DE]; M) 20 April 2006 (2006-04-20)<br>* page 5, line 9 - page 14, line 3 * | 1,4 | G02F |
| T | WO 2007/071091 A (ROLIC AG [CH]; BACHELS THOMAS [DE]; CHERKAOUI ZOUBAIR MOHAMMED [CH]; M) 28 June 2007 (2007-06-28)<br>cited in the description | 4,5 | |

The present search report has been drawn up for all claims

4

| Place of search | Date of completion of the search | Examiner |
|---|---|---|
| The Hague | 3 October 2007 | Diot, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 10 5243

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2007

| Patent document cited in search report | Publication date | Patent family member(s) | Publication date |
|---|---|---|---|
| US 6218501 B1 | 17-04-2001 | JP 3055062 B2 | 19-06-2000 |
| | | JP 2000053766 A | 22-02-2000 |
| | | KR 20000008633 A | 07-02-2000 |
| EP 1767523 A | 28-03-2007 | WO 2006003893 A1 | 12-01-2006 |
| | | KR 20070052736 A | 22-05-2007 |
| US 2005157234 A1 | 21-07-2005 | CN 1637524 A | 13-07-2005 |
| | | KR 20050070609 A | 07-07-2005 |
| WO 2004090025 A | 21-10-2004 | JP 2006526165 T | 16-11-2006 |
| | | KR 20060003340 A | 10-01-2006 |
| | | US 2006193998 A1 | 31-08-2006 |
| WO 2006039824 A | 20-04-2006 | KR 20070063547 A | 19-06-2007 |
| WO 2007071091 A | 28-06-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5389698 A
- WO 9738349 A1
- US RE36625 E
- EP 0763552 B1
- US 5965761 A
- US 6277502 B1
- US 6632909 B2
- WO 0059966 A
- WO 0107495 A
- WO 0153384 A1
- WO 2006039824 A
- WO A1 A
- CH 2006000713 W
- WO 0153384 A
- CH 20061000713 W
- US 6201087 B1
- US 6201087 B
- CH 2006000499 W
- US 6107427 A
- WO 9700600 A


### Non-patent literature cited in the description


- *Proceedings of the IEEE,* July 1973, vol. 61 (7
- *J. Photopolym. Sci. Technol.,* 1998, vol. 11, 187
- *Chem. Mat.,* 1999, vol. 11, 1293
- *Macromol. Chem. Phys.,* 1998, vol. 199, 375
- *J. Appl. Phys.,* 1998, vol. 1 (37), 2620
- *J. Photopolym. Sci. Technol.,* 1999, vol. 12, 279
- *Chemical Reviews,* 2000, vol. 100, 1847
- **D. J. BROER ; R. A. M. HIKMET ; G. CHALLA.** *Makromol.Chem.,* 1989, vol. 190, 3201